# EUROPEAN PATENT SPECIFICATION

(11) **EP 4 196 899 B1**
(45) Date of publication and mention of the grant of the patent: **28.10.2026**
(21) Application number: 21763484.9
(22) Date of filing: 12.08.2021
(51) Int. Cl.: G06F 21/62, G06F 3/06, G06F 11/1446

(54) **TECHNIQUES FOR PERSISTING DATA ACROSS INSTANCES OF A CLOUD SHELL**
VERFAHREN ZUM PERSISTIEREN VON DATEN ÜBER INSTANZEN EINER CLOUD-SHELL HINWEG
TECHNIQUES POUR FAIRE PERSISTER DES DONNÉES SUR L'ENSEMBLE DES INSTANCES CLOUD SHELL

(30) Priority: 14.08.2020 US 202016993973; 14.08.2020 US 202016993970; 23.10.2020 US 202017078835
(43) Date of publication of application: 21.06.2023
(73) Proprietor: Oracle International Corporation, Redwood Shores, CA 94065 (US)
(72) Inventor: KASSO, Christopher S., Redwood Shores, California 94065 (US); GAVARES, Peter Grant, Redwood Shores, California 94065 (US); SCHNEIDER, Linda K., Redwood Shores, California 94065 (US); KANG, Amy H., Redwood Shores, California 94065 (US); SNYDER, Joseph J., Redwood Shores, California 94065 (US); CHEN, Shih-Chang, Redwood Shores, California 94065 (US); SAGAR, Devasena Kiruba, Redwood Shores, California 94065 (US); GILBODE, Michael William, Redwood Shores, California 94065 (US); WELLS, John, Redwood Shores, California 94065 (US)
(74) Representative: Gill Jennings & Every LLP
(86) International application number: PCT/US2021/045797
(87) International publication number: WO 2022/036134

(56) References cited:
- US-A1- 2012 079 221
- US-A1- 2013 124 807
- US-B1- 8 954 574

## Description

### CROSS-REFERENCES TO RELATED APPLICATIONS

This application claims the benefit of and priority to U.S. Non-Provisional Application No. 17/078,835, filed on October 23, 2020, entitled "TECHNIQUES FOR PERSISTING DATA ACROSS INSTANCES OF A CLOUD SHELL", U.S. Non-Provisional Application No. 16/993,973, filed on August 14, 2020, entitled "TECHNIQUES FOR UTILIZING MULTIPLE NETWORK INTERFACES FOR A CLOUD SHELL," and U.S. Non-Provisional Application No. 16/993,970, filed on August 14, 2020, entitled "TECHNIQUES FOR USING SIGNED NONCES TO SECURE CLOUD SHELLS,".

### BACKGROUND

Cloud-based platforms provide scalable and flexible computing resources for users. Such cloud-based platforms, also referred to as infrastructure as a service (IaaS), may offer entire suites of cloud solutions around a customer's data, for example, solutions for authoring transformations, loading data, and presenting the data. IaaS systems may implement security protocols to protect against unauthorized access to user data.
US 8 954 574 B1 is directed to providing resource allocation advice, configuration recommendations, and/or migration advice regarding data storage, access, placement, and/or related web services. A web service may utilize or otherwise control a client instance to control, access, or otherwise manage resources of a distributed system. Based at least in part on one or more resource usage checks and/or configuration checks, resource usage information and/or configuration information of an account utilizing a web service, and/or user preferences and/or settings, resource allocation advice, system configuration recommendations, and/or migration advice may be provided to a user of an account.

### BRIEF SUMMARY

The present invention is defined by the features disclosed in the independent claims. Additional embodiments are defined in the dependent claims.

### Techniques For Persisting Data Across Instances Of A Cloud Shell

Techniques are provided (e.g., a method, a system, non-transitory computer-readable medium storing code or instructions executable by one or more processors) for persisting user data across secure shell instances, using restored block volumes and terminating instances between sessions.

In an embodiment, a method includes receiving, by a computer system, a request to reserve a block volume, the request being received from a session manager service. The method may include reserving, by the computer system, the block volume. The method may include identifying, by the computer system, a data center identifier of the block volume. The method may include returning, by the computer system, the data center identifier of the block volume to the session manager service. The method may include attaching, by the computer system, the block volume. The method may include receiving, by the computer system, an instruction from the session manager service to release the block volume. The method may include creating, by the computer system, a backup of the block volume comprising the data stored in the block volume. The method may also include releasing, by the computer system, the block volume.

In a variation, the request may include a user identifier, and wherein reserving the block volume comprises, determining whether a registered block volume is allocated to a user corresponding to the user identifier, and, in accordance with a registered block volume being allocated to the user, reserving the registered block volume, and in accordance with a registered block volume not being allocated to a user corresponding to the user identifier, reserving an empty volume from a pool of empty volumes, the empty volume being preformatted to dock with a secure cloud shell. The method may further include receiving a request to restore the block volume, the request received from the session manager service, creating a restore volume using the backup of the block volume, the restore volume comprising the data stored in the block volume, and returning a data center identifier of the restore volume to the session manager service. The backup of the block volume may further include an identifier of the backup, and wherein creating the restore volume may include reserving an empty block volume from a pool of empty volumes, the empty block volume being preformatted to dock with a secure cloud shell, retrieving the backup of the block volume using the identifier of the backup, provisioning the empty block volume at least in part by loading the backup of the block volume onto the empty block volume, and identifying the data center identifier of the empty block volume as the data center identifier of the restore volume. Creating the backup of the block volume may include creating a disk image of the block volume. Creating the backup of the block volume may include converting data of the block volume to object data and storing the object data in an object storage system.

In certain embodiments, a computer system includes one or more processors and a memory in communication with the one or more processors, the memory configured to store computer-executable instructions, wherein executing the computer-executable instructions causes the one or more processors to perform one or more of the steps of the method described above.

In certain embodiments, a computer-readable storage medium stores computer-executable instructions that, when executed, cause one or more processors of a computer system to perform one or more steps of the method described above.

### Techniques For Using Signed Nonces To Secure Cloud Shells

Techniques are also provided (e.g., a method, a system, non-transitory computer-readable medium storing code or instructions executable by one or more processors) for securing cloud shells to run one or more terminals, using signed nonces in coordination with one or more additional security operations.

In a first aspect, a method includes receiving, by a session manager service, a request to connect a user device to a secure connection to a secure shell instance, authorizing, by a session manager service, the user device; configuring, by the session manager service, the secure shell instance being described by a shell identifier of the secure shell instance, generating, by the session manager service, a nonce token, signing, by the session manager service, the nonce token to generate a signed nonce token, and providing, by the session manager service, the signed nonce token, the shell identifier, and a router address to the user device.

In an example authorizing the user device includes receiving a login token comprising a user identifier from the user device, requesting an authorization system public key from an authorization service, authenticating the user device based at least in part on decrypting the login token with the authorization system public key, requesting a delegation token from the authorization service at least in part by providing the user identifier, a resource identifier of a resource identified in the request, and an expiration period of the request, and receiving the delegation token from the authorization service, wherein the authorization service is configured to generate the delegation token upon authorizing access to the resource identified in the request within the expiration period.

In an example, signing the nonce token includes signing the nonce token using a system private key of a public/private key pair held by the session manager service and providing a system public key of the public/private key pair to the secure shell router at the router address.

In an example, the method further includes storing the nonce token in a data store, wherein the nonce token comprises a key sequence and ascertaining whether the nonce token is valid, based at least in part on searching the data store on the key sequence and removing the nonce token from the data store after the secure shell router establishes a secure connection between the user device and the secure shell instance.

In an example, the method further includes terminating the secure shell instance following a period of inactivity or a termination of the secure connection by the user device.

In an example, configuring the secure shell instance includes reserving a block volume, receiving a domain identifier corresponding to the block volume, allocating an instance on the block volume using the domain identifier, the instance being allocated from a plurality of available instances, receiving the shell identifier corresponding to the instance, and installing a configuration file on the instance, the configuration file comprising request information included in the request.

In an example, the secure shell instance runs a docker container, such that the request comprises an instruction to execute a terminal on the docker container.

In a second aspect, a computer system includes one or more processors and a memory in communication with the one or more processors, the memory configured to store computer-executable instructions, wherein executing the computer-executable instructions causes the one or more processors to perform steps including one or more steps of the method of the first aspect and subsequent examples.

In a third aspect, a non-transitory computer-readable storage medium, storing computer-executable instructions that, when executed, cause one or more processors of a computer system to perform steps including one or more steps of the method of the first aspect and subsequent examples.

### Techniques For Utilizing Multiple Network Interfaces For A Cloud Shell

Techniques are additionally provided (e.g., a method, a system, non-transitory computer-readable medium storing code or instructions executable by one or more processors) for securing cloud shells against unauthorized access by external devices, using multiple network interfaces in coordination with multiple virtual cloud networks isolating different IaaS sub-systems.

In a first aspect, a method includes receiving a command to execute an operation by a computer system, the command being received from a router via a primary virtual network interface card (vNIC); executing the operation; generating an output of the operation; and transmitting a message comprising the output of the operation to a shell subnet via a secondary virtual network interface card, the secondary virtual network interface card being configured for unidirectional transmission from the computer system to the shell subnet. The shell subnet may be configured to transmit the output of the operation to an external network via a network gateway.

In an example, the operation may be requested by a user of a user device, and generating an output of the operation may include generating a return message for the user device and transmitting the return message to the router via the primary virtual network interface card. The primary virtual network interface card may be configured to accept the return message for the user device and reject the message comprising the output of the operation.

In an example, the computer system may be a virtual machine in a first virtual cloud network, the first virtual cloud network being constituted in a private root compartment.

In an example, the router may be in a second virtual cloud network, the second virtual cloud network being different from the first virtual cloud network and being constituted in the private root compartment.

In an example, the shell subnet may be in a third virtual cloud network, the third virtual cloud network being different from the first virtual cloud network and being constituted in a public root compartment.

In an example, the private root compartment may be associated with a first block of IP addresses attributable to network traffic from the private root compartment. The public root compartment may be associated with a second block of IP addresses, the second block of IP addresses being different from the first block of IP addresses. The second block of IP addresses may be attributable to network traffic from one or more users of the computer system.

In an example, the network gateway may be a network address translation (NAT) gateway, being configured to transmit messages using an IP address of a block of IP addresses attributable to network traffic from one or more users of the computer system.

In a second aspect, a computer system includes one or more processors and a memory in communication with the one or more processors, the memory configured to store computer-executable instructions, wherein executing the computer-executable instructions causes the one or more processors to perform steps including one or more steps of the method of the first aspect and subsequent examples.

In a third aspect, a non-transitory computer-readable storage medium, storing computer-executable instructions that, when executed, cause one or more processors of a computer system to perform steps including one or more steps of the method of the first aspect and subsequent examples.

### BRIEF DESCRIPTION OF THE DRAWINGS

FIG. 1 illustrates an example system for managing secure shell instances, in accordance with one or more embodiments.
FIG. 2 illustrates an example technique for reserving a block volume for a secure shell instance, in accordance with one or more embodiments.
FIG. 3 illustrates an example technique for releasing a block volume including user data from a secure shell instance, in accordance with one or more embodiments.
FIG. 4 illustrates an example technique for restoring a block volume for a restored secure shell instance, in accordance with one or more embodiments.
FIG. 5 illustrates a sequence diagram showing an example data flow by which a block volume including user data is released, in accordance with one or more embodiments.
FIG. 6 illustrates a sequence diagram showing an example data flow by which user data is persisted to a restored secure shell instance, in accordance with one or more embodiments.
FIG. 7 illustrates an example flow for releasing a block volume for a secure shell instance, in accordance with one or more embodiments.
FIG. 8 illustrates an example flow for reserving a block volume for a secure shell instance, in accordance with one or more embodiments.
FIG. 9 illustrates an example flow for restoring a block volume for a secure shell instance, in accordance with one or more embodiments.
FIG. 10 illustrates an example system for managing secure shell instances, in accordance with one or more embodiments.
FIG. 11 illustrates an example system for managing a secure shell session, in accordance with one or more embodiments.
FIG. 12 illustrates an example system for connecting a user device to a secure shell instance, in accordance with one or more embodiments.
FIG. 13 illustrates an example system for configuring a secure shell instance with a single use nonce token, in accordance with one or more embodiments.
FIG. 14 illustrates an example technique for authorizing a user device connecting to a secure shell instance, in accordance with one or more embodiments.
FIG. 15 illustrates a sequence diagram showing an example data flow by which a user device is connected to a secure shell instance, in accordance with one or more embodiments.
FIG. 16 illustrates a sequence diagram showing an example data flow by which a user device is connected to a secure shell instance using an authorization service, in accordance with one or more embodiments.
FIG. 17 illustrates an example flow for managing a secure shell session, in accordance with one or more embodiments.
FIG. 18 illustrates an example flow for configuring a secure shell instance with a single use nonce token, in accordance with one or more embodiments.
FIG. 19 illustrates an example technique utilizing multiple network interfaces for a secure shell instance, in accordance with one or more embodiments.
FIG. 20 illustrates an example system utilizing multiple network interfaces for managing communication of a secure shell instance, in accordance with one or more embodiments.
FIG. 21 illustrates an example technique for unidirectional communication by a secure shell instance using multiple network interfaces, in accordance with one or more embodiments.
FIG. 22 illustrates an example technique using a first network interface for bi-directional communication with a secure shell instance, in accordance with one or more embodiments.
FIG. 23 illustrates an example technique for unidirectional communication with a secure shell instance, in accordance with one or more embodiments.
FIG. 24 illustrates an example regional system for managing communication of a secure shell instance, in accordance with one or more embodiments.
FIG. 25 illustrates an example flow for utilizing multiple network interfaces for a secure shell instance, in accordance with one or more embodiments.
FIG. 26 illustrates an example flow for bi-directional communication with a secure shell instance using a network interface, in accordance with one or more embodiments.
FIG. 27 illustrates an example flow for unidirectional communication from a secure shell instance using a network interface, in accordance with one or more embodiments.
FIG. 28 is a block diagram illustrating one pattern for implementing a cloud infrastructure as a service system, according to at least one embodiment.
FIG. 29 is a block diagram illustrating another pattern for implementing a cloud infrastructure as a service system, according to at least one embodiment.
FIG. 30 is a block diagram illustrating another pattern for implementing a cloud infrastructure as a service system, according to at least one embodiment.
FIG. 31 is a block diagram illustrating another pattern for implementing a cloud infrastructure as a service system, according to at least one embodiment.
FIG. 32 is a block diagram illustrating an example computer system, according to at least one embodiment.

### DETAILED DESCRIPTION

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

### Techniques For Persisting Data Across Instances Of A Cloud Shell

Cloud-based platforms provide scalable and flexible computing resources for users. Such cloud-based platforms, also referred to as infrastructure as a service (IaaS) may offer entire suites of cloud solutions around a customer's data, for example solutions for authoring transformations, loading data, and presenting the data. Users of IaaS resources may request to create a secure terminal in a secure shell instance, so that operations and data transfers may be carried out securely (e.g., with two-way encryption via a WebSocket secure (wss) connection).

In some embodiments, a shell instance can be a specialized compute instance that may run a docker container (e.g., a host) and may allow a user device to run terminals on that docker container. A user device may be assigned a single host, but may also create multiple active terminals on that host. A shell instance may be terminated after a period of inactivity. The instance may run the host, which may in turn run a secure shell (e.g., a terminal). In some embodiments, instances and/or hosts also may be terminated when no terminals have been active on the host for a period of time.

In some embodiments, an instance agent may run on an allocated instance and may handle receiving WebSocket traffic and sending that traffic to a secure shell running on the host. The instance agent may be an HTTP server that may be configured to open secure WebSocket connections and to redirect the input and output to a terminal (e.g., a secure shell running on a docker container) running on the instance. In some embodiments, the agent may identify an updated version of the docker container, may start the docker container, and may create the terminal in the container. In some embodiments, the agent may further specialize the docker container to contain secure shell configuration information and may execute the terminal in the docker container at least in part by passing in specific environmental variables.

In some embodiments, a volume manager service can persist user data from a terminated instance to a subsequently configured instance for the same user. The volume manager service may identify and attach a user block volume to a secure shell instance when it is available, and may generate a backup of the user data for the instance as part of terminate operations at the end of an instance lifetime. Backup operations may include retaining user data for a retention period, a backup in object storage, and/or a backup image (e.g., a volume image). The volume manager system may create backups prior to releasing the user block volumes. The volume manager service may communicate with a session manager service, which may query the instance agent to ascertain an idle time for the secure shell instance. The session manager service may request the volume manager service to release the user block volume after the idle time has exceeded a lifetime of the instance. In some cases, the session manager service may request the volume manager service to release the user block volume after a retention period has elapsed. The retention period may provide reduced latency when a user requests a new secure shell instance by re-attaching the user block volume without restoring user data from block storage to a newly configured block volume.

To restore the user block volume as part of creating a secure shell instance backup user data may be transferred from the object storage, or other backup storage format, as part of a restore process. For example, the volume manager service may reserve an empty block volume (e.g., at least partially pre-configured for attachment to a secure shell instance) and may request backup user data to be transferred by a backup service to provision the empty block volume. The volume manager service may return a unique identifier of the restored user block volume to the session manager service as part of configuring the secure shell instance, thereby persisting user data from a terminated instance to a new restored instance.

In some embodiments, the techniques described herein may be incorporated as computer-executable instructions in a software developer kit (SDK) that may be used by the web-based terminal to create and access these resources. In this way, the SDK could also be used by other providers to implement a secure web-based terminal. Additionally, the techniques described herein may permit a user device to connect to a secure shell running one or more terminals with improved security and latency. For example, by persisting user data automatically, rather than relying on manual instructions to configure a backup, the session manager may potentially improve inefficiency introduced by uneven system load, and overhead introduced by UI backup system requests and by maintaining user block volumes for periods of time between user connections to secure shell instances (e.g., when a user is not accessing the user data). Latency may be reduced in termination processes by automating block volume storage management, rather than relying on user initiated release. In this way, connection requests may encounter briefer wait-times for block volumes to be reserved during periods of high system demand and low storage availability in a given data center or IaaS region.

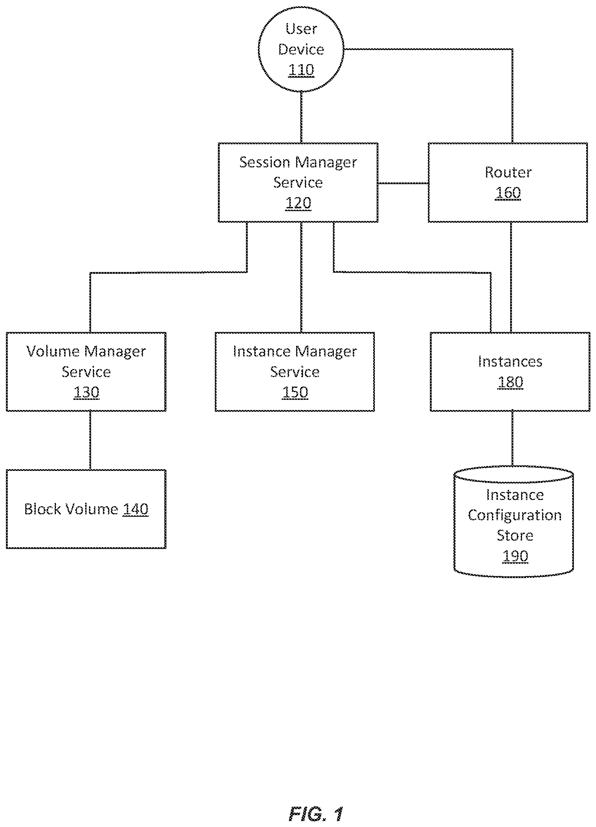

FIG. 1 illustrates an example system 100 for managing secure shell instances, in accordance with one or more embodiments. In some embodiments, the system 100 may permit a user to connect securely to a compute instance (e.g., a virtual machine (VM) or a docker). Secure access may permit a user to connect to a distributed computing system resource (e.g., Infrastructure as a Service (IaaS)) including, but not limited to, distributed storage, compute cores, etc., over an encrypted connection (e.g., https, and/or WebSocket Secure (wss)) for real-time data transfer with a VM of the IaaS system. In some embodiments, a user device 110 may generate a signed request for a secure shell instance, and may send the signed request to a session manager service 120. The session manager service 120 may perform operations as part of validating the user device 110 and configuring a secure shell instance as part of fulfilling the signed request.

In some embodiments, the user device 110 may generate the signed request using a user interface including, but not limited to a graphical user interface console, or a command line interface (CLI). The user interface include an identity authorization service, which may generate a user public/private key pair. In some cases, the user public/private key pair may be a temporary key pair generated, for example, at the initialization of a session, at the time of generating a request for a secure VM connection, etc. The user device 110 may generate the signed request using the private key of the user public/private key pair.

In some embodiments, the session manager service 120 may implement one or more authorization steps as part of managing and preparing a secure shell instance. The authorization may include receiving and validating the signed request, for example, by requesting the public key and using the key to validate the signature of the signed request (e.g., as a step of validating the identity of the user device 110).

In some embodiments, the session manager service 120 may fulfill the signed request at least in part by reserving and configuring a secure shell instance. In some cases, the session manager service 120 may communicate with a volume manager service 130 to reserve a block volume 140. The volume manager service 130 may return a domain identifier of the block volume 140 to the session manager service 120. In some embodiments, the domain identifier may describe one or more data centers within a geographic region (e.g., an availability domain (AD)) of the block volume 140 that has been reserved. As described in more detail in reference to the figures, below, the volume manager service 130 may facilitate one or more techniques for persisting user data across multiple secure shell sessions. For example, the techniques may include generating a user data backup in response to receiving a release request by the volume manager service 130, in some cases, before releasing the user block volume from the secure shell instance and terminating a secure shell session.

In some embodiments, the session manager service 120 may provide the domain identifier of the block volume 140 (e.g., the AD of the reserved block volume) to an instance manager service 150. The instance manager service 150 may allocate a compute instance in the AD provided by the volume manager service. The instance manager service 150 may provide instance identifier information (e.g., a cloud infrastructure ID) for the allocated instance to the session manager service 120. Allocation of a compute instance may be done on a per-user basis and/or on a per-compartment basis (where a compartment is a logical container that controls access to cloud system resources, and may include sub-compartments). For example, the session manager service 120 may allocate separate instances for a user in different compartments. In contrast, the session manager service 120 may allocate a single compute instance for multiple containers, such that separate containers share the same compute instance, one container per compartment (where a container is a packaged software application that may include application code, runtime, system tools, system libraries, and settings).

In some embodiments, the session manager service 120 may provide the instance identifier to the user device 110, along with a router address of a router 160. The router 160 may be configured to connect the user device to a secure shell instance, as described in more detail below (e.g., via a duplexing web socket connection). Furthermore, the router may also be configured to validate the user device 110 and the session manager service 120 as part of securely connecting the user device 110 to the secure shell instance.

In some embodiments, the session manager service 120 may generate a nonce token as a part of the authorization and validation of the user device 110 secure connection to a secure shell instance. In some embodiments, the nonce token may be a web token (e.g., a JavaScript Object Notation "json" web token (jwt token)) containing information including, but not limited to a header, a validity period (e.g., in minutes before expiration), a key, and/or a random string (e.g., an alphanumeric sequence of set length). In some cases, the nonce token is generated and provided to the user device 110 along with the instance identifier and the router address.

As part of configuring the secure shell instance, the session manager service 120 may select and configure an existing instance from a pool of available instances 180, as described in more detail in reference to the figures below. In some cases, the session manager service may install a configuration file and a delegation token in the selected instance. The configuration may include parameter information including, but not limited to, the instance identifier, the domain identifier, request details (e.g., resource allocations, compartment, tenancy), etc. The delegation token may be installed in the user's shell environment on the instance. The token may provide a proof that the user is authenticated and may allow the user to execute commands against their account without the need to re-authenticate. In some embodiments, an IaaS system may deny any CLI commands executed against a user account for which the delegation token is not installed in the user's shell environment.

In some embodiments, the configuration parameters installed by the session manager service 120 may be stored in an instance configuration store 190. The instance configuration store 190 may permit a new secure shell instance to be restored and/or reconfigured with request parameters following termination of the secure shell instance. In some embodiments, the secure shell instance will be terminated when the user has completed using it. In some embodiments, the session manager service 120 may instruct the instance manager service 150 to terminate the secure shell instance based on a period of inactivity (e.g., an idle time) of the agent and/or activity via the router 160. The idle time may be provided as part of the configuration parameters. In some embodiments, a user of the user device 110 may request the secure shell instance to be terminated, which may be implemented by the session manager service 120.

As described above, the example system 100 may provide improved security and stability of IaaS systems, at least by permitting a user device to connect to a secure shell instance from a console and/or command line interface. Persisting user data during instance restore operations, rather than maintaining a user block volume, may reduce the potential effects of breakout from a container by restoring data from a system service that holds the data without read-write access when not in use, rather than maintaining a block volume that could potentially be compromised.

The example system 100 may further improve security and performance of IaaS systems through implementing user data persistence techniques. For example, generating user data backups and generating a restore volume in response to receiving a restore request may reduce system resource usage associated with maintaining a user block volume. Instead, a backup may be stored in a low-overhead storage format (e.g., disk image, etc.) until the data is requested for a restored secure shell session. Similarly, maintaining user block volumes may present some level of risk if the system 100 is breached. Holding user data as a backup in long-term storage, for example, in a system that does not permit read-write operations, may reduce the risk of unauthorized access to user data between secure shell sessions.

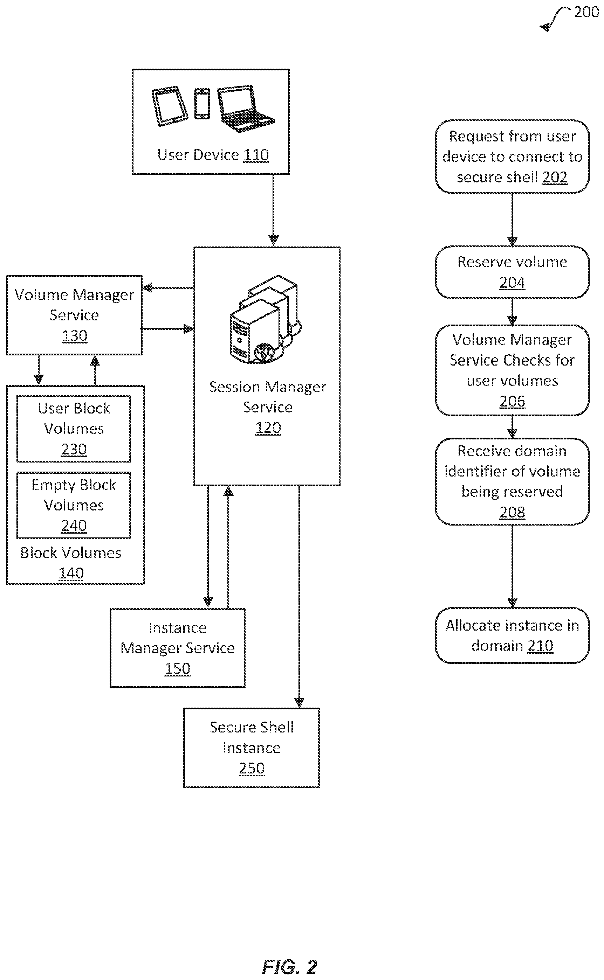

FIG. 2 illustrates an example technique 200 for reserving a block volume for a secure shell instance, in accordance with one or more embodiments. As part of reserving and configuring the shell instance, as described in more detail in reference to FIG 1, above, the session manager service 120 may perform one or more operations in coordination with constituent services of the example system 100 of FIG. 1.

In some embodiments, the session manager service may receive a request from the user device to connect to a secure shell (e.g., operation 202), as described above in reference to authorizing and validating the user request. In response to receiving the user request, the session manager service 120 may reserve a volume in coordination with the volume manager service 130 (e.g., operation 204). Reserving the volume may involve steps including, but not limited to, ascertaining, by the volume manager service 130, whether one or more block volumes are already associated and/or assigned to the user (e.g., user block volumes 230) of the user device 110 and are available to host the secure shell instance 250 (e.g., operation 206). This may include checking a user identifier (e.g., a username or login ID) against a registry of block volumes managed by the volume manager service 130. Where a user block volume 230 is identified, domain identifier information (e.g., a resource ID, a data-center infrastructure locator, etc.) may be returned to the session manager service 120 to indicate the volume has been reserved to host the secure shell instance 250 (e.g., operation 208).

The volume manager service 130 may find that a user block volume 230 is not available to attach to the secure shell instance 250. In some embodiments, the volume manager service 130 may reserve an empty block volume 240, which may include one or more of the block volumes 140 that are available at the given data center and/or IaaS region to which a user may not already be assigned. Similarly, the volume manager service 130 may provide resource identifier information for the session manager service 120 to implement in subsequent operations. For example, the session manager service 120 may allocate an instance in the block volume 140 returned by the volume manager service 130 (e.g., operation 210).

In some embodiments, allocating the instance may include providing the domain identifier to the instance manager service 150. As described in more detail in reference to FIG. 1, the instance manager service 150 may select and reserve an existing instance that is maintained as part of a number of available instances (e.g., instances 180 of FIG. 1) that may be at least partially pre-configured for use as secure shell instances. The instance manager service 150 may return an instance identifier (e.g., instance ID) to the session manager service 120, which may permit the session manager service 120 to identify the selected instance in subsequent operations. In some embodiments, selecting and reserving an existing instance, rather than creating and configuring an instance at the time of implementing the connection request, may potentially reduce system latency in processing the connection request.

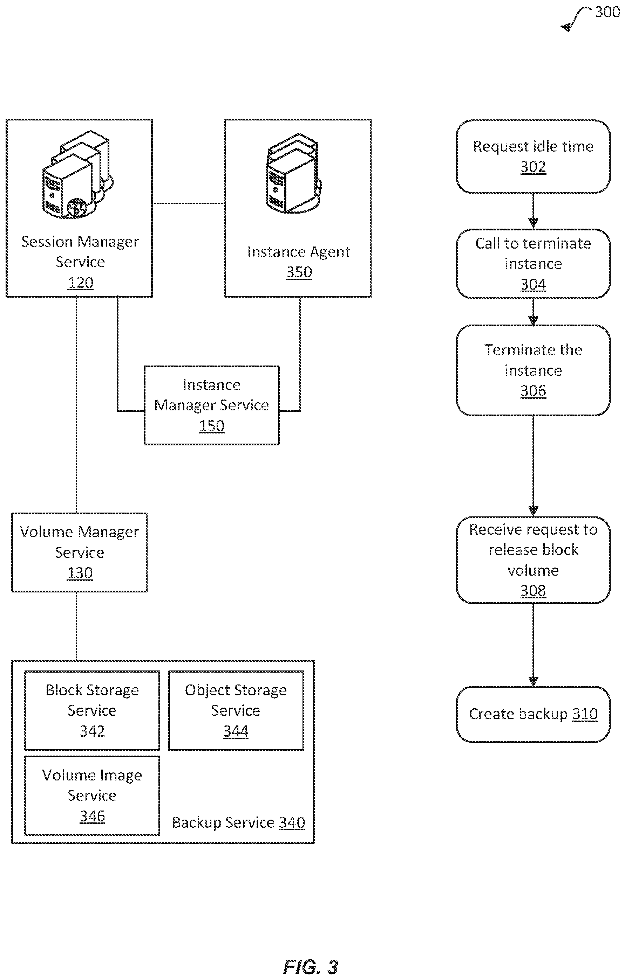

FIG. 3 illustrates an example technique 300 for releasing a block volume including user data from a secure shell instance, in accordance with one or more embodiments. One or more sub-systems of the system 100 of FIG. 1 (e.g., the session manager service 120 the volume manager service 130, and the instance manager service 150) may perform operations associated with terminating and/or restoring a secure shell instance (e.g., secure shell instance 250 of FIG. 2). Ending a secure shell session, for example, when a user of a user device (e.g., user device 110 of FIG. 1) requests to disconnect from the secure shell instance, may include detaching the user block volume from the secure shell instance and one or more additional and/or alternative operations, as described below.

In some embodiments, the session manager service 120 requests an idle time from an instance agent 350 (e.g., operation 302). As described above, the instance agent 350 may be an HTTP server that may be configured to open secure WebSocket connections and to redirect the input and output to a terminal (e.g., a secure shell running on a docker container) running on the instance. In some embodiments, the agent may identify an updated version of the docker container, may start the docker container, and may create the terminal in the container. In some embodiments, the agent may further specialize the docker container to contain secure shell configuration information and may execute the terminal in the docker container at least in part by passing in specific environmental variables.

In some embodiments, the session manager service 120 may be configured to terminate the secure shell instance after a period of time has elapsed since the last connection that exceeds a threshold time and/or after a user request to disconnect or terminate the secure shell instance. In some embodiments, the session manager service 120 may send a request to the instance manager service 150 to terminate the secure shell instance after the idle time returned by the instance agent 350 exceeds a configured lifetime of the secure shell instance (e.g., operation 304). In response, the instance manager service 150 may implement additional operations to terminate the secure shell instance (e.g., in coordination with the instance agent 350).

As part of the termination operations, the volume manager service 130 may receive a request to release the block volume (e.g., operation 308). In some embodiments, the block volume (e.g., block volumes 140 of FIG. 1) may contain user data generated and/or stored during the secure shell session, which may be valuable to a user of the user device (e.g., user device 110 of FIG. 1). In this way, the volume manager service 130 may implement one or more operations to facilitate terminating the secure shell instance including, but not limited to, creating a backup of the block volume (e.g., operation 310).

In some embodiments, the volume manager service 130 may create the backup using a backup service 340. The backup service may include an external IaaS resource including, but not limited to, a block storage service 342, an object storage service 344, a volume image service 346, etc. In some embodiments, the volume manager service 130 may maintain the user block volume during a retention period, rather than creating a backup. The retention period may provide reduced latency when a user requests a new secure shell instance by re-attaching the user block volume without requesting a backup to be created, or by restoring user data from block storage to a newly configured block volume.

In some embodiments, the volume manager service 130 may create the backup using the object storage service 344, such that the backup is formatted for transfer to an object storage system. In contrast to block volume storage, object storage may potentially reduce IaaS system overhead, by permitting data to be stored as chunk objects in a data store, reducing the resources required to maintain a user block volume. In some embodiments, the object storage service 344 may permit the backup to store user data for lower cost in terms of system resources, albeit introducing additional data formatting conversion operations that may introduce latency into secure shell session restore processes.

In some embodiments, the volume manager service 130 may create the backup by creating a volume image (e.g., using volume image service 346). A volume image (e.g., a disk image of the block volume) may include, as a computer file, the contents and structure of the volume. The volume image may be created by generating a copy with a manifest of blocks preserving the structure of the original block volume. In some cases, the volume image may be compressed relative to the block volume, to potentially reduce the size of the image to that of the data stored in the block volume (e.g., omitting excess or unused reserved capacity in the block volume). The volume image may permit user data to be restored from a single file, rather than a restore procedure that includes provisioning multiple blocks and/or chunk objects. As such, it may permit system restore operations with potentially reduced latency as well as reduced resource demands, due at least in part to not maintaining a block volume for user data between secure shell sessions.

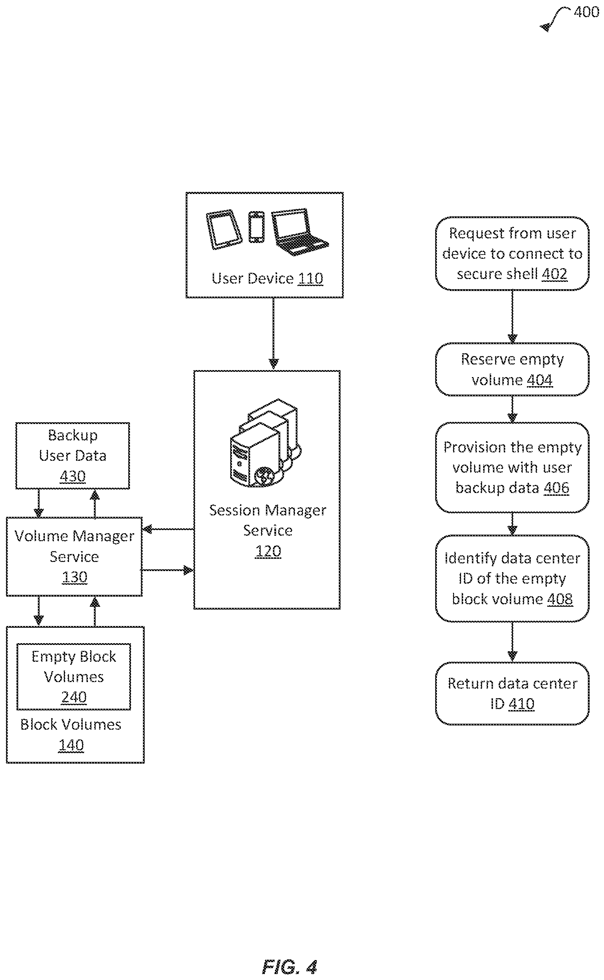

FIG. 4 illustrates an example technique 400 for restoring a block volume for a restored secure shell instance, in accordance with one or more embodiments. One or more sub-systems of the system 100 of FIG. 1 (e.g., the session manager service 120 the volume manager service 130, and the instance manager service 150) may perform operations associated with terminating and/or restoring a secure shell instance (e.g., secure shell instance 250 of FIG. 2). Restoring the secure shell instance may include creating a new secure shell instance with an empty block volume and provisioning the empty block volume with backup data (also referred to as "hydrating" the empty block volume).

In some embodiments, the session manager service 120 may receive a request from the user device 110 to connect to a secure shell instance, as described in more detail in reference to FIG. 1, above (e.g., operation 402). In a restore operation of the technique 400, the user request may include a request to reconnect to a secure shell instance after the session manager service 120 has requested a termination operation (e.g., technique 300 of FIG. 3), rather than an initial configuration and/or connection to a secure shell instance.

In some embodiments, the session manager service 120 may request for the volume manager service to reserve a block volume 140 to attach to the secure shell instance, as described in more detail in reference to FIG. 2, above. Instead of searching for a user block volume, as described previously, the volume manager service 130 may reserve an empty block volume 240 (e.g., operation 404). The empty block volume 240 may be preconfigured for attaching to a secure shell instance, for example, as part of a pool of block volumes.

The volume manager service 130 may provision the empty block volume 240 with backup user data 430 (e.g., operation 406). As described in more detail in reference to FIG. 2, the backup user data 430 may be stored in a number of different data formats including, but not limited to block storage and object storage, for example, as a disk image (e.g., as a single file) or distributed into multiple data subunits (e.g., blocks, objects, etc.). In some embodiments, the volume manager service 130 may request that the reserved empty block volume be provisioned with the backup user data 430 using a backup service (e.g., backup service 340 of FIG. 3). In some embodiments, the backup service may facilitate the transfer of the backup user data 430 (e.g., blocks) over a distributed storage system (e.g., a cloud storage system). In some embodiments, provisioning the empty block volume 240 may include reformatting the backup user data 430 into block data from object data (e.g., in cases where the backup is stored as object data), as described in more detail in reference to FIG. 3, above.

In some embodiments, the volume manager service 130 may identify a data center (e.g., AD) identifier of the empty block volume for which the backup user data 430 is provisioned (e.g., operation 408). Identifying the data center identifier may include ascertaining a hardware address of the empty block volume 240 in IaaS infrastructure (e.g., a data center) that may identify systems where the backup user data 430 is stored. Once identified, the volume manager service 130 may return the data center identifier to the session manager service 120 (e.g., operation 410). The session manager service 120 may use the data center identifier to provide to the instance manager service (e.g., instance manager service 150 of FIG. 1), as part of configuring and creating a secure shell instance, as described in more detail in reference to FIGS. 1-2, above.

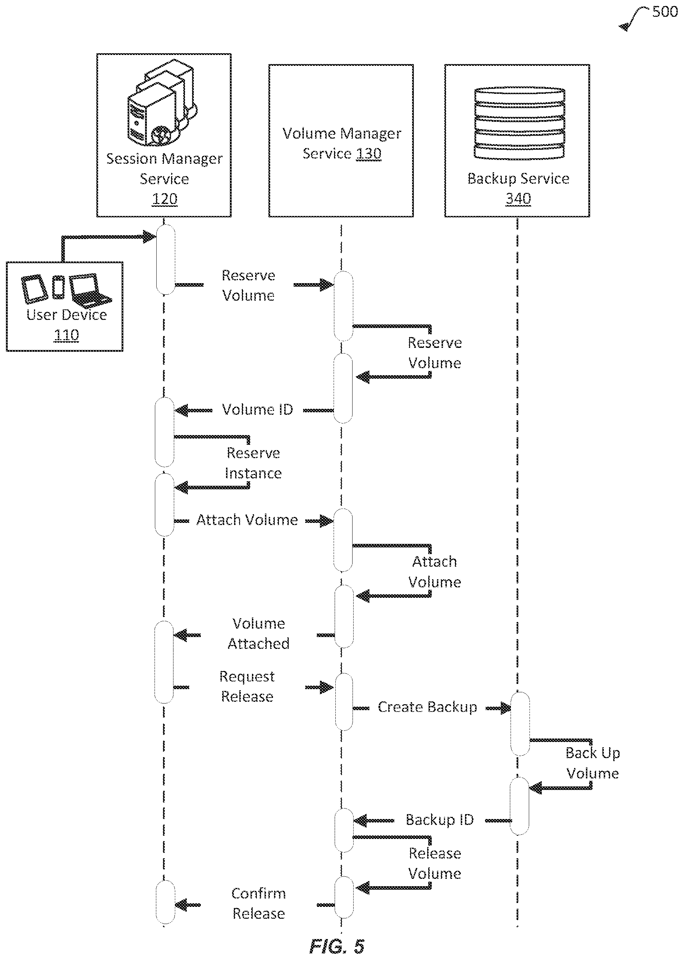

FIG. 5 illustrates a sequence diagram showing an example data flow 500 by which a block volume including user data is released, in accordance with one or more embodiments. A user of the user device 110 requests to connect to a secure shell instance and the session manager service 120 requests the volume manager service to reserve a volume. After the session manager service 120 determines to terminate the secure shell instance, it requests the volume manager service 130 to release the block volume.

In data flow 500, the user device 110 (which may be an example of user device 110 of FIG. 1) may submit a request to connect to a secure shell instance. as described in more detail in reference to FIGS. 1-2, which may be received by the session manager service 120. Upon receiving the request, the session manager service 120 may configure a shell instance, as described in more detail in reference to the figures above. Configuring a shell instance may include multiple operations including, but not limited to reserving a volume, allocating an instance from a number of available instances that are created for the purpose of configuring a secure shell instance, and installing a configuration file on the allocated instance.

Reserving the volume may include one or more operations including requesting for the volume manager service 130 to reserve a block volume, as described in more detail in reference to FIG. 2 and FIG. 4. For example, reserving a block volume may include searching existing block volumes for a user block volume (e.g., user block volumes 230 of FIG. 2) containing user data, and returning the data center identifier of the user block volume to the session manager service 120. In some cases, as when a user block volume is not found by the volume manager service 130, the volume manager service may identify and return a data center identifier (e.g., AD identifier) of a reserved block volume (e.g., an empty block volume 240 of FIG. 2).

Configuring the shell instance may include receiving, by the session manager service 120, a shell instance identifier from an instance manager service (e.g., an IaaS resource identifier). As described in more detail in reference to FIGS. 1-2, the instance may be reserved from a pool of instances at least partially pre-configured, to which the reserved volume may be attached. Attaching the reserved volume may include one or more operations, for example, requesting for the volume manager service 130 to attach the volume. In response to a request by the session manager service 120, the volume manager service 130 may attach the volume, and return a confirmation to the session manager service 120.

When the session manager service 120 determines that the secure shell instance is idle and/or the user of the user device 110 requests to terminate the secure shell instance, the session manager service 120 may request the volume manager service 130 to release the block volume, as described in more detail in reference to FIG. 3. As part of releasing the block volume, the volume manager service may create a backup of the user data contained in the block volume. The volume manager service may receive, as part of the backup operation, a backup identifier from a backup service 340. In some embodiments, the backup operation may be performed by the backup service, as described in more detail in reference to FIG. 3.

Releasing the block volume may include removing the user data from the block volume (e.g., reformatting) to return the storage capacity to availability for future configuration of block volumes. As part of releasing the block volume, the volume manager service 130 may confirm that the block volume has been released to the session manager service 120.

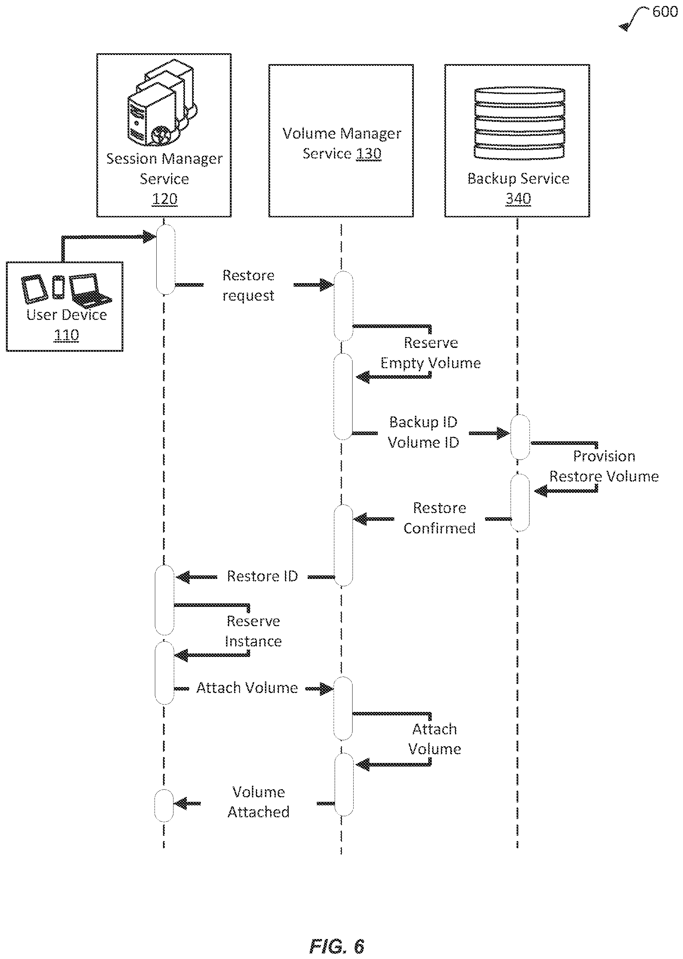

FIG. 6 illustrates a sequence diagram showing an example data flow 600 by which user data is persisted to a restored secure shell instance, in accordance with one or more embodiments. A user of the user device 110 requests to connect and/or reconnect to a secure shell instance and the session manager service 120 may request the volume manager service 130 to restore the user volume. The volume manager service 130 may coordinate with the backup service 340 to provision the restore volume.

In data flow 600, the session manager service 120 may receive a connection request from the user device 110. When the user device 110 previously has been connected to a secure shell instance, and the data from that instance has been stored in a backup, as described in more detail in reference to FIG. 3, the session manager service 120 may send a restore request to the volume manager service 130. The restore request may include identifying information describing the user of the user device 110 and/or the backup user data (e.g., user identifier, username, last session identifier, backup identifier, etc.).

The volume manager service 130 may reserve an empty block volume (e.g., empty block volume 240 of FIG. 2) instead of searching for an existing user block volume (e.g., user block volume 230 of FIG. 2). As opposed to the operations described in reference to FIG. 2, the volume manager service 130 may provide a backup identifier to the backup service 340, as part of a provisioning process to restore user backup data (e.g., user backup data 430 of FIG. 4).

Provisioning the restore volume may include transferring backup data from the backup storage system to the empty block volume by the backup service 340. This may include restoring the structure of the data to reproduce the user block volume. The volume manager service 130 may provide the data center identifier of the empty block volume to the backup service 340, which may provision the empty volume with the backup data. In some embodiments, the volume manager service 130 may perform the provisioning operations by providing the backup data identifier to the backup service 340, receiving the corresponding user backup data, and restoring the data to the reserved block volume.

Once provisioned, the volume manager service 130 may provide the restore volume identifier to the session manager service 120, which may correspond to the data center identifier of the empty block volume. Using this identifier, the session manager service 120 may perform the operations as described in more detail in reference to FIG. 2, including, but not limited to reserving an instance from a pool of pre-configured instances and requesting the volume manager service 130 to attach the restore volume to the reserved instance. The volume manager service 130 may, in some cases, confirm attachment of the restore volume by returning a confirmation to the session manager service 120.

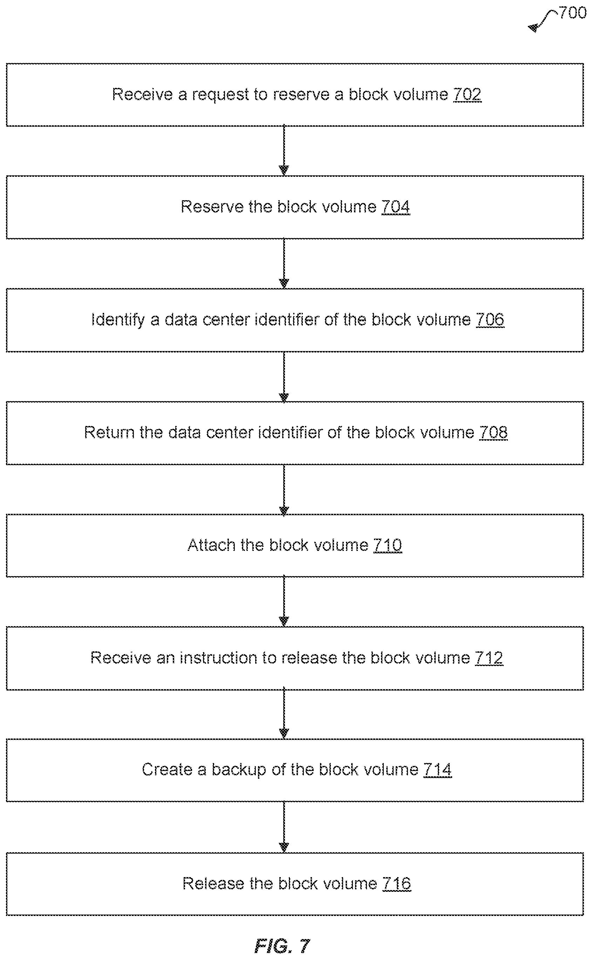

FIG. 7 illustrates an example flow for releasing a block volume for a secure shell instance, in accordance with one or more embodiments. The operations of the flow can be implemented as hardware circuitry and/or stored as computer-readable instructions on a non-transitory computer-readable medium of a computer system, such as the volume manager service 130 of FIG. 1. As implemented, the instructions represent modules that include circuitry or code executable by a processor(s) of the computer system. The execution of such instructions configures the computer system to perform the specific operations described herein. Each circuitry or code in combination with the processor performs the respective operation(s). While the operations are illustrated in a particular order, it should be understood that no particular order is necessary and that one or more operations may be omitted, skipped, and/or reordered.

In an example, the flow 700 includes an operation 702, where the computer system receives a request to reserve a block volume. As described in more detail in reference to FIG. 2, the request may be generated by a session manager service (e.g., session manager service 120 of FIG. 1) in response to a request from a user device (e.g., user device 110 of FIG. 1) to connect to a secure shell instance (e.g., secure shell instance 250 of FIG. 2). The request may include a user identifier associated with the user device 110 (e.g., a username, login ID, session ID, network address, etc.).

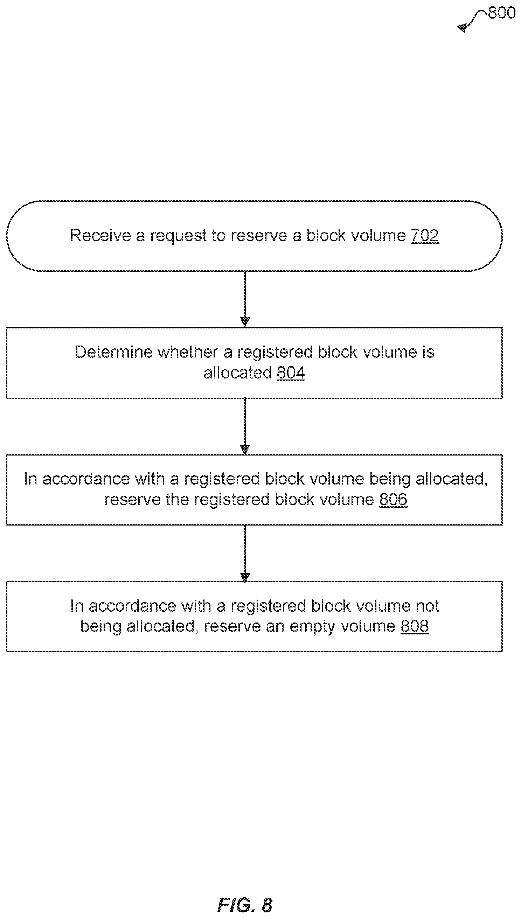

In an example, the flow 700 includes an operation 704, where the computer system reserves the block volume. Reserving the block volume may include ascertaining, by the volume manager service, whether a user block volume (e.g., user block volume 230 of FIG. 2) is being maintained by a block volume storage system of the IaaS system to which the volume manager service is connected, as described in more detail in reference to FIG. 8, below. Otherwise, the volume manager service may reserve an empty block volume (e.g., empty block volume 240 of FIG. 2).

In an example, the flow 700 includes an operation 706, where the computer system identifies a data center identifier of the block volume. The data center identifier may describe the IaaS storage resource (e.g., networked storage infrastructure) that maintains the block volume (e.g., block volumes 140 of FIG. 1), and may be unique to a single data center of the IaaS system (e.g., an installation in a particular geographic region).

In an example, the flow 700 includes an operation 708, where the computer system returns the data center identifier of the block volume. The volume manager system may provide the data center identifier of the reserved block volume identified as part of operation 708 to the session manager service. The session manager service may, in turn, provide the data center identifier of the reserved block volume to an instance manager service (e.g., instance manager service 150 of FIG. 1) as part of configuring the secure shell instance, as described in more detail in reference to FIGS. 1-2.

In an example, the flow 700 includes an operation 710, where the computer system attaches the block volume. The volume manager service may attach the reserved block volume to an instance allocated from a pool of partially pre-configured instances (e.g., instances 180 of FIG. 1), selected by the instance manager service for use in creating the secure shell instance.

In an example, the flow 700 includes an operation 712, where the computer system receives an instruction to release the block volume. The volume manager service may receive the request from the session manager service, as described in more detail in reference to FIG. 3, after the session manager service has ascertained an idle time for the secure shell instance that exceeds a lifetime of the secure shell instance. In some embodiments, the user of the user device may also request to terminate the secure shell instance. The session manager service may request the volume manager service to release the reserved block volume as one of multiple operations associated with terminating the secure shell instance, for example, disconnecting the secure shell instance (e.g., as a docker container) from a docker, deleting the instance, and de-associating compute resources from the block volume, to potentially protect core IaaS resources and user data.

In some embodiments, a retention time may follow secure shell termination during which user block volume data may be maintained and/or retained. Retention of user block volume data may reduce latency associated with initializing a new secure shell instance, for example, by attaching user block volume data to the new secure shell instance without restoring user data from a backup, such as object storage. In some embodiments, the retention time may include a number of hours or a number of days, for example, 12 hours, 24 hours, 36 hours, 48 hours, 72 hours, etc. In some embodiments, the retention time may be calculated from the end of the idle time, such that a secure shell instance timeout may trigger the termination of the instance, but a user block volume may be retained after idle timeout until the retention period (e.g., 72 hours) has elapsed.

In an example, the flow 700 includes an operation 714, where the computer system creates a backup of the block volume. The volume manager service may request a backup to be made as part of releasing the block volume. The backup, as described in more detail in reference to FIG. 3, may be created in different formats including, but not limited to, block storage, object storage, and/or as a volume image. The backup data (e.g., user backup data 430 of FIG. 4) may be created by a backup service (e.g., backup service 340 of FIG. 3), which may be a IaaS core service with which the volume manager service communicates.

In an example, the flow 700 includes an operation 716, where the computer system releases the block volume. The volume manager service may release the block volume at least in part by reformatting the volume (e.g., clearing the data stored in the block volume) and de-associating the storage resources previously identified with the block volume to be available for other uses. In contrast to maintaining a user block volume, as during the retention time after terminating a secure shell instance, releasing the block volume may permit the IaaS systems described herein to operate with reduced computational overhead, by potentially reducing the resources dedicated to maintaining user block volumes during periods of time in which a user is not connected to a secure shell instance.

FIG. 8 illustrates an example flow for reserving a block volume for a secure shell instance, in accordance with one or more embodiments. The operations of the flow can be implemented as hardware circuitry and/or stored as computer-readable instructions on a non-transitory computer-readable medium of a computer system, such as the volume manager service 130 of FIG. 1. As implemented, the instructions represent modules that include circuitry or code executable by a processor(s) of the computer system. The execution of such instructions configures the computer system to perform the specific operations described herein. Each circuitry or code in combination with the processor performs the respective operation(s). While the operations are illustrated in a particular order, it should be understood that no particular order is necessary and that one or more operations may be omitted, skipped, and/or reordered.

In an example, the flow 800 includes one or more operations that may be performed by the volume manager service in response to receiving a request to reserve a block volume (e.g., operation 702 of FIG. 7). As such, the flow 800 includes the operation 702, whereby the volume manager service receives the request to reserve the block volume from a session manager service (e.g., session manager service 120 of FIG. 1).

In an example, the flow 800 includes an operation 804, where the computer system determines whether a registered block volume is allocated. The registered block volume may be a block volume associated with the user of the user device (e.g., user device 110 of FIG. 1). As such, the operation 804 may include ascertaining, by the volume manager service, whether a user block volume (e.g., user block volume 230 of FIG. 2) is being maintained by a block volume storage system of the IaaS system to which the volume manager service is connected.

In an example, the flow 800 includes an operation 806, where the computer system, in accordance with a registered block volume being allocated, reserves the registered block volume. In cases where the operation 804 returns a data center identifier of a user block volume, the volume manager service may reserve the user block volume for attachment to the secure shell instance.

In an example, the flow 800 includes an operation 808, where the computer system, in accordance with a registered block volume not being allocated, reserves an empty volume. In contrast to operation 806, when a user block volume is unavailable, the volume manager service may reserve an empty block volume (e.g., empty block volume 240 of FIG. 2). The empty block volume may be at least partially pre-configured with one or more settings and/or configuration parameters for attachment to a secure compute instance.

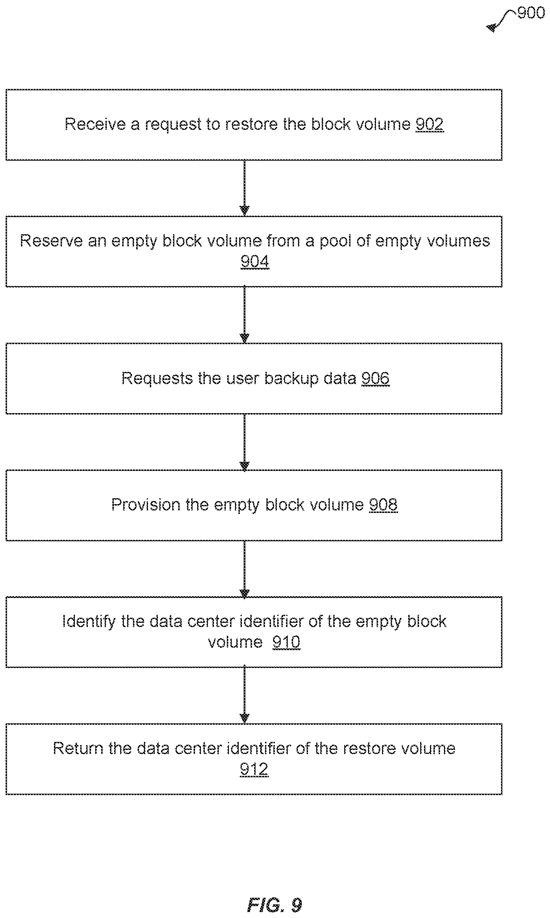

FIG. 9 illustrates an example flow 900 for restoring a block volume for a secure shell instance, in accordance with one or more embodiments. The operations of the flow can be implemented as hardware circuitry and/or stored as computer-readable instructions on a non-transitory computer-readable medium of a computer system, such as the volume manager service 130 of FIG. 1. As implemented, the instructions represent modules that include circuitry or code executable by a processor(s) of the computer system. The execution of such instructions configures the computer system to perform the specific operations described herein. Each circuitry or code in combination with the processor performs the respective operation(s). While the operations are illustrated in a particular order, it should be understood that no particular order is necessary and that one or more operations may be omitted, skipped, and/or reordered.

In an example, the flow 900 includes an operation 902, where the computer system receives a request to restore the block volume. As described in more detail in reference to FIG. 4, the volume manager service may receive the request to restore the block volume from a session manager service (e.g., session manager service 120 of FIG. 1), after the user of a user device (e.g., user device 110 of FIG. 1) requests to reconnect to a secure shell instance (e.g., secure shell instance 250 of FIG. 2). In some embodiments, the request may include a user identifier, by which the volume manager service may implement one or more backup restoration operations, described below.

In an example, the flow 900 includes an operation 904, where the computer system reserves an empty block volume from a pool of empty volumes. In contrast to the operations described in reference to flow 800 of FIG. 8, the volume manager service may implement the restore request of the operation 902 at least in part by reserving an empty block volume (e.g., empty block volume 240 of FIG. 2), without ascertaining whether a user block volume is being maintained by an IaaS data storage system. For example, when a backup has been created, as described in more detail in reference to FIG. 7, the volume manager service may reserve an empty block volume without performing the operations described in reference to FIG. 8.

Alternatively, the volume manager system may implement the operations described in reference to FIG. 8, by ascertaining whether a user block volume is being maintained by the IaaS data storage system. In this way, the volume manager service may return the user block volume data center identifier rather than reserving an empty block volume.

In an example, the flow 900 includes an operation 906, where the computer system requests the user backup data. The volume manager service may request the user data backup (e.g., user data backup 430 of FIG. 4) to be transferred to the reserved empty block volume of the operation 904. The request may be made of a backup service (e.g., backup service 340 of FIG. 3), which may be a core IaaS service that facilitates data backup and restore operations.

In an example, the flow 900 includes an operation 908, where the computer system provisions the empty block volume. As described in more detail in reference to FIG. 4, provisioning the empty block volume may include operations to recreate the structure of the user block volume (e.g., user block volume 230 of FIG. 2) preceding the backup operation (e.g., operation 714 of FIG. 7).

In an example, the flow 900 includes an operation 910, where the computer system, identifies the data center identifier of the empty block volume. The volume manager service may identify the data center identifier of the empty block volume as the data center identifier of the restore volume, such that the restore volume may be attached to the secure shell instance. The data center identifier may be a unique identifier corresponding to the data center (e.g., IaaS infrastructure) where the empty block volume is maintained.

In an example, the flow 900 includes an operation 912, where the computer system, returns the data center identifier of the restore volume. The data center identifier may be returned by the volume manager service to the session manager service, for configuration of the secure shell instance as described in more detail in reference to FIGS. 1-2, above.

### Techniques For Using Signed Nonces To Secure Cloud Shells

Cloud-based platforms provide scalable and flexible computing resources for users. Such cloud-based platforms, also referred to as infrastructure as a service (IaaS) may offer entire suites of cloud solutions around a customer's data, for example solutions for authoring transformations, loading data, and presenting the data. Users of IaaS resources may request to create a secure terminal in a secure shell instance, so that operations and data transfers may be carried out securely (e.g., with two-way encryption via a WebSocket secure, or wss, connection).

In some embodiments, a shell instance can be a specialized compute instance that may run a docker container (e.g., a host) and may allow a user device to run terminals on that docker container. A user device may be assigned a single host, but may also create multiple active terminals on that host. A shell instance may be terminated after a period of inactivity. The instance may run the host, which may in turn run a secure shell (e.g., a terminal). In some embodiments, instances and/or hosts also may be terminated when no terminals have been active on the host for a period of time.

In some embodiments, an instance agent may run on an allocated instance and may handle receiving WebSocket traffic and sending that traffic to a secure shell running on the host. The instance agent may be an HTTP server that may be configured to open secure WebSocket connections and to redirect the input and output to a terminal (e.g., a secure shell running on a docker container) running on the instance. In some embodiments, the agent may identify an updated version of the docker container, may start the docker container, and may create the terminal in the container. In some embodiments, the agent may further specialize the docker container to contain secure shell configuration information and may execute the terminal in the docker container at least in part by passing in specific environmental variables.

In some embodiments, a session manager service can provide command line access to a user's resources from a browser. The session manager service may provide a number of available compute instances that can be allocated and/or specialized to support a specific user account. Providing the available compute instances (e.g., by creating one or more compute instances configured with default parameters prior to receiving a secure shell request) may permit the session manager service to improve latency of system response (e.g., by creating and specializing the instance within 5 seconds, 10 seconds, 30 seconds, 60 second, etc.). The session manager service may also provide a web-based terminal that may allow a user to use IaaS infrastructure resources (e.g., through proprietary and/or other unix commands) on a specialized instance through a secure connection that is validated at multiple operations before the connection is finalized.

In some embodiments, the techniques described herein may be incorporated as computer-executable instructions in a software developer kit (SDK) that may be used by the web-based terminal to create and access these resources. In this way, the SDK could also be used by other providers to implement a secure web-based terminal. Additionally, the techniques described herein may permit a user device to connect to a secure shell running one or more terminals with improved security and latency. For example, by selecting and configuring a secure shell instance from a plurality of available instances, rather than creating a new instance at the time of a request to connect securely to a secure shell, the session manager may potentially improve system latency introduced by the pre-configuration of instances.

Furthermore, implementing one or more techniques for securing the one or more terminals may improve the operation and performance of the systems described herein. For example, providing a nonce token that may be signed by both the session manager service and the user device, with an operation of checking the signatures (e.g., implemented by a router facilitating the connection of the user device to the secure shell instance), may provide improved security and may prevent unauthorized access to the data and or IaaS resources via a terminal running on the secure shell instance. Furthermore, implementing a single-use protocol whereby a validity of the nonce token may be determined in connection to a database of unused nonce tokens may prevent reuse of nonce tokens. Additionally, multi-step security protocols may also provide additional user authentication and resource authorization protections that may permit the session manager service to prevent reuse of login tokens (e.g., tokens generated by an identity authorization service after authenticating a user device) by unauthorized and/or inauthentic user devices. Additionally, configuring the secure shell in a docker container system may improve security by isolating data related to the secure shell and thereby potentially reducing exposure of external data to breach.

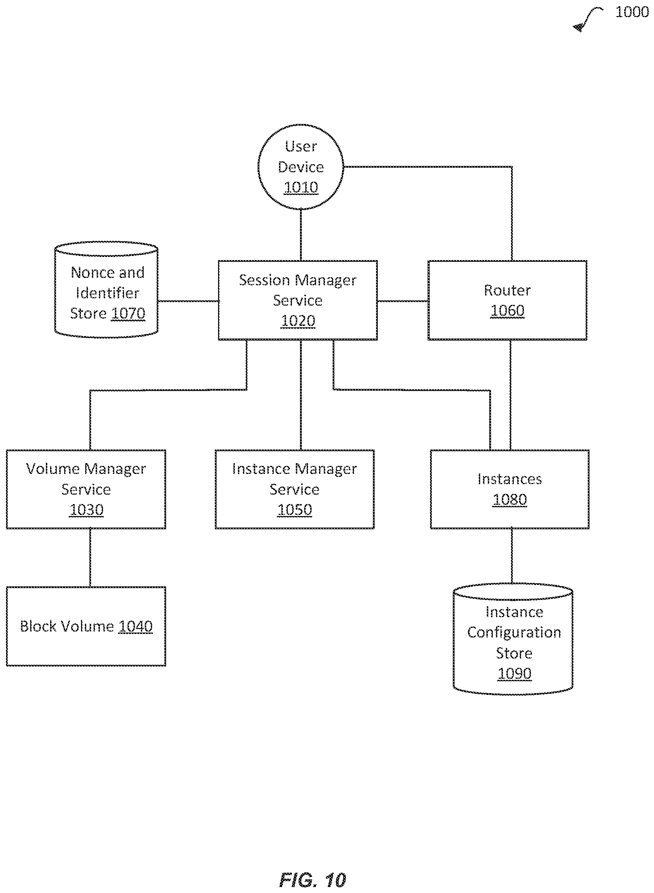

FIG. 10 illustrates an example system 1000 for managing secure shell instances, in accordance with one or more embodiments. In some embodiments, the system 1000 may permit a user to connect securely to a compute instance (e.g., a virtual machine, or "VM" or a docker container). Secure access may permit a user to connect to a distributed computing system resource (e.g., Infrastructure as a Service, or "IaaS") including, but not limited to, distributed storage, compute cores, etc., over an encrypted connection (e.g., https, and/or WebSocket Secure "WSS") for real-time data transfer with a VM of the IaaS system. In some embodiments, a user device 1010 may generate a signed request for a secure shell instance, and may send the signed request to a session manager service 1020. The session manager service 1020 may perform operations as part of validating the user device 1010 and configuring a secure shell instance as part of fulfilling the signed request.

In some embodiments, the user device 1010 may generate the signed request using a user interface including, but not limited to a graphical user interface console, or a command line interface (CLI). The user interface include an identity authorization service, which may generate a user public/private key pair. In some cases, the user public/private key pair may be a temporary key pair generated, for example, at the initialization of a session, at the time of generating a request for a secure VM connection, etc. The user device 1010 may generate the signed request using the private key of the user public/private key pair.

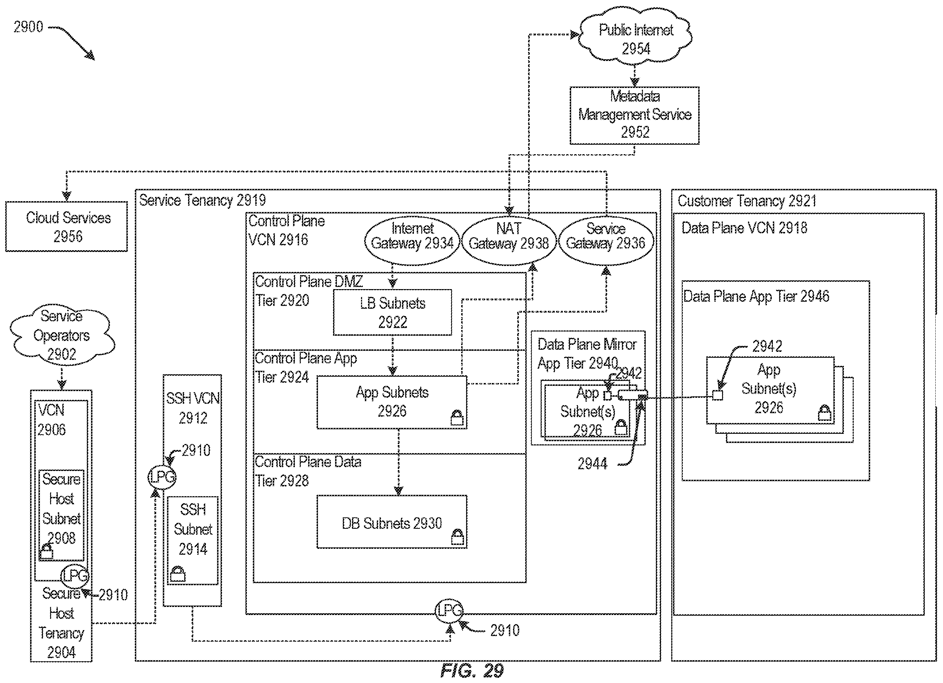

In some embodiments, the session manager service 1020 may implement one or more authorization steps as part of managing and preparing a secure shell instance. The authorization may include receiving and validating the signed request, for example, by requesting the public key (e.g., from an authorization service) and using the key to validate the signature of the signed request (e.g., as a step of validating the identity of the user device 1010). Additionally or alternatively, the public key may be included in a login token provided by the authorization service, as described in more detail in reference to FIG. 29, below.

In some embodiments, the session manager service 1020 may fulfill the signed request at least in part by reserving and configuring a secure shell instance. In some cases, the session manager service 1020 may communicate with a volume manager service 1030 to reserve a block volume 1040. The volume manager service 1030 may return a domain identifier of the block volume 1040 to the session manager service 1020. In some embodiments, the domain identifier may describe one or more data centers within a geographic region (e.g., an availability domain, or "AD") of the block volume 1040 that has been reserved.

In some embodiments, the session manager service 1020 may provide the domain identifier of the block volume 1040 (e.g., the AD of the reserved block volume) to an instance manager service 1050. The instance manager service 1050 may allocate a compute instance in the AD provided by the volume manager service. The instance manager service 1050 may provide instance identifier information (e.g., a cloud infrastructure ID) for the allocated instance to the session manager service 1020. Allocation of a compute instance may be done on a per-user basis and/or on a per-compartment basis (where a compartment is a logical container that controls access to cloud system resources, and may include sub-compartments). For example, the session manager service 1020 may allocate separate instances for a user in different compartments. In contrast, the session manager service 1020 may allocate a single compute instance for multiple containers, such that separate containers share the same compute instance, one container per compartment (where a container is a packaged software application that may include application code, runtime, system tools, system libraries, and settings).

In some embodiments, the session manager service 1020 may provide the instance identifier to the user device 1010, along with a router address of a router 1060. The router 1060 may be configured to connect the user device to a secure shell instance, as described in more detail below (e.g., via a duplexing web socket connection). Furthermore, the router may also be configured to validate the user device 1010 and the session manager service 1020 as part of securely connecting the user device 1010 to the secure shell instance, as described below.

In some embodiments, the session manager service 1020 may generate a nonce token as a part of the authorization and validation of the user device 1010 secure connection to a secure shell instance. In some embodiments, the nonce token may be a web token (e.g., a JavaScript Object Notation "json" web token, or "jwt" token) containing information including, but not limited to a header, a validity period (e.g., in minutes before expiration), a key, and/or a random or pseudo-random string (e.g., an alphanumeric sequence of set length, a random or pseudo-random number, or the like). In some cases, the nonce token is generated and provided to the user device 1010 along with the instance identifier and the router address.

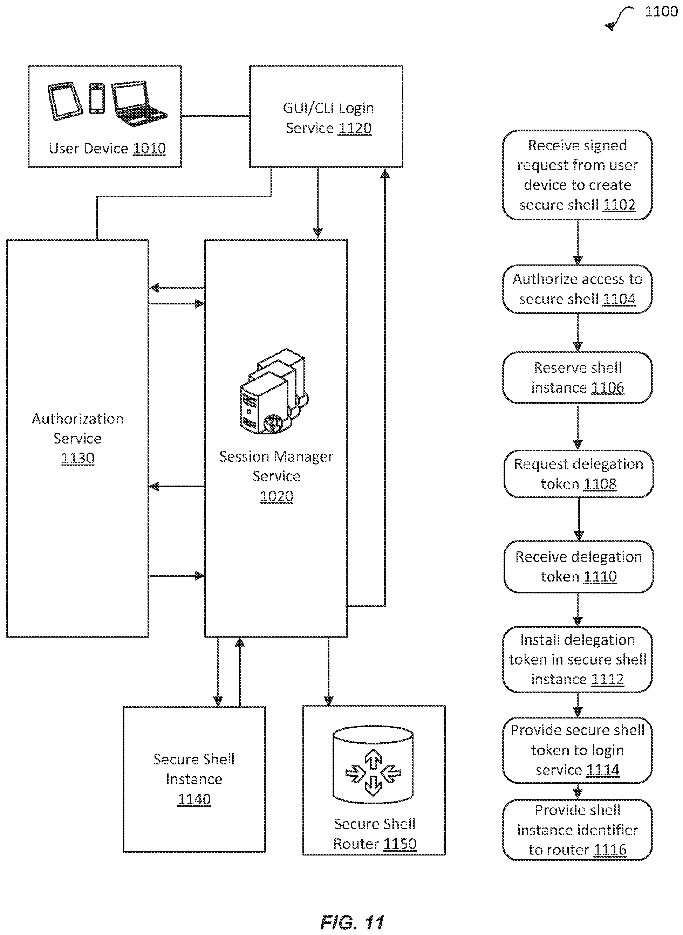

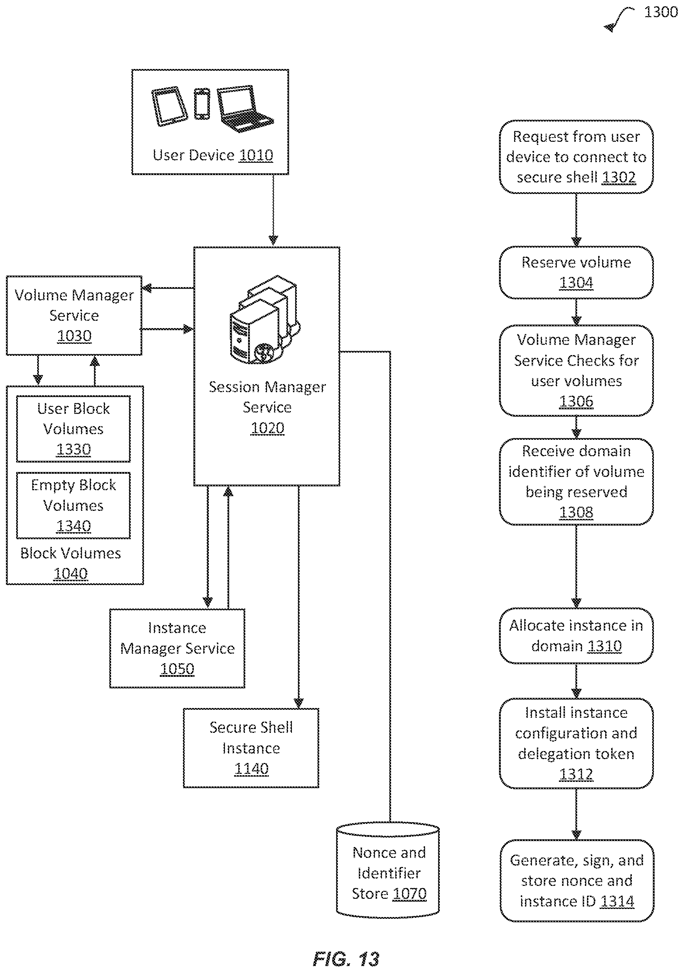

In some embodiments, the session manager service 1020 may store the nonce token in a nonce and identifier store 1070. The nonce and identifier store 1070 may be a distributed data store (e.g., cloud storage) storing a nonce table, as described in more detail in reference to FIG. 13, below, which may permit the session manager service 1020 to further secure the access of the user device to a secure shell instance, for example, by tracking nonce tokens and ensuring that nonce tokens are valid for a single request from the user device 1010. Similarly, the nonce and identifier store 1070 may also store a login token, provided by an authorization service, that contains a user public key of the user key pair, which may be used to verify the user device 1010 during fulfillment of the user request, as described in more detail in reference to FIG. 11, FIG. 14, and FIG. 16, below.

As part of configuring the secure shell instance, the session manager service 1020 may select and configure an existing instance from a pool of available instances 1080, as described in more detail in reference to the figures below. In some cases, the session manager service may install a configuration file and a delegation token in the selected instance. The configuration may include parameter information including, but not limited to, the instance identifier, the domain identifier, request details (e.g., resource allocations, compartment, tenancy), etc. The delegation token may permit the user device 1010 to access IaaS system resources without additional authorization at the level of the instance.

In some embodiments, the configuration parameters installed by the session manager service 1020 may be stored in an instance configuration store 1090. The instance configuration store 1090 may permit a new secure shell instance to be restored and/or reconfigured with request parameters following termination of the secure shell instance. In some embodiments, the secure shell instance will be terminated when the user has completed using it. In some embodiments, the session manager service 1020 may instruct the instance manager service 1050 to terminate the secure shell instance based on a period of inactivity (e.g., an idle time) of the agent and/or activity via the router 1060. The idle time may be provided as part of the configuration parameters. In some embodiments, a user of the user device 1010 may request the secure shell instance to be terminated, which may be implemented by the session manager service 1020.

As described above, the example system 1000 may provide improved security and stability of IaaS systems, at least by permitting a user device to connect to a secure shell instance from a console and/or command line interface. For example, using single use nonce tokens and instances may potentially contain the risk of breakout (where software accesses data and/or resources outside authorized limits). Single use nonce tokens, for example, may be signed by a private key of the user device, which may prevent another user from accessing the secure shell instance. As another example, single use instances may reduce the potential effects of breakout from a container by replacing an instance after it is no longer in use, rather than reusing instances which could potentially compromise subsequent user devices using the same instance.

FIG. 11 illustrates an example system 1100 for managing a secure shell session, in accordance with one or more embodiments. In reference to the system described in FIG. 10 (e.g., example system 100), the example system 1100 may include one or more of the constituent elements (e.g., volume manager service 130, instance manager service 150, instances 180, etc. of FIG. 10). In some embodiments, the example system 1100 may implement one or more authorization and security protocols as part of providing a secure connection between a user device and a secure shell instance.

In some embodiments, the session manager service 120 may receive a signed request from the user device 110 (e.g., operation 1102), where the signed request can be generated by the user device 110. In some embodiments, the user may request a secure shell via a command line interface (CLI) and/or a graphical user interface (GUI), also referred to as a "console" interface. In some cases, the system 1100 includes a GUI/CLI login service 1120 that may facilitate the communication of identity and authorization information with the session manager service 120. For example, a secure shell request may be signed by a private key generated by the GUI/CLI login service 1120 as part of a public/private key pair associated with a user session. For example, a user login and/or identity validation may include generating a temporary public/private key pair that can be used to sign the secure shell request with the private key. The public key may be provided to an authorization service 1130 as part of authorizing access of the user device 110 and generating a login token (e.g., an access token), which can be provided to the session manager service 120 to authorize the signed request (e.g., operation 1104).

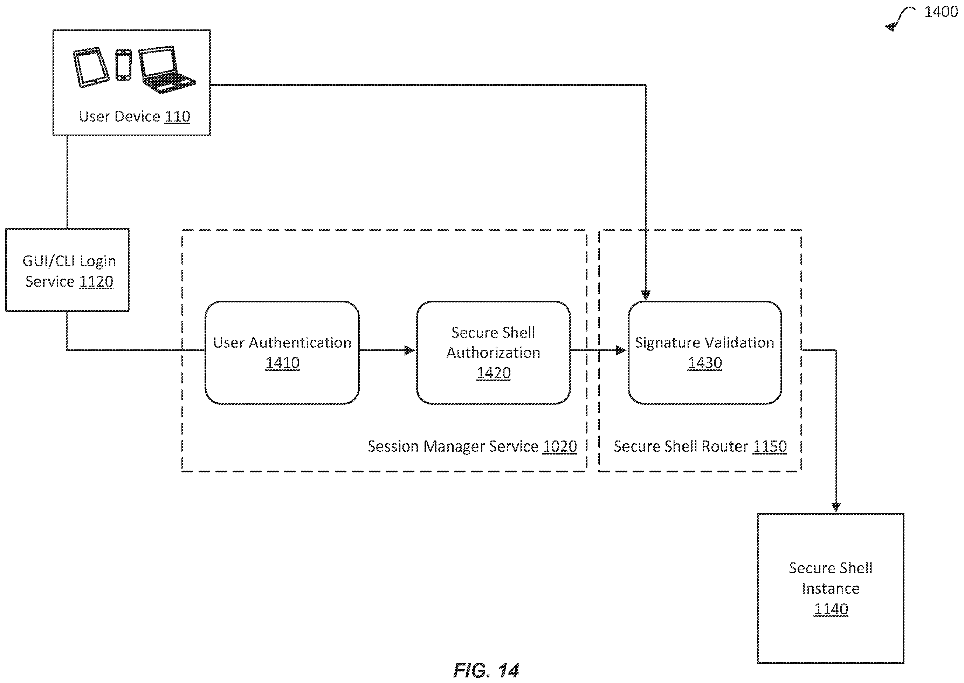

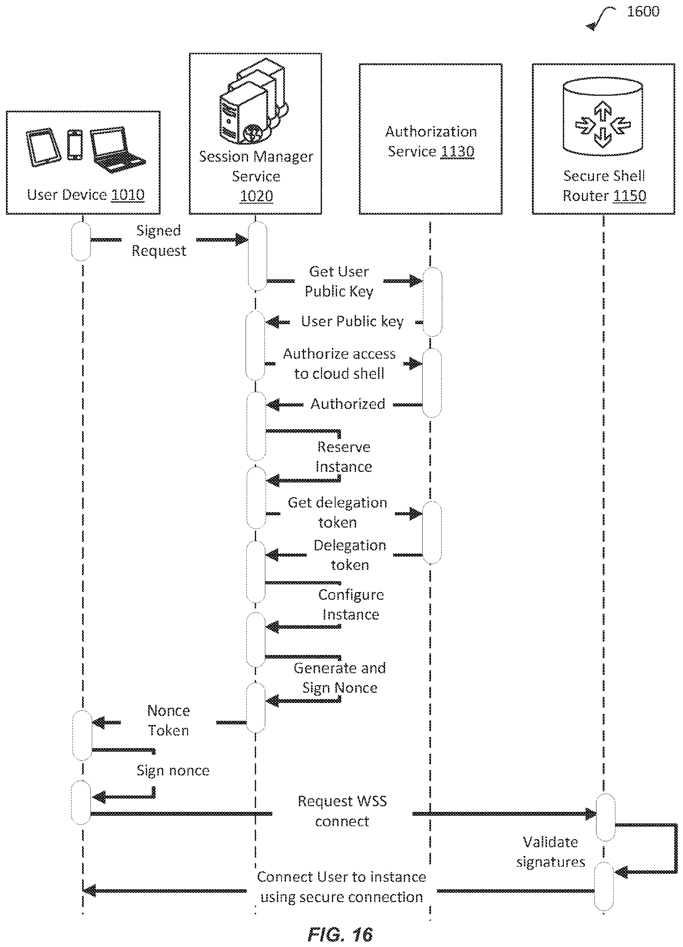

In some embodiments, the authorization service 1130 may perform identity authorization for the user device based on username/password account details, as well as authorizing access to a specific IaaS resource and/or a hierarchical resource layer (e.g., a root compartment containing sub-compartments associated with IaaS resources). The authorization service 1130 may communicate directly with the GUI/CLI login service 1120 during an initial step of login/authorization, from which the GUI/CLI login service 1120 may provide the login token to the session manager service 120. As described in more detail in reference to FIG. 14 and FIG. 16, below, the session manager service 120 may implement additional operations as part of authorizing access to the secure shell (e.g., operation 1104).

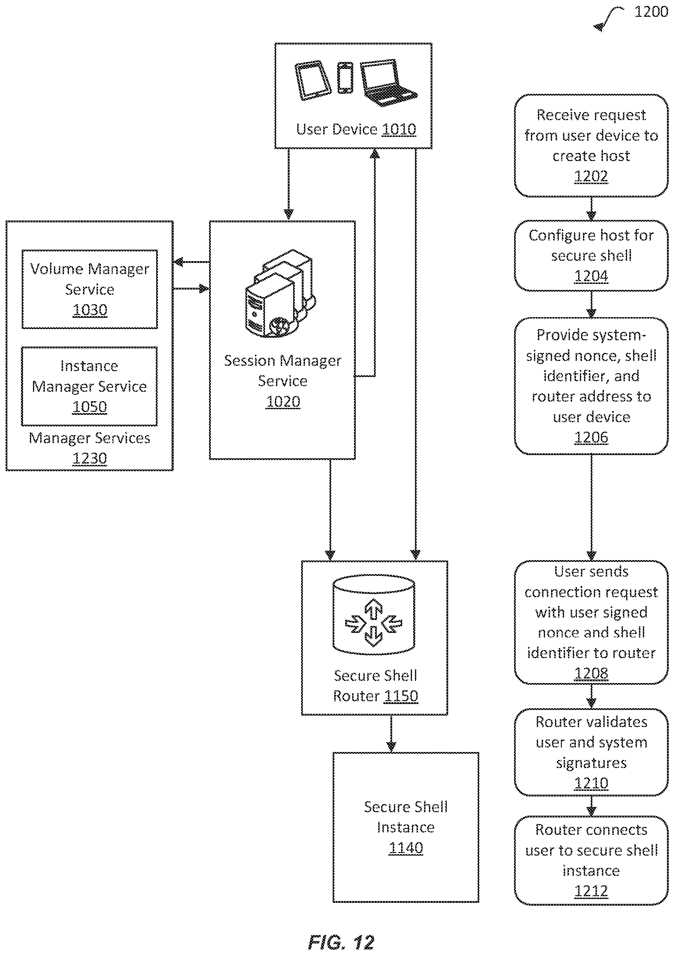

In some embodiments, the session manager service 120 may reserve a shell instance for use in creating a secure shell instance 1140 (e.g., operation 1106). As described in more detail in reference to FIGS. 12-4, below, reserving a shell instance may include one or more operations including, but not limited to, reserving a volume, allocating an instance in the reserved volume, and configuring the allocated instance. The session manager service 120 may receive a shell instance identifier as part of reserving the shell instance, and may provide information including, but not limited to the shell instance identifier, a user identifier associated with the user device 110, and an expiration time (e.g., a validity duration) as part of requesting a delegation token from the authorization service 1130 (e.g., operation 1108).

The authorization service 1130 may generate the delegation token and provide it to the session manager service 120, as an approach to permit the user device 110 to connect securely to the secure shell instance 1140 (e.g., operation 1110). In some embodiments, the session manager service 120 may configure the reserved shell instance by installing the delegation token received from the authorization service (e.g., operation 1112). As described in more detail in reference to FIG. 13, configuring the secure shell instance 1140 may include implementing a configuration of the instance (e.g., installing a configuration file including one or more aspects of the signed request).

Following receipt of the delegation token from the authorization service 1130, the session manager service 120 may provide a secure shell token to the GUI/CLI login service 1120 (e.g., operation 1114). As described in more detail in reference to the following paragraphs, additional validation and access control operations may be implemented by the session manager service 120 including, but not limited to generating, signing, and/or storing a nonce token. In some embodiments, the secure shell token may include additional access control elements and may be associated with metadata including the delegation token.

In some embodiments, the session manager service 120 may also provide the shell instance identifier to a secure shell router 1150 (e.g., operation 1116). In some embodiments, the secure shell router may be an example of the router 160 of FIG. 10. The secure shell router 1150 may store the shell instance identifier, and may use the secure shell identifier as part of validating the user device 110 during connection to the secure shell instance 1140, as described in more detail in reference to FIG. 12, below.

FIG. 12 illustrates an example system 1200 for connecting a user device to a secure shell instance, in accordance with one or more embodiments. Similarly to the techniques described in reference to FIG. 11, the session manager service 120 may facilitate the connection of the user device 110 to the secure shell router 1150, as part of connecting to the secure shell instance 1140.

In some embodiments, the session manager service 120 may receive the signed request from the user device 110 to create a secure shell instance, as described in more detail in reference to FIG. 11 (e.g., via the GUI/CLI login service 1120 of FIG. 11). The request may include a request for the session manager service 120 to create a host for the secure shell instance (e.g., operation 1202). The host may refer to a cloud resource container and/or a volume as implemented in IaaS resources. The request may include the security, authorization information described in reference to FIG. 11, and as such the operations and elements of the system 1200 may include one or more elements and/or operations described above (e.g., authorization service 1130 of FIG. 11 generating a delegation token).

In some embodiments, the session manager service 120 may configure the host for the secure shell instance (e.g., operation 1204). One or more constituent operations included in the configuration of the host are described in more detail in reference to FIG. 13, below. In some embodiments, the session manager service 120 may reserve and allocate an instance using one or more manager services 1230 including, but not limited to, the volume manager service 130 and the instance manager service 150, as described in more detail in reference to FIG. 10, above.

As part of creating secure access for the user device 110 to the secure shell instance 1140, the session manager service 120 may generate and provide a nonce token, a shell identifier, and a router address to the user device 110 (e.g., operation 1206). As described in more detail in reference to FIG. 10, the nonce token may include a web token (e.g., a JWT token) that may include a random string having a predefined number of characters and/or numerals (e.g., an eight character string of letters and numbers). The shell identifier may be included in the secure shell token described in reference to FIG. 11. The router address may identify the secure shell router 1150, and may permit the user device to request to connect to the secure shell router 1150 via a secure connection (e.g., a WebSocket secure, or "WSS," connection).

In some embodiments, the session manager service 120 may sign the nonce token, for example, using a private key of a key pair identified with the session manager service 120. An additional validation procedure, as described in more detail in reference to FIG. 14, may include validation of the system-signed nonce generated by the session manager service 120 signing the nonce token. To that end, the session manager service 120 may provide the system-signed nonce along with the shell instance identifier to the user device 110 and/or the secure shell router. In some embodiments, when the session manager service 120 provides the system-signed nonce to the user device 110, the user device 110 may sign the system-signed nonce and provide the doubly-signed nonce to the secure shell router 1150.

The secure shell router 1150 may receive a connection request from the user device 110, which may include a user-signed nonce token (e.g., operation 1208). The user-signed nonce token, analogously to the system-signed nonce, may be generated by signing the nonce token with a private key held by the user device 110. As described above, the user private key may form a part of a key pair generated by the GIU/CLI login service (e.g., a temporary public/private key pair), for which the public key may be provided to the session manager service 120 and/or the secure shell router 1150.

As part of granting the connection request, the secure shell router 1150 may validate the user and system signatures (e.g., operation 1210). The secure shell router 1150 may validate the nonce token at least in part by checking whether the nonce token is not expired (e.g., if the nonce token includes a validity duration). Validation may be implemented by a request from the session manager service 120 (e.g., the session manager service 120 may ascertain whether the nonce is valid and may provide an indication of validity). The secure shell router 1150 may also validate that the nonce token has not been previously used for a connection request, as described in more detail in reference to FIG. 13, below.

In some embodiments, the secure shell router 1150 may validate one or more of the signatures at least in part by decrypting the user and system signed nonce tokens using the public keys for the user device 110 and the session manager service 120, respectively. In some embodiments, as when the user device 110 signs the system signed nonce token, the secure shell router 1150 may validate the user signature by decrypting the doubly-signed nonce token using the user-public key, and the system signature using the system public key. Decrypting in this way may permit the secure shell router 1150 to confirm the nonce value and validate the nonce token. In some embodiments, validation may be achieved, for example, by comparing the decrypted nonce tokens to ascertain whether the nonce tokens match.

Following validation of the nonce token and the user and system signatures, the secure shell router 1150 may connect the user device 110 to the secure shell instance 1140 (e.g., operation 1212). As described in more detail in reference to FIG. 10, above, the secure shell router 1150 may provide a WebSocket Secure (wss) connection, which may enable interaction between a web browser (or other client application) and a web server hosting the secure shell instance 1140 (e.g., full-duplex communication) via encrypted messages.

FIG. 13 illustrates an example system 1300 for configuring a secure shell instance with a single use nonce token, in accordance with one or more embodiments. As part of reserving and configuring the shell instance, as described in more detail in reference to FIGS. 11-3, above, the session manager service 120 may perform one or more operations in coordination with constituent services of the example system 1300.

In some embodiments, the session manager service may receive a request from the user device to connect to a secure shell (e.g., operation 1302), as described above in reference to authorizing and validating the user request. In response to receiving the user request, the session manager service 120 may reserve a volume in coordination with the volume manager service 130 (e.g., operation 1304). Reserving the volume may involve steps including, but not limited to, ascertaining, by the volume manager service 130, whether one or more block volumes are already associated and/or assigned to the user (e.g., user block volumes 1330) of the user device 110 and are available to host the secure shell instance 1140 (e.g., operation 1306). This may include checking a user identifier (e.g., a username or login ID) against a registry of block volumes managed by the volume manager service 130. Where a user block volume 1330 is identified, domain identifier information (e.g., a resource ID, a data-center infrastructure locator, etc.) may be returned to the session manager service 120 to indicate the volume has been reserved to host the secure shell instance 1140 (e.g., operation 1308).

The volume manager service 130 may find that a user block volume 1330 is not available to host the secure shell instance 1140. In some embodiments, the volume manager service may reserve an empty block volume 1340, which may include one or more of the block volumes 140 that are available at the given data center for which a user may not already be assigned. Similarly, the volume manager service 130 may provide resource identifier information for the session manager service 120 to implement in subsequent operations. For example, the session manager service 120 may allocate an instance in the block volume 140 returned by the volume manager service 130 (e.g., operation 1310).

In some embodiments, allocating the instance may include providing the domain identifier to the instance manager service 150. As described in more detail in reference to FIG. 10, the instance manager service 150 may select and reserve an existing instance that is maintained as part of a number of available instances that may be reconfigured for use as secure shell instances. The instance manager service 150 may return an instance identifier (e.g., instance ID) to the session manager service 120, which may permit the session manager service 120 to identify the selected instance in subsequent operations. In some embodiments, selecting and reserving an existing instance, rather than creating and configuring an instance at the time of implementing the connection request, may potentially reduce system latency in processing the connection request.

The session manager service 120 may configure the selected instance at least in part by installing a configuration file (e.g., operation 1312). The configuration file may identify IaaS resource details (e.g., compartment, root compartment, domain identifier, etc.) and/or usage details to facilitate completion of the user connection request. The delegation token, as described in more detail in reference to FIG. 11, above, may be generated by an authorization service (e.g., authorization service 1120 of FIG. 11). Installing the delegation token on the secure shell instance 1140 may permit the the user device 110 to access IaaS system resources directly via the secure shell instance 1140, without additional requests to the authorization service for each resource and/or request.

The example system 1300 may include the additional validation operations described in more detail in reference to FIG. 12. For example, the session manager service 120 may generate, sign, and store a nonce token (e.g., a temporary JWT token) in nonce and identifier store 170, as part of implementing a single-use nonce approach as part of the nonce validation protocol (e.g., operation 1314). For example, the nonce and identifier store 170 may contain a nonce table that includes a list of nonce tokens (e.g., nonce "key" sequences that may be used to track whether a nonce is issued and valid) and may include the associated instance identifier information for each nonce, as an approach for attributing a nonce token to a secure shell instance 1140 when implementing one or more validation operations, as described in more detail in reference to FIG. 14, below. Since, in some cases, a nonce token may be temporary, the nonce table may include timing information including, but not limited to, issue time, validity period, etc. In this way, a nonce token may be found and its validity ascertained as part of fulfilling a connection request. In some embodiments, after the user device 110 is connected to the secure shell instance 1140 (e.g., operation 1214 of FIG. 12), the corresponding nonce token may be removed from the nonce table in the nonce and identifier store 170. In such cases, the session manager service 120 may permit nonce tokens to be single use, which may reduce the risk of unauthorized access to the secure shell instance 1140 (e.g., by "spoofing" using a valid nonce token).

FIG. 14 illustrates an example technique 1400 for authorizing a user device connecting to a secure shell instance, in accordance with one or more embodiments. In connection with the systems described above, one or more access control operations may be implemented as part of creating a secure connection between the user device 110 and the secure shell instance 1140. The operations described in reference to managing a secure shell session may include one or more of the operations described in reference to the preceding figures, for example, using user ID login controls, delegation tokens, and/or signed nonce tokens with signature validation.

In some embodiments, the session manager service 120 receives a signed request to create the secure shell instance 1140, the request being created and signed by the user device 110. As described in more detail in reference to FIG. 11, the request may be received from the GUI/CLI login service 1120, which may generate the key pair used by the user device 110 to sign the request.

The session manager service 120 may authenticate the user request using user login or IaaS ID authentication, as described in more detail in reference to FIG. 11 (e.g., operation 1410). For example, the identity of the user may be authenticated by an authorization service (e.g., authorization service 1130), at least in part by authorizing a username/password in combination with a data center identifier or other IaaS resource access parameter. The authorization service may generate a login token that includes the user public key of the key pair generated by the GUI/CLI login service 1120. The authorization service may provide the login token to the user device and/or the GUI/CLI login service 1120 after signing the login token with a private key of the authorization service. In this way, the session manager service 120 may authenticate both the signed request from the user device 110 and the user identity by requesting the authorization service public key from the authorization service. In some embodiments, the session manager service 120 may also extract the user public key from the login token, and may use the user public key to verify the signature on the signed request.

In some embodiments, the session manager service 120 may authorize the secure shell instance 1140 (e.g., operation 1420). As described in more detail in reference to FIG. 11, authorizing the secure shell instance 1140 may include requesting a delegation token from the authorization service. In some cases, delegation token may be issued in response to authorizing access to IaaS system resources based at least in part on a combination of a user ID, an instance identifier, and whether the request has expired (e.g., a temporary key pair is still valid and/or if the request itself has expired). Receiving the delegation token may permit the session manager service 120 to configure the secure shell instance 1140 to access IaaS system resources (e.g., compute resources, core services, storage resources, etc.) without further authentication and/or authorization, once a secure connection between the secure shell instance 1140 and the user device 110 has been established..

In some embodiments, the session manager service 120 may generate a nonce token and provide the nonce token, as well as other information, to the user device 110 and or the GUI/CLI login service 1120. In some embodiments, the session manager service 120 provides a system-signed nonce token to the secure shell router 1150. In some embodiments, the session manager service provides the system-signed nonce token to the user device 110, as part of signature validation (e.g., operation 1430). The user device 110 may sign the system-signed nonce, generating a doubly-signed nonce. In so doing, the session manager service 120 may also provide the public key matched to the private key used to sign the system-signed nonce token. The secure shell router 1150 may receive the user-signed nonce token from the user device 110, and may validate the signatures to authenticate the request. In some embodiments, validating the signatures may include decrypting the doubly-signed nonce using the user public key and the system public key to verify the user signature and the system signature, respectively. Validation may include comparing the decrypted nonce to the system-generated nonce, for example, as stored in a database of nonce tokens (e.g., nonce and identifier store 170 of FIG. 10). In some embodiments, validating the signatures may include decrypting the user-signed nonce token and the system-signed nonce token and comparing the nonce string included in the nonce tokens to confirm a match.

In an example, the secure shell router 1140, on connecting with the session manager service 120 and receiving the nonce token, may extract the expiration from the nonce token. The lifetime of the nonce may be configurable (e.g., an expiration time may be five minutes or any other number of seconds, minutes, or hours). If the nonce token has expired, the secure shell router 1150 may return an error rather than establishing the secure connection. If the nonce token hasn't expired, the secure shell router 1150 may verify the nonce token (e.g., by signature validation), and if invalid the secure shell router 1150 may return the same error. In some embodiments, the secure shell router 1150 may invalidate a valid nonce token to prevent reuse of the same nonce token. After the three access control operations are concluded successfully, the secure shell router 1150 may connect the user device 110 to the secure shell instance 1140 (e.g., via a wss connection).

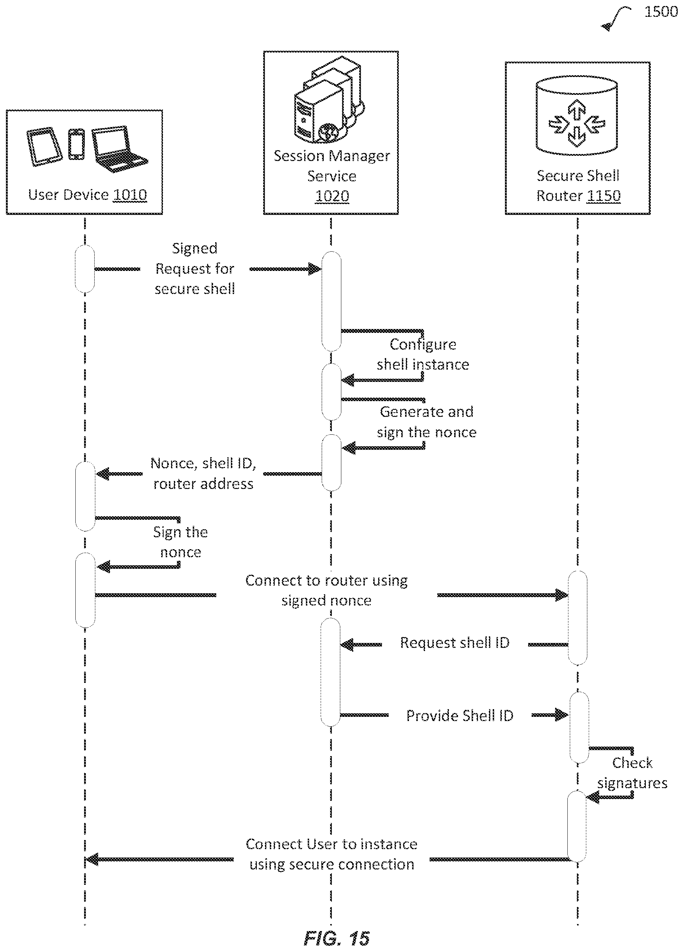

FIG. 15 illustrates a sequence diagram showing an example data flow 1500 by which a user device is connected to a secure shell instance, in accordance with one or more embodiments. A user of the user device 110 requests to connect to a secure shell instance through a GUI and/or a CLI, and the session manager service 120 coordinates the IaaS resources, configures the instance, and provides for a nonce to be used for validating the user device 110 to the secure shell router 1150.

In data flow 1500, the user device 110 (which may be an example of user device 110 of FIG. 10) may submit a request to connect to a secure shell instance. as described in more detail in reference to FIG. 11, the request may be submitted through a GUI/CLI login service (e.g. GUI/CLI login service 1110 of FIG. 11) and may be received by the session manager service 120. The request may be signed by a private key of a public/private key pair generated by the GUI/CLI login service. The key pair may be temporary, and the validity of the key pair may serve as one of the validation parameters of the signed request, as described in more detail in reference to FIG. 14, above, and FIG. 16, below.

Upon receiving the signed request, the session manager service 120 may configure a shell instance, as described in more detail in reference to the figures above. Configuring a shell instance may include multiple operations including, but not limited to reserving a volume, allocating an instance from a number of available instances that are created for the purpose of configuring a secure shell instance, and installing a configuration file on the allocated instance that may include a delegation token. As described in more detail in reference to FIG. 16, below, one or more operations may be included to authenticate the user identity and to authorize access to IaaS system resources via the secure shell instance.

Configuring the shell instance may include receiving, by the session manager service 120, a shell instance identifier from an instance manager service (e.g., an IaaS resource identifier). With the shell instance identifier, the session manager service 120 may generate a nonce token, and may receive a router address corresponding to the secure shell router 1150 (which may be an example of the secure shell router 1150 of FIG. 11). The session manager service 120 may sign the nonce token using a private key of a public/private key pair held by the session manager service 120. The session manager service 120 may provide the system-signed nonce, the shell instance identifier, and the router address to the user device 110 (e.g., via the GUI/CLI login service), which may permit the user device to address the secure shell router 1150 as part of connecting to the secure shell instance. In some embodiments, the session manager service 120 may provide an unsigned nonce token to the user device 110. In such cases, the session manager service 120 may sign the nonce token to generate a system-signed nonce token.

Upon receiving the information from the session manager service 120 (e.g., the nonce token, the shell instance identifier, and the router address), the user device 110 may sign the nonce token (e.g., using the private key of the key pair used to sign the request). The user device 110 may then connect to the secure shell router 1150 (e.g., at the router address), and may provide the user-signed nonce token and the shell instance identifier. In some embodiments, the user-signed nonce token includes both a user signature and a system signature, thereby permitting signature validation of both the user device 110 and the session manager service 120 using a single, doubly-signed, nonce token.

To validate the request received from the user device 110, the secure shell router 1150 may request the shell identifier associated with the request and a system-signed nonce from the session manager service 120. In response, the session manager service 120 may provide the shell instance identifier and the system-signed nonce to the secure shell router 1150. In some embodiments, as when the session manager service 120 provides a system-signed nonce to the user device 110, the secure shell router 1150 may not request a system signed nonce from the session manager service 120.

As described in more detail in reference to FIG. 14, the secure shell router may check the signatures by decrypting the signed nonce token using the user public key and the system public key. Validation may also include comparing the shell instance identifier received from both the user device 110 and the session manager service 120.

Upon validating the signatures , the secure shell router 1150 may connect the user device 110 to the secure shell instance (e.g., secure shell instance 1140 of FIG. 11) by an encrypted connection (e.g., a wss connection). In some embodiments, as when the session manager service 120 stores the nonce token and the corresponding shell instance identifier in a data store, the session manager service 120 or the secure shell router 1150 may remove the entry for the nonce token from the data store, for example, after validating the signed nonce token and connecting the user device 110 to the secure shell instance.

FIG. 16 illustrates a sequence diagram showing an example data flow 1600 by which a user device is connected to a secure shell instance using an authorization service 1130, in accordance with one or more embodiments. The authorization service 1130 may include, but is not limited to, a general user identity authorization service that may be used to authorize access to IaaS resources, for example, by authorizing login credentials. Involvement of the authorization service 1130 may include one or more preliminary identity verification and access authorization operations, as described in more detail in reference to FIG. 14, above.

In data flow 1600, session manager service 120 receives the signed request from the user device 110, as described in reference to the preceding figures. Upon receiving the signed request, the session manager service 120 may request an authorization service public key from the authorization service. The authorization service public key may be used to decrypt a login token received with the signed request (e.g., the login token may have been signed by the authorization service private key paired to the corresponding public key), to identify user identifier information (e.g., username/password combinations, request identifier information, etc.). The authorization service 1130 may provide the public key to the session manager service 120, which may then request authentication of the user identity using identifier information from the login token. The authorization service 1130 may confirm the user identity.

Upon receiving authentication of the identity of the user device 110, the session manager service 120 may request a delegation token from the authorization service 1130. The delegation token, as described in more detail in reference to FIG. 11, may be used by the session manager service to indicate that the user device is authorized to connect to IaaS system resources via the secure shell instance that has been configured to fulfill the signed request. Authorization of the user to connect to IaaS system resources via the secure shell may include providing IaaS resource information included in the signed request, such that the authorization service 1130 may determine whether the user device 110 is authorized to connect to the particular resources being requested.

Upon authorizing the user device 110, the authorization service 1130 may generate and provide the delegation token to the session manager service 120. The session manager service 120 may install the delegation token on the secure shell instance (e.g., secure shell instance 1140 of FIG. 11). Configuring the secure shell instance may include additional and/or alternative operations, as described above.

As described in reference to FIG. 15, the session manager service 120 may generate a nonce token, sign the nonce token using a system private key of a public/private key pair of the session manager service 120 to generate a signed nonce token, and provide the signed nonce token along with the shell instance identifier and the router address corresponding to the secure shell router 1150 (e.g., a "router endpoint") to the user device 110. The user device 110 may sign the system-signed nonce token and send a request (e.g., a request to establish a WebSocket Secure, or "wss" connection) including the user-signed nonce token to the secure shell router as part of a validation process. The the user-signed nonce, also signed by the session manager service, may be used by the secure shell router 1150 to validate the request. In some embodiments, as described in more detail in reference to FIG. 15, the session manager service 120 may send an unsigned nonce to the user device 110, such that both a user-signed nonce and a system-signed nonce are provided to the secure shell router 1150 for validation.

The secure shell router 1150 may validate the signatures, as described in more detail in reference to FIG. 15, above. Upon validating the system and user signatures and authenticating the nonce token and the shell instance identifier, the secure shell router may connect the user device to the secure shell instance.

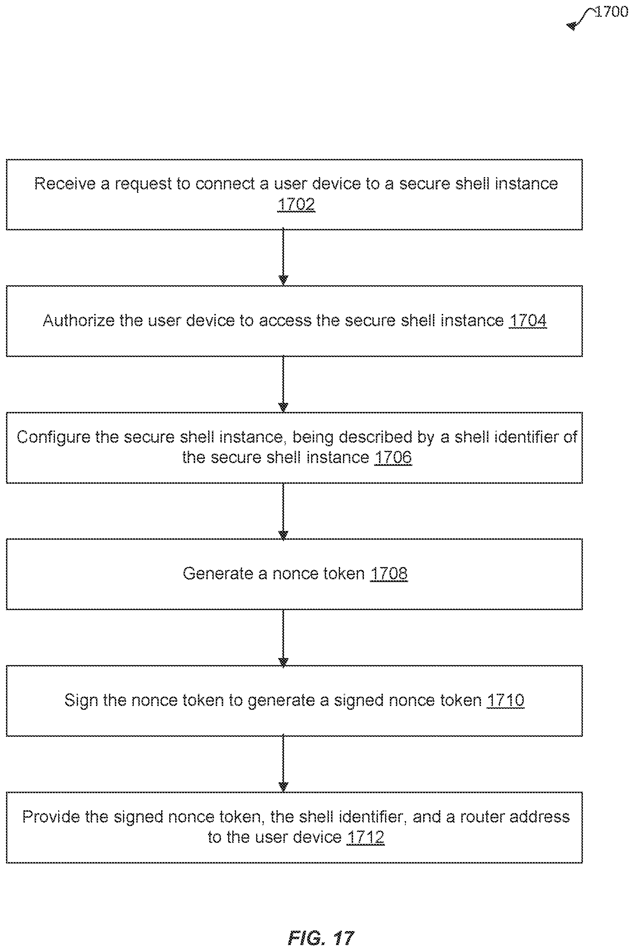

FIG. 17 illustrates an example flow 1700 for managing a secure shell session, in accordance with one or more embodiments. The operations of the flow can be implemented as hardware circuitry and/or stored as computer-readable instructions on a non-transitory computer-readable medium of a computer system, such as the session manager service 120 of FIG. 10. As implemented, the instructions represent modules that include circuitry or code executable by a processor(s) of the computer system. The execution of such instructions configures the computer system to perform the specific operations described herein. Each circuitry or code in combination with the processor performs the respective operation(s). While the operations are illustrated in a particular order, it should be understood that no particular order is necessary and that one or more operations may be omitted, skipped, and/or reordered.

In an example, the flow 1700 includes an operation 1702, where the computer system receives a request to connect a user device (e.g., user device 110 of FIG. 10) to a secure shell instance (e.g., secure shell instance 1140 of FIG. 11). As described in more detail in reference to FIG. 11 and FIG. 15, the request may be a signed request generated by the user device and/or by a login service (e.g., GUI/CLI login service 1110 of FIG. 11), and provided to the session manager service for implementation. The request may be signed by a private key generated by the GUI/CLI login service, and may be used to authenticate the identity of the user device, as described in more detail in reference to FIG. 11 and FIG. 16.

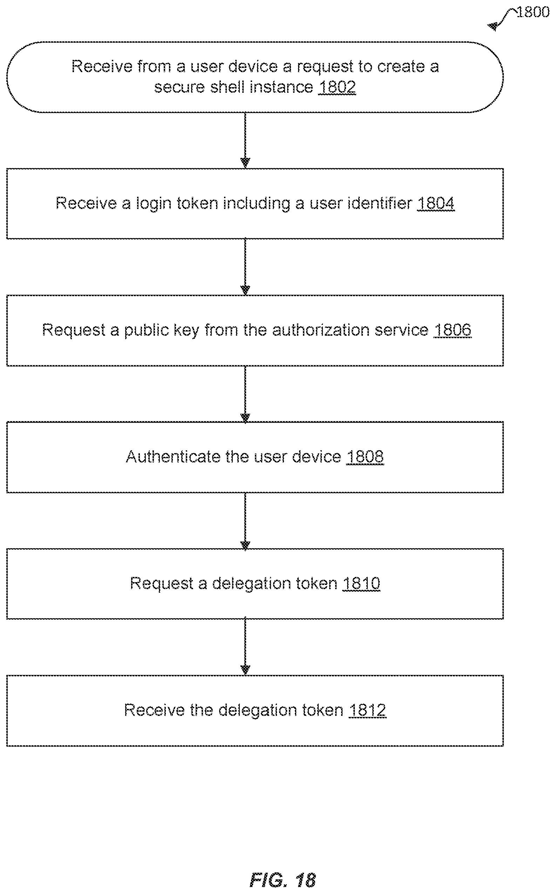

In an example, the flow 1700 includes an operation 1704, where the computer system authorizes the user device to access the secure shell instance. As described in more detail in reference to FIG. 18, authorizing the user device may include one or more operations involving an external authorization service (e.g., authorization service 1130 of FIG. 11). The authorization service may provide authentication of the user (e.g., by validating user identifier such as username/password), and may authorize access to the IaaS resource described in the request.

In an example, the flow 1700 includes an operation 1706, where the computer system configures the secure shell instance, being described by a shell identifier of the secure shell instance. In some embodiments, configuring the secure shell instance may include, but is not limited to, reserving a block volume, allocating an instance in the block volume, and installing a configuration file and a delegation token on the instance. Optionally, reserving the block volume may include checking whether the user device is already associated with a block volume (e.g., user block volumes 1330 of FIG. 13) or is not yet associated with a block volume, in which case an empty block volume (e.g., empty block volumes 1340 of FIG. 13) may be reserved. Optionally, allocating an instance may include selecting an instance from a plurality of available instances. Maintaining the plurality of available instances, for example with one or more default configurations that may be reconfigured by installing the configuration file, may permit the session manager service to respond more rapidly (i.e., with lower latency) to the request. In some embodiments, reserving a block volume and allocating an instance may include communicating with a volume manager service (e.g., volume manager service 130 of FIG. 10) and an instance manager service (e.g., instance manager service 150 of FIG. 10).

In an example, the flow 1700 includes an operation 1708, where the computer system generates a nonce token. The nonce token may be a web token (e.g., a JSON Web Token, or JWT token) that includes one or more types of information. Optionally, the nonce token includes a key sequence that may be used to track whether the nonce is valid for use. For example, the session manager service may store the nonce token in a data store (e.g., nonce and identifier store 1070 of FIG. 10). In some embodiments, the nonce token includes a random sequence of letters and/or numbers (e.g., 17 alphanumeric characters), that may be used to validate the request.

In an example, the flow 1700 includes an operation 1710, where the computer system signs the nonce token to generate a signed nonce token. As described in more detail in reference to FIG. 12, the system may sign the nonce token using a private key of a public/private key pair (e.g., asymmetric encryption). In this way, the signed nonce token may be encrypted at the time of transmission to the user device (e.g., user device 1010 of Fig. 10).

In an example, the flow 1700 includes an operation 1712, where the computer system provides the signed nonce token, the shell identifier, and a router address to the user device. as described in more detail in reference to FIG. 15, the user device may send a secure connection request (e.g., a WSS connection request) to a secure shell router (e.g., secure shell router 1150 of FIG. 11). The user device may sign the nonce token with a private key (e.g., the same key used to sign the request), and may provide the public key paired to the private key to the secure shell router at the router address. The user device may also provide the shell identifier to the secure shell router, as part of the connection request. Optionally, the computer system may provide the shell identifier to the secure shell router at the router address, as an additional validation parameter implemented by the secure shell router.

FIG. 18 illustrates an example flow 1800 for configuring a secure shell instance with a single use nonce token, in accordance with one or more embodiments. The operations of the flow can be implemented as hardware circuitry and/or stored as computer-readable instructions on a non-transitory computer-readable medium of a computer system, such as the session manager service system 1020 of FIG. 10. As implemented, the instructions represent modules that include circuitry or code executable by a processor(s) of the computer system. The execution of such instructions configures the computer system to perform the specific operations described herein. Each circuitry or code in combination with the processor performs the respective operation(s). While the operations are illustrated in a particular order, it should be understood that no particular order is necessary and that one or more operations may be omitted, skipped, and/or reordered.

In an example, the flow 1800 begins following operation 1702 of FIG. 17, where the computer system receive from a user device a request to create a secure shell instance. In particular, the computer system (e.g., the session manager service 1020 of FIG. 10), may implement one or more operations to authenticate and/or authorize the user device from which the request was received, in communication with an authorization service (e.g., authorization service 1130 of FIG. 11), as part of enabling the session manager service to proceed with the operations described in FIG. 17.

In an example, the flow 1800 includes an operation 1804, where the computer system receives a login token including a user identifier. As described in more detail in reference to FIG. 16, the session manager service may request the authorization service to authenticate the identity of the user device (e.g., as represented in the signed request), and to authorize access for the user device to the IaaS resource identified in the request. As part of authenticating the user identity, the session manager service may receive the login token from the user device. The login token may include user information (e.g., username/password, login credentials, expiration information of a login session, etc.) as well as the user public key paired to the user private key used to sign the request and/or the nonce token by the user device. The login token may be signed by a private key held by the authorization service.

In an example, the flow 1800 includes an operation 1806, where the computer system requests a public key from the authorization service. The public key, being used to sign the login token, may provide The session manager service may request a public key from the authorization service to decrypt the login token, as part of authenticating the user device. For example, the login token may provide user identifier information used to authenticate the user device (e.g., a device identifier or session identifier information).

In an example, the flow 1800 includes an operation 1808, where the computer system authenticates the user device. In some embodiments, the session manager service may extract user identifier information from the login token, and may compare the user identifier information to the information provided with the request.

In an example, the flow 1800 includes an operation 1810, where the computer system requests a delegation token. The delegation token, as described in more detail in reference to FIG. 11, may be generated by the authorization service and provided to the session manager service after the user device has been authorized to access the IaaS resource identified in the user request to connect to the secure shell instance. For example, the session manager service may provide user identifier information, instance identifier information, expiration information, or the like, based at least in part on which the authorization service may determine whether the delegation token will be generated.

In an example, the flow 1800 includes an operation 1812, where the computer system receives the delegation token. The session manager service may use the delegation token to allow the secure shell router to grant access to the user device to IaaS resources without additional authorization by the authorization service, for example, by installing the delegation token on the secure shell instance, for example, as part of configuring the secure shell instance, as described in more detail in reference to FIG. 11, above.

### Techniques For Utilizing Multiple Network Interfaces For A Cloud Shell

Cloud-based platforms provide scalable and flexible computing resources for users. Such cloud-based platforms, also referred to as infrastructure as a service (IaaS), may offer entire suites of cloud solutions around a customer's data, for example solutions for authoring transformations, loading data, and presenting the data. Users of IaaS resources may request to create a secure terminal in a secure shell instance (e.g., a virtual machine running on a virtual cloud network (VCN)), so that operations and data transfers may be carried out securely (e.g., with two-way encryption via a WebSocket secure (wss) connection).

An aspect of secure communication may include controlling network traffic to and from the secure shell instance. Network traffic controls may include one or more techniques and/or approaches to isolating the secure shell instance from one or more IaaS services (e.g., core cloud services) that may be in communication with multiple instances and may have access to and/or control over data and compute resources of the IaaS system. The network traffic controls may include implementing directional limits on network communication into and out of the secure shell instance. The directional limits in turn may block some inbound traffic from external systems, and block outbound traffic to IaaS services. Isolating the secure shell instance may include implementing multiple virtual cloud networks, for example, to isolate core IaaS services from the secure shell instance, both being isolated from network communication services.

As an illustrative example, a user may submit a command to a secure shell instance through a user device (e.g., using a graphical user interface and/or command line interface of a browser). The secure shell instance may be configured with a primary virtual network interface card (vNIC), which one or more security rules may define as ingress-only (unidirectional with respect to inbound network traffic to the secure shell instance). The command may cause the secure shell instance to generate output, which may include an instruction to send the output to an external address (e.g., over the internet). The secure shell instance may send the output via a secondary vNIC, rather than the primary vNIC. Similarly to the primary vNIC, the secondary vNIC may be configured with security rules limiting network traffic through the secondary vNIC as egress-only (unidirectional with respect to outbound traffic from the secure shell instance). In this way, authorized network traffic may arrive to the secure shell instance via the primary vNIC and may leave the secure shell instance via the secondary vNIC. Furthermore, the secure shell instance may run on a compute isolation VCN, isolated from both a service VCN and a network isolation VCN, which may run IaaS services and network communication services, respectively.

Such an arrangement may provide improved security for both the secure shell instance and the IaaS system as a whole. In part, improved security may result, because the secure shell instance may be limited in its ability to send messages to the service VCN via the primary vNIC, and may be limited in its ability to receive messages from external networks via the network isolation VCN and the secondary vNIC. In this way, unauthorized network traffic from the internet (or other networks) may be unable to access the secure shell instance, and the secure shell instance may be unable to access core IaaS resources without authorization.

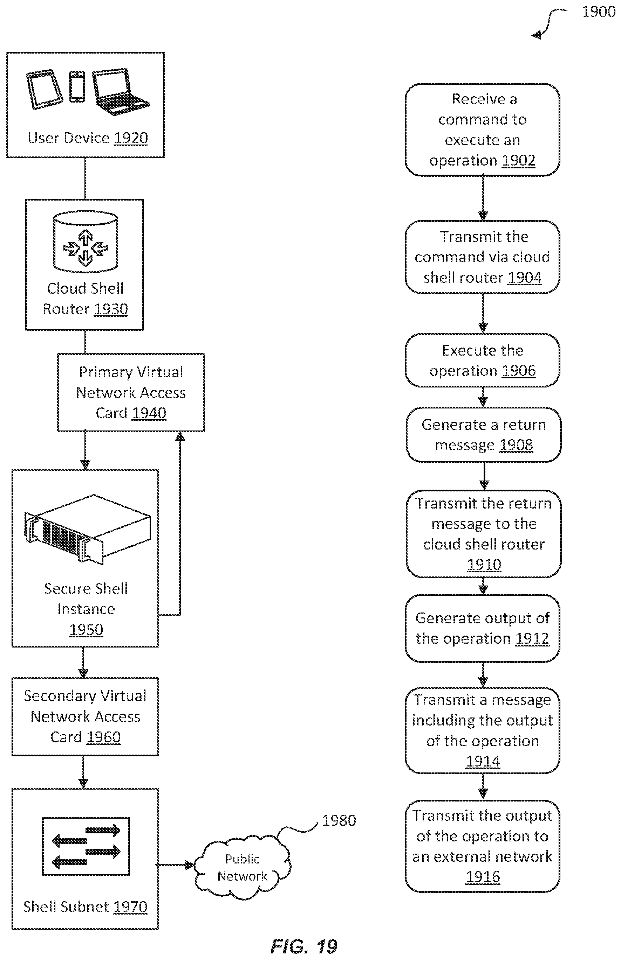

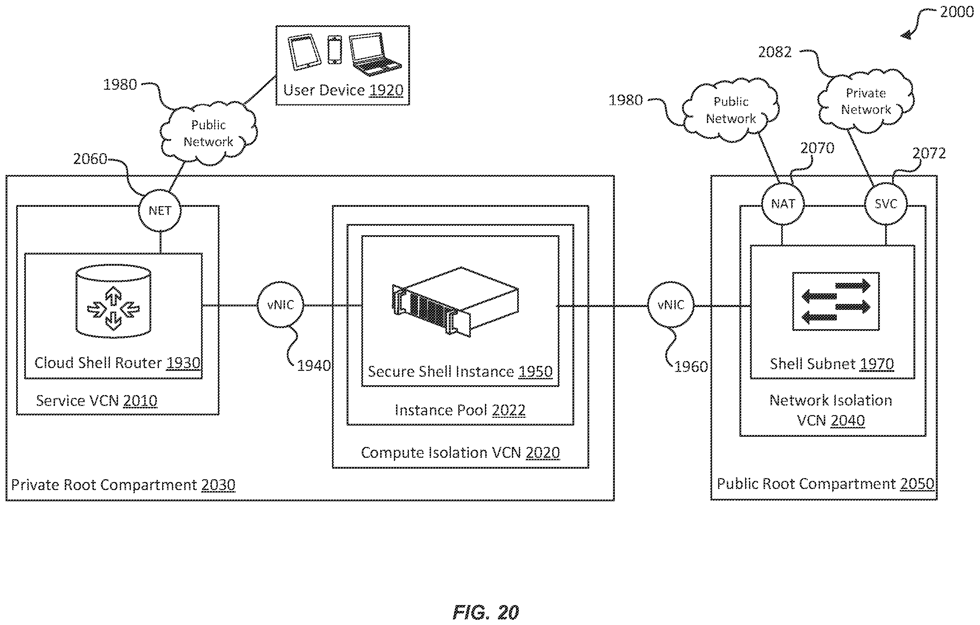

FIG. 19 illustrates an example technique 1900 utilizing multiple network interfaces for a secure shell instance, in accordance with one or more embodiments. Directional control of communication between virtual cloud networks may provide improved security of constituent IaaS resources, and may limit and/or prevent security risks from reaching core IaaS resources. To that end, the example technique 1900 may include multiple approaches to controlling the flow of system communications, using one or more system components that may be implemented as virtual systems in a distributed computing system (e.g., a cloud network). In some embodiments, the approaches may be implemented to control the origin and/or destination of communications with a secure shell instance 1950, which may be an example of a virtual machine (VM) operating on a virtual cloud network (VCN). In some embodiments, the secure shell instance communicates with other components of a distributed computing system (e.g., routers, subnets, etc.) via one or more virtual network interface cards (vNICs), as described in more detail in reference to FIG. 20, below.

In some embodiments, the example technique 1900 includes receiving a command to execute an operation (e.g., operation 1902). In some embodiments, the command is generated and/or sent from a user device 1920. The user device 1920 may include any form of electric device configured to access a network (e.g., the internet and/or a private network), such as a personal computer, a digital workstation, a tablet, a smartphone, etc. The command may include any type of instruction generated by a user of the user device 1920 (e.g., via a browser interface of an IaaS provider). For example, the command may include a compute task, a storage task (e.g., input-output operation, moving stored data, data transformation, etc.), a configuration task (e.g., a command accessing operating parameters of the secure shell instance 1950), etc. In some embodiments, the user device 1920 may communicate with a system service (e.g., a browser interface and/or command line interface service) that directs the command to an appropriate sub-system and/or cloud network resource. Such an arrangement may provide network isolation and/or improved system security through network isolation. For example, using a secondary vNIC in a VCN on a different tenancy from that of IaaS services may permit user outgoing network traffic to be identifiable (e.g., a source IP address may come from a different IP address pool from that of IaaS services), as described in more detail in reference to FIG. 20, below.

In some embodiments, the command received in operation 1902 is sent to a cloud shell router 1930. The cloud shell router may be a virtual router implemented in a virtual cloud network, as described in more detail in reference to FIG. 20, below. The cloud shell router 1930 may transmit the command (e.g., operation 1904) toward an appropriate addressee (e.g., secure shell instance 1950), which may be implemented in a separate virtual cloud network. In some embodiments, implementing separate subsystems that perform the different operations of example technique 1900 in separate virtual cloud networks may provide improved security for core cloud resources and/or user data. In some embodiments, the cloud shell router 1930 may communicate with the secure shell instance 1950 via a primary virtual network access card 1940 (vNIC). In some embodiments, the primary vNIC 1940 may represent the network interface configuration for the virtual machine on which the secure shell instance 1950 is implemented. As such, the primary vNIC 1940 may be configured with one or more operational parameters (e.g., a MAC address), as well as security rules, which may permit the primary vNIC 1940 to selectively route communications to and/or from the secure shell instance 1950, as described in more detail in reference to the figures, below.

In some embodiments, the secure shell instance 1950 may execute the operation indicated in the command (e.g., operation 1906). As described above, the secure shell instance 1950 can be a virtual machine (VM) configured to execute one or more types of operations, including database operations, compute operations, etc. For example, the secure shell instance 1950 may execute the command to modify one or more aspects of user IaaS resources and/or data in a compartment of a distributed computer system (e.g., to move data stored in one data center to another data center, to send data to an external server over a public network, etc.).

In some embodiments, the secure shell instance 1950 may generate a return message (e.g., operation 1908) as a result of executing the operation included in the command. The return message may be intended for the user of the user device 1920 and/or the user device 1920, rather than for a core IaaS service or an external server (e.g., on a public network or over a private network). In some embodiments, the return message may be generated to provide outcome information in reference to the operation executed by the secure shell instance 1950. For example, the secure shell instance 1950 may generate the return message to indicate that the operation was successfully completed, was aborted, failed, rescheduled, etc. The return message may include status information, as well as specific data requested as part of the return message (e.g., a checkbit, memory location, etc.).

In some embodiments, the secure shell instance 1950 may transmit the return message to the cloud shell router 1930 (e.g., operation 1910). The secure shell instance 1950 may transmit the return message via the primary vNIC 1940. As described in more detail in reference to FIG. 20, below, the primary vNIC 1940 may be configured to transmit return messages to the cloud shell router 1930, but to reject other types of messages received from the secure shell instance 1950.

In some embodiments, the secure shell instance 1950 may generate output of the operation (e.g., operation 1912). The output of the operation may include, but is not limited to, communications, data, and/or instructions to external systems in communication with the secure shell instance 1950 over a network (e.g., a public network and/or a private network). The secure shell instance 1950 may be instructed to generate the output, for example, when the operation included in the command from the user device 1920 includes transferring data over an external network. In the case of transferring data, the secure shell instance 1950 may send an instruction to a data management service of the IaaS system, via an internal network of the IaaS system.

As part of executing the command, for example, when the command is to transfer data or send a message to an external server, the secure shell instance 1950 may transmit a message including the output of the operation (e.g., operation 1914) to a shell subnet 1970. The secure shell instance 1950 may communicate with the shell subnet 1970 via a secondary vNIC 1960. As with the primary vNIC 1940, the secondary vNIC 1960 may be configured with one or more operational parameters (e.g., a different MAC address) and input-output parameters (e.g., security rules) to control the flow of data and messages to the secure shell instance 1940. As described in more detail in reference to FIG. 20, below, the secondary vNIC 1960 may be configured to be unidirectional, permitting only outgoing messages from the secure shell instance 1950 to the shell subnet 1970 (e.g., an egress-only configuration). In some embodiments, a unidirectional, egress-only, configuration for the secondary vNIC 1960 may permit the secure shell instance 1950 to operate with improved security against external risks of interference by penetration and/or unauthorized access by non-user devices.

In some embodiments, the shell subnet 1970 may transmit the output of the operation to an external network 1980 (e.g., operation 1916). In some embodiments, the external network 1980 is a public network. In some cases, connecting the secure shell instance 1950 and/or the shell subnet 1970 to a public network may introduce a security risk due to the potential for malicious systems to attempt to access the secure shell instance 1950 and/or core cloud resources. For example, coopting the secure shell instance 1950 could provide access to core cloud resources that could, in turn, grant access to user data for multiple users in a cloud service region. For this reason, the shell subnet 1970 may communicate with the external network 1980 via a network address translation (NAT) gateway, as described in more detail in reference to FIG. 20, below.

As such, the example technique 1900 demonstrates how communication between the user device 1920, the secure shell instance 1950, and the external network 1980 may be managed to potentially reduce risk of security threats presented by connecting the secure shell instance to the external network 1980. In some embodiments, the example technique 1900 provides unidirectional transmission of messages for some types of information, while permitting return messages to be passed back from the secure shell instance 1950 to the user device 1920. Implementing such controls may provide improved security for user data stored to which the secure shell instance 1950 has access, and may isolate the secure shell instance 1950 from core cloud services.

FIG. 20 illustrates an example system 2000 utilizing multiple network interfaces for managing communication of a secure shell instance, in accordance with one or more embodiments. The various operations described in reference to FIG. 19, above, may be implemented by the example system 2000, which may include one or more additional features to potentially improve security of the secure shell instance 1950 and core cloud resources.

In some embodiments, the cloud shell router 1930, the secure shell instance 1950, and the shell subnet 1970 may be implemented as virtual systems in separate virtual cloud networks (VCNs). Furthermore, the separate VCNs may be implemented in multiple root compartments (also referred to as "tenancies"). As illustrated in FIG. 20, the cloud shell router 1930 is implemented in a service VCN 2010, the secure shell instance 1950 in a compute isolation VCN 2020, with both in a private root compartment 2030. By contrast, the shell subnet 1970 may be implemented in a network isolation VCN 2040 in a public root compartment 2050. In general, the private root compartment 2030 and the public root compartment 2050 may constituted different and/or separate logical containers of data and compute resources implemented in an IaaS system, such that system resources in the private root compartment 2030 cannot be accessed by those of the public root compartment 2050. The private root compartment 2030 and the public root compartment 2050 may be associated with different and distinguishable blocks of IP addresses, which may permit the determination of the origin of messages from an IaaS system as from the public root compartment 2050 or the private root compartment 2030.

In some embodiments, the public root compartment 2050 and the constituent systems implemented within the public root compartment 2050 (e.g., the shell subnet 1970 in the network isolation VCN 2040) may be assigned an IP address from a block of IP addresses identified with user output operations (e.g., the message of operation 1916 in FIG. 19). By contrast, the private root compartment 2030 and the constituent systems implemented within the private root compartment (e.g., the cloud shell router 1930 in the service VCN 2010) may be assigned an IP address from a block of IP addresses identified with IaaS system communication operations (e.g., communication with external networks such as the external network 1980). Using separate blocks of IP addresses, by which the origin of communications may be attributed to either the IaaS system itself or a user of the IaaS system, may improve security of the overall IaaS network (e.g., across multiple data centers, regions, etc.). For example, some IaaS systems may be implemented in multiple data centers ( also referred to as domains) in a region, and a global IaaS system may include multiple regions in communication with each other over private and/or public networks. Distinguishing user-source communication from system source communication may reduce the risk of large-scale system traffic-type attacks (e.g., distributed denial of service, or DDOS attacks), from reaching core services.

As an illustrative example, communication from the shell subnet 1970 may be attributable to the user of the user device 1920 (albeit potentially anonymized) by the IP address of the shell subnet 1970. As such, a message from the shell subnet 1970 purporting to originate from a core cloud service of the IaaS system may be rejected at the receiver point, for example, for the source IP address and the source identifier (e.g., username) not matching. In another example, isolating outgoing user traffic to a public root compartment may provide improved forensic information to determine a source of a penetration into the IaaS system. By tracing the IP address of source to the public root compartment 2050, for example, an investigation may be able to identify a compromised user instance, and may potentially reveal that a core IaaS service has not been compromised.

In some embodiments, the user device 1920 (e.g., a browser and/or command line interface executing a secure shell client), may connect with the cloud shell router 1930. The user device 1920 may connect to the cloud shell router over the external network 1980 (e.g., a public network). The external network may 1980 include, for example, the internet, an encrypted network, etc. The user device 1920 may communicate with the cloud shell router 1930 via an internet gateway 2060 (e.g., "NET" gateway). The internet gateway 2060 can be a virtual router added to the service VCN 2010 to provide a path for network traffic between the service VCN 2010 and the external network 1980.

In some embodiments, the service VCN 2010 also implements additional IaaS core services including, but not limited to, secure session manager services, volume manager services instance manager services, and/or web servers, which may facilitate the creation, management, termination, and cleanup of the secure shell instance 1950 and its associated data (e.g., block volumes, object storage, etc.).

In some embodiments, the secure shell instance 1950 communicates with the cloud shell router 1930 via the primary virtual network interface card (vNIC) 1940. A vNIC can enable an instance to connect to a VCN and may determine how the instance connects with other systems inside and outside the VCN. As described in reference to FIG. 19, above, the primary vNIC 1940 may be configured to manage traffic between the cloud shell router and the secure shell instance 1950 (e.g., using a security rule).

Security rules may specify a type of ingress or egress traffic allowed in or out of the primary vNIC 1940. For example, the primary vNIC 1940 may be configured to accept signals from the cloud shell router 1930 to the secure shell instance 1950, but to reject output messages from the secure shell instance 1950. In some embodiments, the primary vNIC 1940 may accept return messages from the secure shell instance 1950 addressed to the user device 1920, for example, as a response to a request for a return message included in a message from the user device 1920. The primary vNIC 1940 may be attached to the secure shell instance 1950, and security rules (e.g., ingress/egress controls) may be a part of the configuration of the secure shell instance 1950 at the time of launch and/or as default features of the secure shell instance 1950.

In some embodiments, the secure shell instance 1950 can be a virtual machine (e.g., a software-based emulation of a full computer that runs within a physical host computer, also referred to as a "VM") that is specialized for the user of the user device 1920 with a configuration file provided by a constituent sub-system of the service VCN 2010 (e.g., the session manager service). In some embodiments, the secure shell instance 1950 can be selected from an instance pool 2022 that contains one or more pre-created instances configured with default parameters. The default parameters may include security rules that define traffic management rules for the primary vNIC 1940.

In some embodiments, the secure shell instance 1950 includes the secondary vNIC 1960. The secondary vNIC 1960 may be attached to the secure shell instance 1950 during configuration of the pre-created instance from the instance pool 2022. Alternatively, the pre-created instances in the instance pool 2022 may be pre-configured to include the secondary vNIC 1960. In some embodiments, the secondary vNIC includes egress-only security rules (e.g., controls on traffic flow to limit communication only to a single direction from the secure shell instance 1950 to the shell subnet 1970). As described in more detail in reference to the figures, below. As described above, limiting network traffic in this manner may provide additional and/or improved security for the secure shell instance 1950 and the service VCN 2010.

In some embodiments, the shell subnet 1970 may be configured to communicate with the external network 1980 and/or a private IaaS network 2082 via one or more virtual routers implemented in the network isolation VCN 2040. In some embodiments, the shell subnet 1970 may send output traffic received from the secure shell instance 1950 via the secondary vNIC 1960 to the external network 1980 using a network address translation (NAT) gateway 2070. The NAT gateway 2070 can be a virtual router configured to perform network address translation. A NAT gateway may give cloud resources without public IP addresses access to the internet without exposing those resources to incoming internet connections. For example, the secure shell instance 1950 and the shell subnet 1970 may lack access to the external network 1980, as a security measure to potentially reduce the risk of penetration from malicious attacks. In such cases, the NAT gateway 2070 may provide a connection to the internet using an IP address (e.g., from the public block of IP addresses attributable to the public root compartment 2050) that is not directly identified with the secure shell instance 1950 or the shell subnet 1970.

In some embodiments, output from the secure shell instance 1950 that involves requests to core IaaS resources may be routed by the shell subnet 1970 to a service (SVC) gateway 2072. The service gateway 2072 can be a virtual router attached to the network isolation VCN 2040 that may enable VCN hosts to privately access IaaS services (such as database resources, object storage, metadata management, etc.) without exposing the VCN hosts or the IaaS to the public internet. As such, the service gateway 2072 may permit the shell subnet 1970 to send output traffic over an internal network 2082 (e.g., "private network") configured to communicate with IaaS core services in the region and/or other regions.

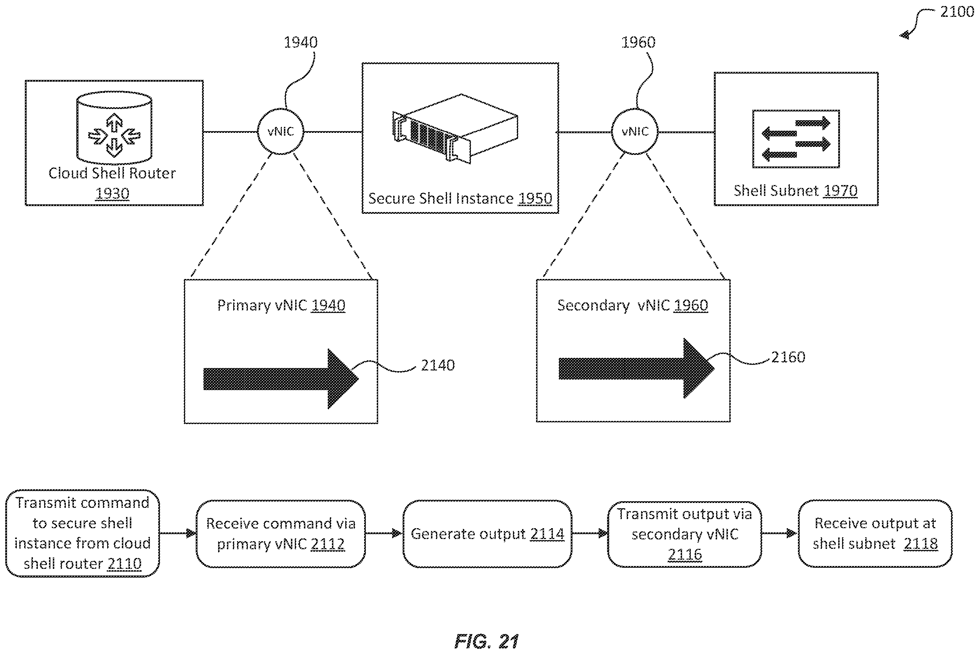

FIG. 21 illustrates an example technique 2100 for unidirectional communication by a secure shell instance using multiple network interfaces, in accordance with one or more embodiments. The configuration of the secure shell instance 1950 may include adding one or more additional virtual network interface cards (vNICs) to the secure shell instance 1950. The vNICs may permit the secure shell instance 1950 to send output messages via a separate communication path from that which may be used to receive instructions and/or commands from a user device (e.g., user device 1920 of FIG. 19). In some embodiments, the vNICs may be configured with security rules to define directional control of communication with the secure shell instance 1950, as described in more detail, below.

As described in more detail in reference to FIG. 20, the primary vNIC 1940 may be configured to facilitate communication between the secure shell instance 1950 and the cloud shell router 1930. In some embodiments, the secure shell instance 1950 may run in a compute isolation virtual cloud network (VCN), while the cloud shell router 1930 may run in a service VCN. In some embodiments, the secure shell instance 1950 may include the primary vNIC 1940 as a default configuration. In some embodiments, the primary vNIC 1940 may be configured with security rules that define an ingress-only limitation on communications with the secure shell instance 1950. The ingress-only limitation may limit the types of communications that can be received by the secure shell instance 1950, and/or may restrict the sources from which communications can be received by the secure shell instance 1950.

In some embodiments, the primary vNIC 1940 may be configured to permit incoming communications from core cloud resources (e.g., whitelist IaaS system components). For example, the cloud shell router 1930 may transmit the command to the secure shell instance 1950 (e.g., operation 2110). The secure shell instance 1950 may receive the command via the primary vNIC 1940 (e.g., operation 2112) that may be configured to permit communications from the cloud shell router 1930. The secure shell instance 1950 may then execute the operations indicated in the command and may generate the output described in reference to FIG. 19 (e.g., operation 2114).

In some embodiments, the secondary vNIC 1960 may be configured to serve as an egress point for communications to facilitate transmission of the output from the secure shell instance 1950 to an external network (e.g., external network 1980 of FIG. 19) via the shell subnet 1970. As described in more detail in reference to FIG. 20, the shell subnet 1970 may run in a network isolation VCN to potentially improve security by reducing the risk of penetration by malicious attacks originating from the external network. In some embodiments, the secondary vNIC 1960 may be configured during setup of the secure shell instance as a pre-created instance (e.g., in the instance pool 2022 of FIG. 20). In some embodiments, the secondary vNIC 1960 may be configured during specialization of the secure shell instance 1950 (e.g., as by the session manager service, the instance manager service, and/or other core cloud resources). The secondary vNIC 1960 may be configured with security rules to permitting outgoing messages from the secure shell instance 1950, for example, addressed to the shell subnet 1970. For example, the secure shell subnet 1950 may transmit the output via the secondary vNIC 1960 (e.g., operation 2116) and may direct a message containing the output to the shell subnet 1970 (e.g., operation 2118). In this way, the example technique 2100 may include implementing the primary vNIC 1940 as the ingress point for communications to the secure shell instance 1950 and the secondary vNIC 1960 as a separate egress point for communications from the secure shell instance 1950.

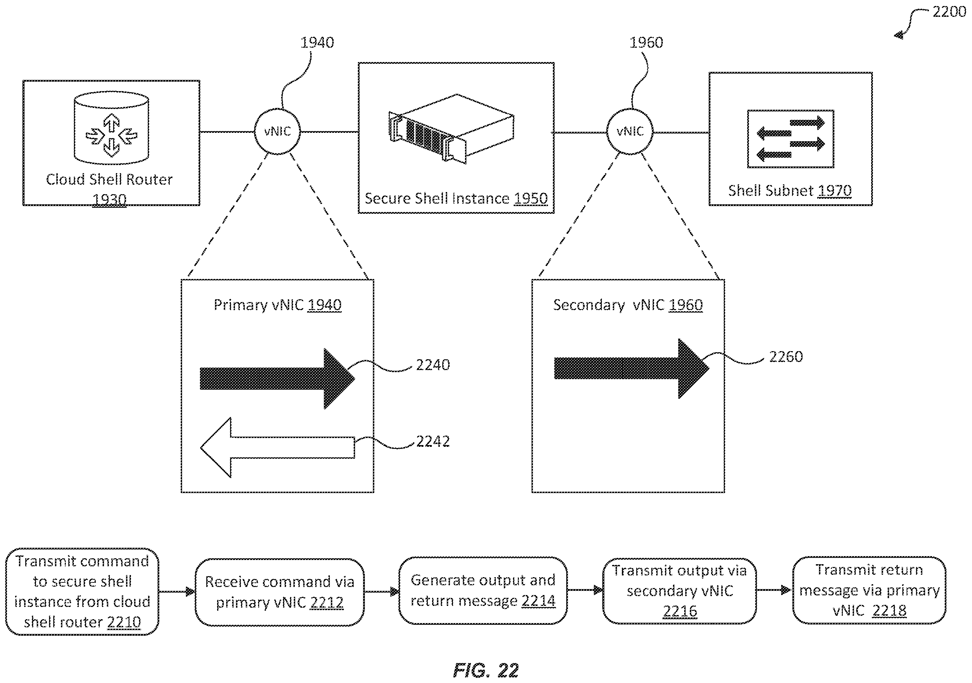

FIG. 22 illustrates an example technique 2200 using a first network interface for bi-directional communication with a secure shell instance, in accordance with one or more embodiments. The secure shell instance 1950 may be configured (e.g., during setup and/or specialization) to send messages via both the primary virtual network access card 1940 (vNIC) and the secondary vNIC 1960, albeit according to a defined approach to provide secure communications and potentially reduce the risk of breach.

In some embodiments, the primary vNIC 1940 may include security rules that define a blanket prohibition on all outgoing messages from the secure shell instance 1950 (e.g., an ingress-only rule without exceptions). By contrast, the security rules may define a type of communication, a destination of communications, or other exceptions to the security rules. For example, the primary vNIC 1940 may be configured to permit transmission of return messages from the secure shell instance 1950 to the cloud shell router 1930 that are addressed to a user device (e.g., user device 1920 of FIG. 19). Such return messages may include status information of the operations, (e.g., completed, aborted, terminated, etc.), and may include other return information request by the user device as part of the command.

As an illustrative example, the secure shell instance 1950 may send messages by two different paths depending on the type and/or destination of the messages. In this example, the cloud shell router 1930 transmits the command to the secure shell router (e.g., operation 2210) and the secure shell instance 1950 receives the command from the cloud shell router 1930 via the primary vNIC 1940 (e.g., operation 2212). The secure shell instance 1950 may execute the operations indicated by the command and may generate output and a return message (e.g., operation 2214). As described in reference to FIG. 21, above, the secure shell instance 1950 may send the output as a message addressed to the shell subnet 1970 via the secondary vNIC 1960 (e.g., operation 2216). By contrast, the secure shell instance 1950 may send the return message by a different path, via the primary vNIC 1940, back to the cloud shell router 1930 (e.g., operation 2218).

Configuring the primary vNIC 1940 to permit return messages may provide additional security to the system implementing example technique 2200. For example, return messages including status information may be used by core cloud services to track and manage resource usage by the secure shell instance 1950. Furthermore, configuring the secure shell instance 1950 to send return messages to the cloud shell router 1930, rather than the shell subnet 1970 may potentially reduce the risk of the secure shell instance being commandeered by an external system, were the shell subnet 1970 to be compromised, at least in part if the external system cannot receive feedback that permits it to replace the owner of the secure shell instance 1950.

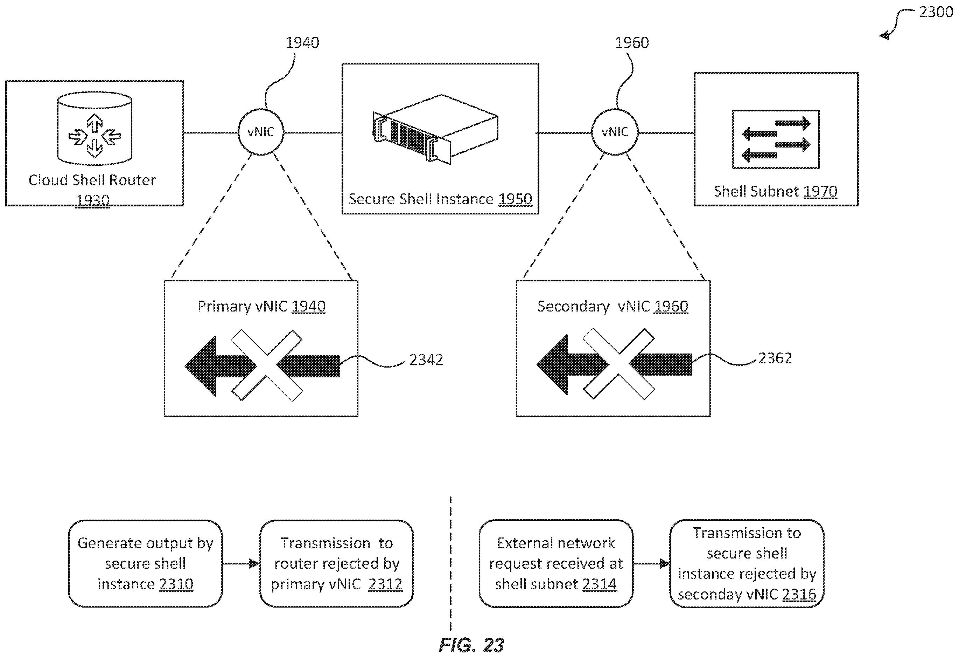

FIG. 23 illustrates an example technique 2300 for unidirectional communication with a secure shell instance, in accordance with one or more embodiments. The corollary of the security rules described in reference to FIGS. 21-4, above, may include that the secure shell instance 1950 may be limited in the type and manner of communication it may be configured to implement with regard to output from operations it executes.

In some embodiments, the primary virtual network interface card 1940 (vNIC) may be configured with security rules that do not permit output messages from the secure shell instance 1950 to be sent via the primary vNIC 1940. This may be implemented to control access from the secure shell instance 1950, which may run on a compute isolation virtual cloud network (VCN) (e.g., compute isolation VCN 2020 of FIG. 20), to core cloud services running on a service VCN (e.g., service VCN 2010 of FIG. 20). While some types of messages may be permitted (e.g., return messages), as described in more detail in reference to FIG. 22, above, output messages, which may include additional and/or alternative types of messages (e.g., execute commands, data transformation instructions, input-output operation instructions, etc.). Limiting the type of communications permitted by the primary vNIC 1940 may, therefore, potentially reduce the risk of breaching the service VCN or core cloud services by the secure shell instance 1950.

In an illustrative example, the primary vNIC 1940 may be configured to be ingress-only with respect to output messages from the secure shell instance 1950. As such, when the secure shell instance 1950 executes the command from a user device (e.g., user device 1920 of FIG. 19) and generates output (e.g., operation 2310), a transmission of the output addressed to the cloud shell router 1930 may be rejected by the primary vNIC 1940 (e.g., operation 2312). Rejection by the primary vNIC 1940 may describe any number of logical operations that prevent the output message from being sent to the cloud shell router 1930 and/or any other component systems of the service VCN. For example, the security rules may blacklist specific destinations by address (e.g., MAC address).

In some embodiments, the secondary vNIC 1960 may be configured with security rules that do not permit the secure shell instance 1950 to receive network traffic via the secondary vNIC 1960. This may be implemented to control access to the secure shell instance 1950 by the shell subnet 1970 which may communicate with the internet, and, as such, may be at risk of attack by external systems. The security rules implemented as part of configuring the secondary vNIC 1960 may include a blanket limitation on all inbound communications from the shell subnet 1970 or any other IaaS system to the secure shell instance. Alternatively, types of communication, sources, or specific messages may be permitted as part of configuring the secondary vNIC 1960 (e.g., whitelisting).

In an illustrative example, the secondary vNIC 1960 may be configured to be egress-only with respect to communications to the secure shell instance 1950. In this example, an external network request may be received at the shell subnet 1970 (e.g., operation 2314). The external network request may be an instruction for the shell subnet 1970 to send a command to the secure shell instance 1950 (for example, to read data stored in a block volume system attached to the secure shell instance 1950). The secondary vNIC 1960, being configured for egress-only in this example, may be limited to unidirectional communication, permitting the secure shell instance 1950 to send output messages via the secondary vNIC but may reject the external network request from the shell subnet 1970 (e.g., operation 2316).

In some embodiments, the secondary vNIC 1960 may similarly reject any incoming message even when received from other origins. For example, the MAC address of the secondary vNIC 1960 may be discovered by an external system, which may attempt to address the secondary vNIC 1960 directly. Egress-only security configuration may similarly protect the secure shell instance 1950 from such attempts.

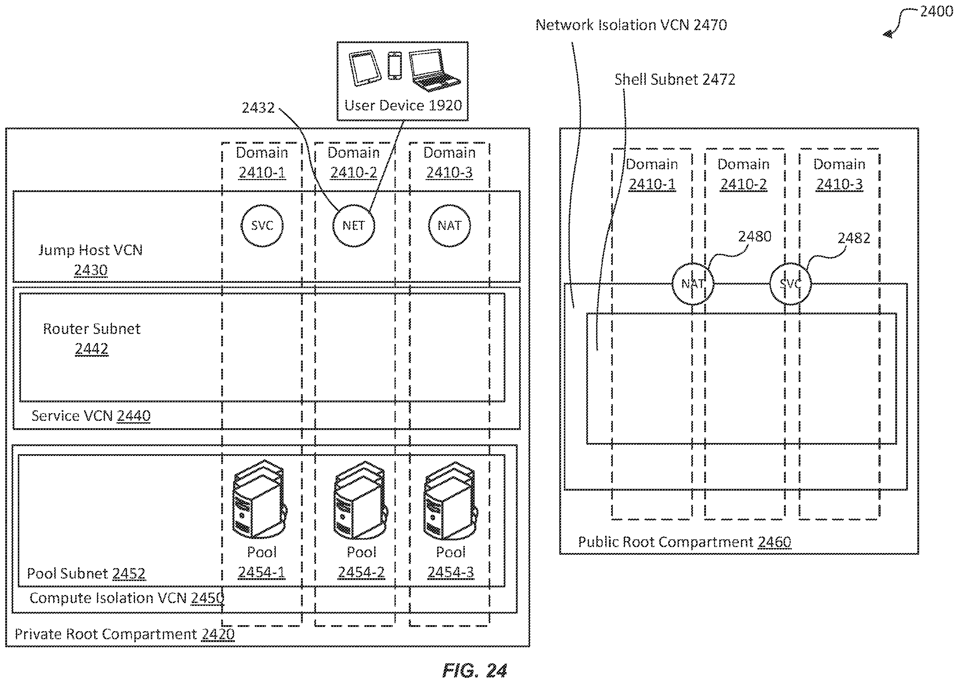

FIG. 24 illustrates an example system 2400 for managing communication of a secure shell instance in a regional cloud system, in accordance with one or more embodiments. The techniques described in reference to the previous figures may be implemented in a regional IaaS system. Regional IaaS systems may include multiple domains 2410, where a domain may be an IaaS identifier corresponding to a data center, being a physical installation of computer hardware configured to operate the IaaS system (e.g., servers, network infrastructure, etc.). Some components of the example system 2400 may be regional, while others may be domain specific. Implementing a regional system may potentially reduce system overhead and reduce the demand on system resources attributed to the use of multiple communication points (e.g., ingress points and egress points). Furthermore, implementing unified communication resources may provide improved security, by limiting the number of access points to secure shell instances and core cloud services.

In some embodiments, as described in more detail in reference to FIG. 20, the example system 2400 may include two or more root compartments, associated with different blocks of IP addresses. For example, a private root compartment 2420 may include a regional jump host virtual cloud network (VCN) 2430, a regional service VCN 2440, and a regional compute isolation VCN 2450. Similarly, a public root compartment 2460 may include a regional network isolation VCN 2470 configured to connect to an external network (e.g., external network 1980 of FIG. 19) via a regional network address translation (NAT) gateway 2480, and to core cloud services via a regional service gateway 2482.

In some embodiments, the jump host VCN 2430 may be include a regional network gateway 2432 (NET), which may permit network traffic between the constituent networks of the private root compartment 2420 with external networks (e.g., the internet, a private user network, etc.). For example, a command may be received from the user device 1920 via the regional network gateway 2432. In some embodiments, the jump host VCN 2430 may be configured to send the command to a regional router subnet 2442 running on the regional service VCN 2440. The regional router subnet 2442 may direct the command to the pool subnet 2452, addressed to a secure shell instance (e.g., secure shell instance 1950 of FIG. 19) running in a pool of instances 2454. In some embodiments, each domain 2410 may include a pool of instances 2454, running on the pool subnet 2452. The pools 2454 may, in turn, include multiple secure shell instances associated with secure shells created for users of the IaaS secure shell service. Each secure shell instance may include multiple virtual network interface cards (vNICs), as described in more detail in reference to the preceding figures.

In some embodiments, output messages from instances running on the pool subnet 2452 in the compute isolation VCN 2450 may be directed to the regional shell subnet 2472 running on the network isolation VCN 2470. By contrast, return messages, addressed to user devices, may be directed to the router subnet 2442 running on the service VCN 2440. The regional subnets may direct the messages to the external addressees via the appropriate gateways.

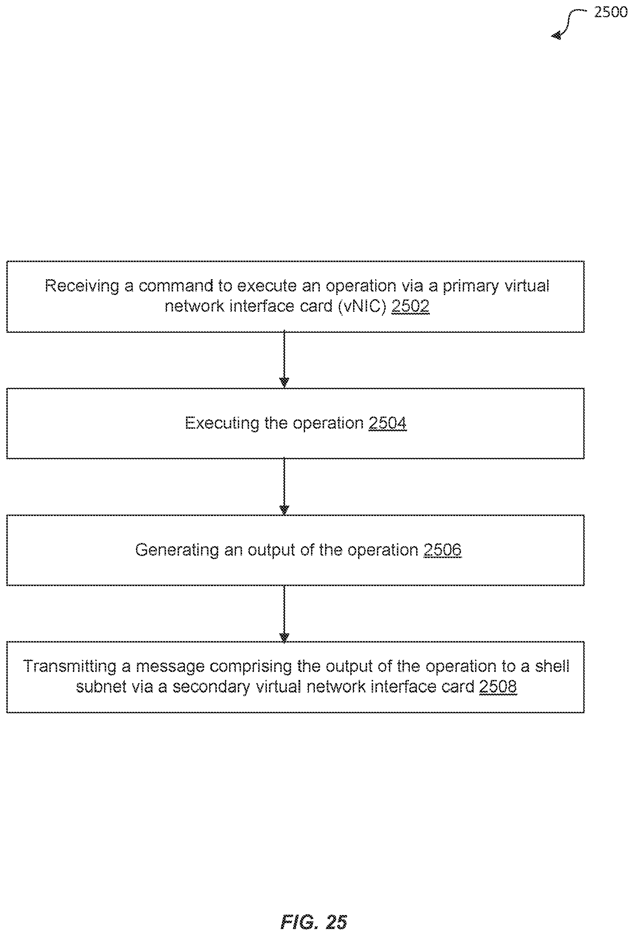

FIG. 25 illustrates an example flow 2500 for utilizing multiple network interfaces for a secure shell instance, in accordance with one or more embodiments. The operations of the flow can be implemented as hardware circuitry and/or stored as computer-readable instructions on a non-transitory computer-readable medium of a computer system, such as the secure shell instance 1950 of FIG. 19. As implemented, the instructions represent modules that include circuitry or code executable by a processor(s) of the computer system. The execution of such instructions configures the computer system to perform the specific operations described herein. Each circuitry or code in combination with the processor performs the respective operation(s). While the operations are illustrated in a particular order, it should be understood that no particular order is necessary and that one or more operations may be omitted, skipped, and/or reordered.

In an example, the flow 2500 includes an operation 2502, where the computer system receives a command to execute an operation via a primary virtual network interface card (vNIC). As described in more detail in reference to FIG. 19 and FIGS 21-4, above, the primary vNIC (e.g., primary vNIC 1940 of FIG. 19) may be configured during the creation and/or specialization of the secure cloud instance (e.g., secure cloud instance 1950 of FIG. 19) with security rules. The security rules may control network traffic to the secure shell instance, such that the primary vNIC may be configured to be ingress-only with respect to one or more types of network traffic. For example, the primary vNIC may be configured to limit network traffic between the secure shell instance and external systems (e.g., core cloud services, external network devices, etc.) such that the secure shell instance may receive incoming traffic via the primary vNIC, but may not send outgoing traffic via the primary vNIC.

In an example, the flow 2500 includes an operation 2504, where the computer system executes the operation. The secure shell instance may be a virtual machine (VM), hosted on a virtual cloud network (VCN), as described in more detail in reference to FIG. 20, above. As such, the secure shell instance may include compute resources (e.g., cores, threads, etc.) and may include data storage (e.g., block volumes, etc.). In some cases, the secure shell instance may be configured to execute commands received via a secure shell (e.g., a terminal, bash shell, etc.) created to securely connect a user of a user device (e.g., user device 1920 of FIG. 19) to the secure shell instance, for example, over an encrypted connection (e.g., a WebSocket Secure connection).

In an example, the flow 2500 includes an operation 2506, where the computer system generates an output of the operation. In some embodiments, the output may include moving data, sending requested information, and/or other types of output from the secure shell instance. Considering that such output may include confidential information, implementing network traffic controls may potentially reduce the risk of misdirecting the output to an unauthorized addressee.

In an example, the flow 2500 includes an operation 2508, where the computer system transmits a message comprising the output of the operation to a shell subnet via a secondary virtual network interface card (e.g., secondary vNIC 1960 of FIG. 19). The secondary vNIC may be configured with security rules defining a unidirectional limitation on network traffic, for example, for sending output from the secure shell instance to a shell subnet (e.g., shell subnet 1970). As described in more detail in reference to FIG. 20, the shell subnet and the secure shell instance may run in different VCNs, isolated from one another, which may potentially improve communication security.

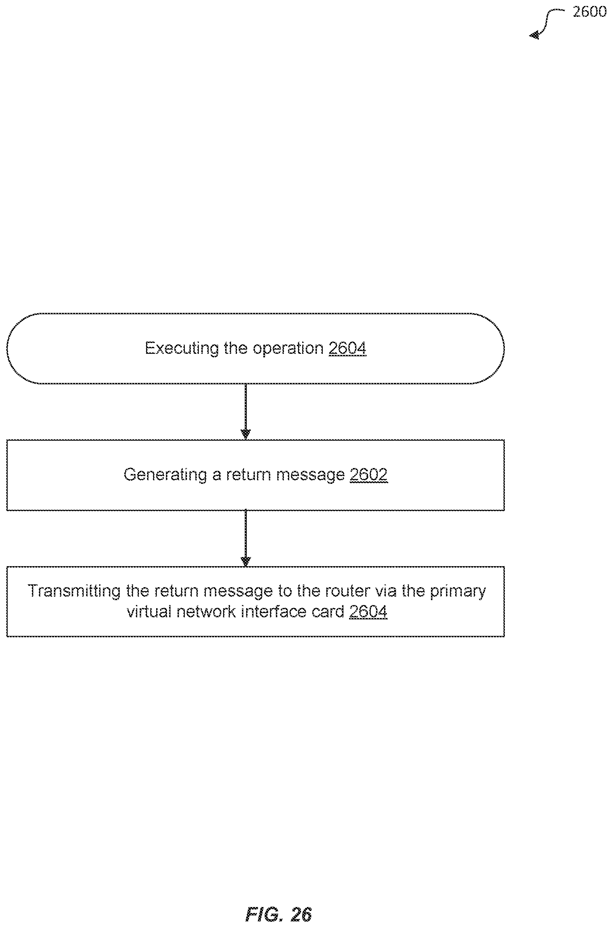

FIG. 26 illustrates an example flow 2600 for bi-directional communication with a secure shell instance using a network interface, in accordance with one or more embodiments. The operations of the flow can be implemented as hardware circuitry and/or stored as computer-readable instructions on a non-transitory computer-readable medium of a computer system, such as the secure shell instance 1950 of FIG. 19. As implemented, the instructions represent modules that include circuitry or code executable by a processor(s) of the computer system. The execution of such instructions configures the computer system to perform the specific operations described herein. Each circuitry or code in combination with the processor performs the respective operation(s). While the operations are illustrated in a particular order, it should be understood that no particular order is necessary and that one or more operations may be omitted, skipped, and/or reordered.

In an example, the flow 2600 begins following operation 2504 of FIG. 25, where the computer system executes the operation. In particular, the computer system (e.g., the secure shell instance 1950 of FIG. 19), may implement one or more operations associated with communication of operation output as described in reference to the operations described in FIG. 26.

In an example, the flow 2600 includes an operation 2602, where the computer system generates a return message for the user device. as described in more detail in reference to FIG. 19 and FIG. 22, the secure shell instance may generate a return message as part of executing the operation. The return message may be a message for the user device (e.g., user device 1920 of FIG. 19). For example, the return message may be a confirmation, a status, or a checkbit, that may have been included as part of the command received from the user device.

In an example, the flow 2600 includes an operation 2604, where the computer system transmits the return message to the router via the primary virtual network interface card (e.g., primary vNIC 1940 of FIG. 19). As described in more detail in reference to FIG. 22, the primary vNIC may be configured for unidirectional network traffic, allowing inbound traffic to reach the secure shell instance, but not allowing outbound traffic from the secure shell instance to the IaaS services (e.g., the cloud shell router 1930 of FIG. 19). In some embodiments, the primary vNIC may be configured to permit the return message to be sent to the cloud shell router, to be sent to the user device via one or more elements running in the service VCN (e.g., service VCN 2010 of FIG. 20)

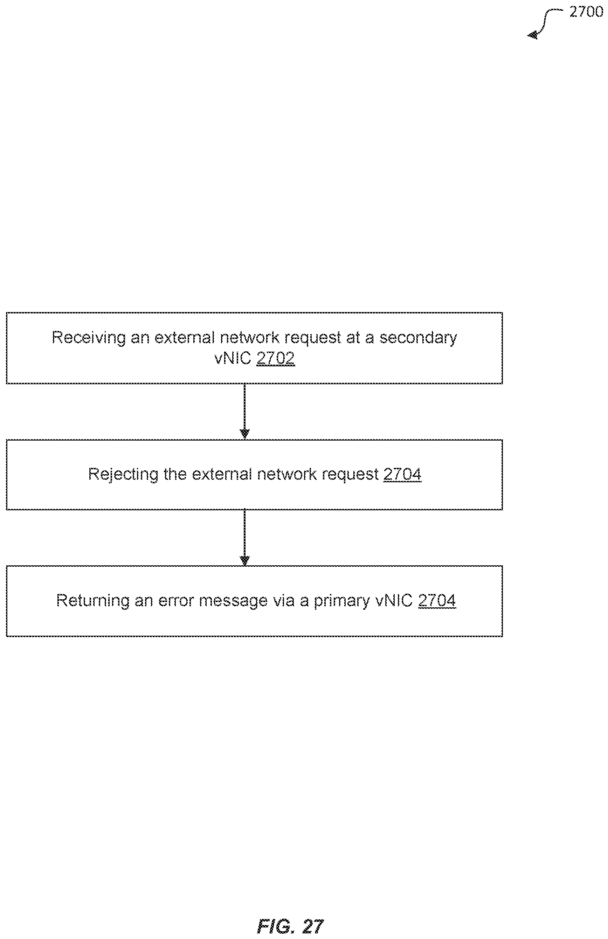

FIG. 27 illustrates an example flow 2700 for bi-directional communication with a secure shell instance using a network interface, in accordance with one or more embodiments. The operations of the flow can be implemented as hardware circuitry and/or stored as computer-readable instructions on a non-transitory computer-readable medium of a computer system, such as the secure shell instance 1950 of FIG. 19. As implemented, the instructions represent modules that include circuitry or code executable by a processor(s) of the computer system. The execution of such instructions configures the computer system to perform the specific operations described herein. Each circuitry or code in combination with the processor performs the respective operation(s). While the operations are illustrated in a particular order, it should be understood that no particular order is necessary and that one or more operations may be omitted, skipped, and/or reordered.

In an example, the flow 2700 includes an operation 2702, where the computer system receives an external network request via a secondary virtual network interface card (vNIC). As described in more detail in reference to the preceding paragraphs, the secondary vNIC (e.g., secondary vNIC 1960 of Fig. 19) may be configured for unidirectional network traffic from the secure shell instance (e.g., through configuration of security rules during setup of the secure shell instance). As such, in cases where an external network request reaches the secondary vNIC, it may be that the request is unauthorized or was erroneously addressed to the secondary vNIC.

In an example, the flow 2700 includes an operation 2704, where the computer system rejects the external network request. The secondary vNIC may, in some cases, be configured to reject incoming network requests. For example, the security rules included in the configuration of the secondary vNIC may define the secondary vNIC as unidirectional without exception.

In an example, the flow 2700 includes an operation 2706, where the computer system returns an error message. In some embodiments, returning an error message may be accompanied by storing identifier information describing the external network request (e.g., username, login credentials, IP address, etc.) for potential use by IaaS security services. For example, an audit of unauthorized inbound network traffic may help to identify whether one or more IaaS services and/or user instances may have been compromised. In some embodiments, the error message may be directed to an IaaS security service directly, for example, as a notification that an unauthorized inbound request was received at the secondary vNIC (being egress-only).

As noted above, infrastructure as a service (IaaS) is one particular type of cloud computing. IaaS can be configured to provide virtualized computing resources over a public network (e.g., the Internet). In an IaaS model, a cloud computing provider can host the infrastructure components (e.g., servers, storage devices, network nodes (e.g., hardware), deployment software, platform virtualization (e.g., a hypervisor layer), or the like). In some cases, an IaaS provider may also supply a variety of services to accompany those infrastructure components (e.g., billing, monitoring, logging, security, load balancing and clustering, etc.). Thus, as these services may be policy-driven, IaaS users may be able to implement policies to drive load balancing to maintain application availability and performance.

In some instances, IaaS customers may access resources and services through a wide area network (WAN), such as the Internet, and can use the cloud provider's services to install the remaining elements of an application stack. For example, the user can log in to the IaaS platform to create virtual machines (VMs), install operating systems (OSs) on each VM, deploy middleware such as databases, create storage buckets for workloads and backups, and even install enterprise software into that VM. Customers can then use the provider's services to perform various functions, including balancing network traffic, troubleshooting application issues, monitoring performance, managing disaster recovery, etc.

In most cases, a cloud computing model will require the participation of a cloud provider. The cloud provider may, but need not be, a third-party service that specializes in providing (e.g., offering, renting, selling) IaaS. An entity might also opt to deploy a private cloud, becoming its own provider of infrastructure services.

In some examples, IaaS deployment is the process of putting a new application, or a new version of an application, onto a prepared application server or the like. It may also include the process of preparing the server (e.g., installing libraries, daemons, etc.). This is often managed by the cloud provider, below the hypervisor layer (e.g., the servers, storage, network hardware, and virtualization). Thus, the customer may be responsible for handling (OS), middleware, and/or application deployment (e.g., on self-service virtual machines (e.g., that can be spun up on demand) or the like.

In some examples, IaaS provisioning may refer to acquiring computers or virtual hosts for use, and even installing needed libraries or services on them. In most cases, deployment does not include provisioning, and the provisioning may need to be performed first.

In some cases, there are two different problems for IaaS provisioning. First, there is the initial challenge of provisioning the initial set of infrastructure before anything is running. Second, there is the challenge of evolving the existing infrastructure (e.g., adding new services, changing services, removing services, etc.) once everything has been provisioned. In some cases, these two challenges may be addressed by enabling the configuration of the infrastructure to be defined declaratively. In other words, the infrastructure (e.g., what components are needed and how they interact) can be defined by one or more configuration files. Thus, the overall topology of the infrastructure (e.g., what resources depend on which, and how they each work together) can be described declaratively. In some instances, once the topology is defined, a workflow can be generated that creates and/or manages the different components described in the configuration files.

In some examples, an infrastructure may have many interconnected elements. For example, there may be one or more virtual private clouds (VPCs) (e.g., a potentially on-demand pool of configurable and/or shared computing resources), also known as a core network. In some examples, there may also be one or more security group rules provisioned to define how the security of the network will be set up and one or more virtual machines (VMs). Other infrastructure elements may also be provisioned, such as a load balancer, a database, or the like. As more and more infrastructure elements are desired and/or added, the infrastructure may incrementally evolve.

In some instances, continuous deployment techniques may be employed to enable deployment of infrastructure code across various virtual computing environments. Additionally, the described techniques can enable infrastructure management within these environments. In some examples, service teams can write code that is desired to be deployed to one or more, but often many, different production environments (e.g., across various different geographic locations, sometimes spanning the entire world). However, in some examples, the infrastructure on which the code will be deployed must first be set up. In some instances, the provisioning can be done manually, a provisioning tool may be utilized to provision the resources, and/or deployment tools may be utilized to deploy the code once the infrastructure is provisioned.

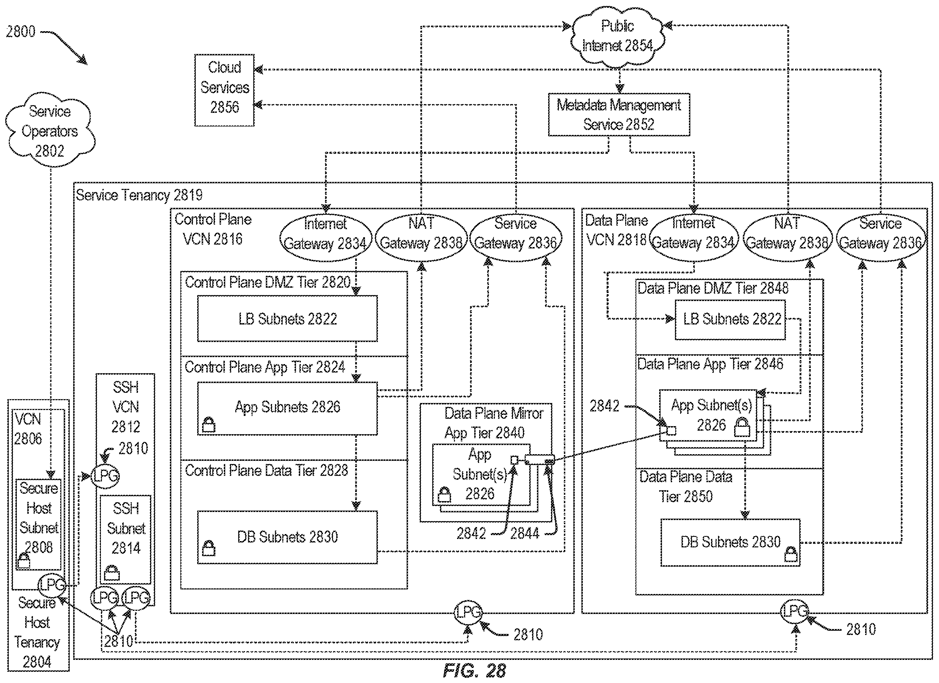

FIG. 28 is a block diagram 2800 illustrating an example pattern of an IaaS architecture, according to at least one embodiment. Service operators 2802 can be communicatively coupled to a secure host tenancy 2804 that can include a virtual cloud network (VCN) 2806 and a secure host subnet 2808. In some examples, the service operators 2802 may be using one or more client computing devices, which may be portable handheld devices (e.g., an iPhone^{®}, cellular telephone, an iPad^{®}, computing tablet, a personal digital assistant (PDA)) or wearable devices (e.g., a Google Glass^{®} head mounted display), running software such as Microsoft Windows Mobile^{®}, and/or a variety of mobile operating systems such as iOS, Windows Phone, Android, BlackBerry 8, Palm OS, and the like, and being Internet, e-mail, short message service (SMS), Blackberry^{®}, or other communication protocol enabled. Alternatively, the client computing devices can be general purpose personal computers including, by way of example, personal computers and/or laptop computers running various versions of Microsoft Windows^{®}, Apple Macintosh^{®}, and/or Linux operating systems. The client computing devices can be workstation computers running any of a variety of commercially-available UNIX^{®} or UNIX-like operating systems, including without limitation the variety of GNU/Linux operating systems, such as for example, Google Chrome OS. Alternatively, or in addition, client computing devices may be any other electronic device, such as a thin-client computer, an Internet-enabled gaming system (e.g., a Microsoft Xbox gaming console with or without a Kinect^{®} gesture input device), and/or a personal messaging device, capable of communicating over a network that can access the VCN 2806 and/or the Internet.

The VCN 2806 can include a local peering gateway (LPG) 2810 that can be communicatively coupled to a secure shell (SSH) VCN 2812 via an LPG 2810 contained in the SSH VCN 2812. The SSH VCN 2812 can include an SSH subnet 2814, and the SSH VCN 2812 can be communicatively coupled to a control plane VCN 2816 via the LPG 2810 contained in the control plane VCN 2816. Also, the SSH VCN 2812 can be communicatively coupled to a data plane VCN 2818 via an LPG 2810. The control plane VCN 2816 and the data plane VCN 2818 can be contained in a service tenancy 2819 that can be owned and/or operated by the IaaS provider.

The control plane VCN 2816 can include a control plane demilitarized zone (DMZ) tier 2820 that acts as a perimeter network (e.g., portions of a corporate network between the corporate intranet and external networks). The DMZ-based servers may have restricted responsibilities and help keep security breaches contained. Additionally, the DMZ tier 2820 can include one or more load balancer (LB) subnet(s) 2822, a control plane app tier 2824 that can include app subnet(s) 2826, a control plane data tier 2828 that can include database (DB) subnet(s) 2830 (e.g., frontend DB subnet(s) and/or backend DB subnet(s)). The LB subnet(s) 2822 contained in the control plane DMZ tier 2820 can be communicatively coupled to the app subnet(s) 2826 contained in the control plane app tier 2824 and an Internet gateway 2834 that can be contained in the control plane VCN 2816, and the app subnet(s) 2826 can be communicatively coupled to the DB subnet(s) 2830 contained in the control plane data tier 2828 and a service gateway 2836 and a network address translation (NAT) gateway 2838. The control plane VCN 2816 can include the service gateway 2836 and the NAT gateway 2838.

The control plane VCN 2816 can include a data plane mirror app tier 2840 that can include app subnet(s) 2826. The app subnet(s) 2826 contained in the data plane mirror app tier 2840 can include a virtual network interface controller (VNIC) 2842 that can execute a compute instance 2844. The compute instance 2844 can communicatively couple the app subnet(s) 2826 of the data plane mirror app tier 2840 to app subnet(s) 2826 that can be contained in a data plane app tier 2846.

The data plane VCN 2818 can include the data plane app tier 2846, a data plane DMZ tier 2848, and a data plane data tier 2850. The data plane DMZ tier 2848 can include LB subnet(s) 2822 that can be communicatively coupled to the app subnet(s) 2826 of the data plane app tier 2846 and the Internet gateway 2834 of the data plane VCN 2818. The app subnet(s) 2826 can be communicatively coupled to the service gateway 2836 of the data plane VCN 2818 and the NAT gateway 2838 of the data plane VCN 2818. The data plane data tier 2850 can also include the DB subnet(s) 2830 that can be communicatively coupled to the app subnet(s) 2826 of the data plane app tier 2846.

The Internet gateway 2834 of the control plane VCN 2816 and of the data plane VCN 2818 can be communicatively coupled to a metadata management service 2852 that can be communicatively coupled to public Internet 2854. Public Internet 2854 can be communicatively coupled to the NAT gateway 2838 of the control plane VCN 2816 and of the data plane VCN 2818. The service gateway 2836 of the control plane VCN 2816 and of the data plane VCN 2818 can be communicatively couple to cloud services 2856.

In some examples, the service gateway 2836 of the control plane VCN 2816 or of the data plan VCN 2818 can make application programming interface (API) calls to cloud services 2856 without going through public Internet 2854. The API calls to cloud services 2856 from the service gateway 2836 can be one-way: the service gateway 2836 can make API calls to cloud services 2856, and cloud services 2856 can send requested data to the service gateway 2836. But, cloud services 2856 may not initiate API calls to the service gateway 2836.

In some examples, the secure host tenancy 2804 can be directly connected to the service tenancy 2819, which may be otherwise isolated. The secure host subnet 2808 can communicate with the SSH subnet 2814 through an LPG 2810 that may enable two-way communication over an otherwise isolated system. Connecting the secure host subnet 2808 to the SSH subnet 2814 may give the secure host subnet 2808 access to other entities within the service tenancy 2819.

The control plane VCN 2816 may allow users of the service tenancy 2819 to set up or otherwise provision desired resources. Desired resources provisioned in the control plane VCN 2816 may be deployed or otherwise used in the data plane VCN 2818. In some examples, the control plane VCN 2816 can be isolated from the data plane VCN 2818, and the data plane mirror app tier 2840 of the control plane VCN 2816 can communicate with the data plane app tier 2846 of the data plane VCN 2818 via VNICs 2842 that can be contained in the data plane mirror app tier 2840 and the data plane app tier 2846.

In some examples, users of the system, or customers, can make requests, for example create, read, update, or delete (CRUD) operations, through public Internet 2854 that can communicate the requests to the metadata management service 2852. The metadata management service 2852 can communicate the request to the control plane VCN 2816 through the Internet gateway 2834. The request can be received by the LB subnet(s) 2822 contained in the control plane DMZ tier 2820. The LB subnet(s) 2822 may determine that the request is valid, and in response to this determination, the LB subnet(s) 2822 can transmit the request to app subnet(s) 2826 contained in the control plane app tier 2824. If the request is validated and requires a call to public Internet 2854, the call to public Internet 2854 may be transmitted to the NAT gateway 2838 that can make the call to public Internet 2854. Memory that may be desired to be stored by the request can be stored in the DB subnet(s) 2830.

In some examples, the data plane mirror app tier 2840 can facilitate direct communication between the control plane VCN 2816 and the data plane VCN 2818. For example, changes, updates, or other suitable modifications to configuration may be desired to be applied to the resources contained in the data plane VCN 2818. Via a VNIC 2842, the control plane VCN 2816 can directly communicate with, and can thereby execute the changes, updates, or other suitable modifications to configuration to, resources contained in the data plane VCN 2818.

In some embodiments, the control plane VCN 2816 and the data plane VCN 2818 can be contained in the service tenancy 2819. In this case, the user, or the customer, of the system may not own or operate either the control plane VCN 2816 or the data plane VCN 2818. Instead, the IaaS provider may own or operate the control plane VCN 2816 and the data plane VCN 2818, both of which may be contained in the service tenancy 2819. This embodiment can enable isolation of networks that may prevent users or customers from interacting with other users', or other customers', resources. Also, this embodiment may allow users or customers of the system to store databases privately without needing to rely on public Internet 2854, which may not have a desired level of security, for storage.

In other embodiments, the LB subnet(s) 2822 contained in the control plane VCN 2816 can be configured to receive a signal from the service gateway 2836. In this embodiment, the control plane VCN 2816 and the data plane VCN 2818 may be configured to be called by a customer of the IaaS provider without calling public Internet 2854. Customers of the IaaS provider may desire this embodiment since database(s) that the customers use may be controlled by the IaaS provider and may be stored on the service tenancy 2819, which may be isolated from public Internet 2854.

FIG. 29 is a block diagram 2900 illustrating another example pattern of an IaaS architecture, according to at least one embodiment. Service operators 2902 (e.g. service operators 2802 of FIG. 28) can be communicatively coupled to a secure host tenancy 2904 (e.g. the secure host tenancy 2804 of FIG. 28) that can include a virtual cloud network (VCN) 2906 (e.g. the VCN 2806 of FIG. 28) and a secure host subnet 2908 (e.g. the secure host subnet 2808 of FIG. 28). The VCN 2906 can include a local peering gateway (LPG) 2910 (e.g. the LPG 2810 of FIG. 28) that can be communicatively coupled to a secure shell (SSH) VCN 2912 (e.g. the SSH VCN 2812 of FIG. 28) via an LPG 2810 contained in the SSH VCN 2912. The SSH VCN 2912 can include an SSH subnet 2914 (e.g. the SSH subnet 2814 of FIG. 28), and the SSH VCN 2912 can be communicatively coupled to a control plane VCN 2916 (e.g. the control plane VCN 2816 of FIG. 28) via an LPG 2910 contained in the control plane VCN 2916. The control plane VCN 2916 can be contained in a service tenancy 2919 (e.g. the service tenancy 2819 of FIG. 28), and the data plane VCN 2918 (e.g. the data plane VCN 2818 of FIG. 28) can be contained in a customer tenancy 2921 that may be owned or operated by users, or customers, of the system.

The control plane VCN 2916 can include a control plane DMZ tier 2920 (e.g. the control plane DMZ tier 2820 of FIG. 28) that can include LB subnet(s) 2922 (e.g. LB subnet(s) 2822 of FIG. 28), a control plane app tier 2924 (e.g. the control plane app tier 2824 of FIG. 28) that can include app subnet(s) 2926 (e.g. app subnet(s) 2826 of FIG. 28), a control plane data tier 2928 (e.g. the control plane data tier 2828 of FIG. 28) that can include database (DB) subnet(s) 2930 (e.g. similar to DB subnet(s) 2830 of FIG. 28). The LB subnet(s) 2922 contained in the control plane DMZ tier 2920 can be communicatively coupled to the app subnet(s) 2926 contained in the control plane app tier 2924 and an Internet gateway 2934 (e.g. the Internet gateway 2834 of FIG. 28) that can be contained in the control plane VCN 2916, and the app subnet(s) 2926 can be communicatively coupled to the DB subnet(s) 2930 contained in the control plane data tier 2928 and a service gateway 2936 (e.g. the service gateway of FIG. 28) and a network address translation (NAT) gateway 2938 (e.g. the NAT gateway 2838 of FIG. 28). The control plane VCN 2916 can include the service gateway 2936 and the NAT gateway 2938.

The control plane VCN 2916 can include a data plane mirror app tier 2940 (e.g. the data plane mirror app tier 2840 of FIG. 28) that can include app subnet(s) 2926. The app subnet(s) 2926 contained in the data plane mirror app tier 2940 can include a virtual network interface controller (VNIC) 2942 (e.g. the VNIC of 2842) that can execute a compute instance 2944 (e.g. similar to the compute instance 2844 of FIG. 28). The compute instance 2944 can facilitate communication between the app subnet(s) 2926 of the data plane mirror app tier 2940 and the app subnet(s) 2926 that can be contained in a data plane app tier 2946 (e.g. the data plane app tier 2846 of FIG. 28) via the VNIC 2942 contained in the data plane mirror app tier 2940 and the VNIC 2942 contained in the data plan app tier 2946.

The Internet gateway 2934 contained in the control plane VCN 2916 can be communicatively coupled to a metadata management service 2952 (e.g. the metadata management service 2852 of FIG. 28) that can be communicatively coupled to public Internet 2954 (e.g. public Internet 2854 of FIG. 28). Public Internet 2954 can be communicatively coupled to the NAT gateway 2938 contained in the control plane VCN 2916. The service gateway 2936 contained in the control plane VCN 2916 can be communicatively couple to cloud services 2956 (e.g. cloud services 2856 of FIG. 28).

In some examples, the data plane VCN 2918 can be contained in the customer tenancy 2921. In this case, the IaaS provider may provide the control plane VCN 2916 for each customer, and the IaaS provider may, for each customer, set up a unique compute instance 2944 that is contained in the service tenancy 2919. Each compute instance 2944 may allow communication between the control plane VCN 2916, contained in the service tenancy 2919, and the data plane VCN 2918 that is contained in the customer tenancy 2921. The compute instance 2944 may allow resources, that are provisioned in the control plane VCN 2916 that is contained in the service tenancy 2919, to be deployed or otherwise used in the data plane VCN 2918 that is contained in the customer tenancy 2921.

In other examples, the customer of the IaaS provider may have databases that live in the customer tenancy 2921. In this example, the control plane VCN 2916 can include the data plane mirror app tier 2940 that can include app subnet(s) 2926. The data plane mirror app tier 2940 can reside in the data plane VCN 2918, but the data plane mirror app tier 2940 may not live in the data plane VCN 2918. That is, the data plane mirror app tier 2940 may have access to the customer tenancy 2921, but the data plane mirror app tier 2940 may not exist in the data plane VCN 2918 or be owned or operated by the customer of the IaaS provider. The data plane mirror app tier 2940 may be configured to make calls to the data plane VCN 2918 but may not be configured to make calls to any entity contained in the control plane VCN 2916. The customer may desire to deploy or otherwise use resources in the data plane VCN 2918 that are provisioned in the control plane VCN 2916, and the data plane mirror app tier 2940 can facilitate the desired deployment, or other usage of resources, of the customer.

In some embodiments, the customer of the IaaS provider can apply filters to the data plane VCN 2918. In this embodiment, the customer can determine what the data plane VCN 2918 can access, and the customer may restrict access to public Internet 2954 from the data plane VCN 2918. The IaaS provider may not be able to apply filters or otherwise control access of the data plane VCN 2918 to any outside networks or databases. Applying filters and controls by the customer onto the data plane VCN 2918, contained in the customer tenancy 2921, can help isolate the data plane VCN 2918 from other customers and from public Internet 2954.

In some embodiments, cloud services 2956 can be called by the service gateway 2936 to access services that may not exist on public Internet 2954, on the control plane VCN 2916, or on the data plane VCN 2918. The connection between cloud services 2956 and the control plane VCN 2916 or the data plane VCN 2918 may not be live or continuous. Cloud services 2956 may exist on a different network owned or operated by the IaaS provider. Cloud services 2956 may be configured to receive calls from the service gateway 2936 and may be configured to not receive calls from public Internet 2954. Some cloud services 2956 may be isolated from other cloud services 2956, and the control plane VCN 2916 may be isolated from cloud services 2956 that may not be in the same region as the control plane VCN 2916. For example, the control plane VCN 2916 may be located in "Region 1," and cloud service "Deployment 28," may be located in Region 1 and in "Region 2." If a call to Deployment 28 is made by the service gateway 2936 contained in the control plane VCN 2916 located in Region 1, the call may be transmitted to Deployment 28 in Region 1. In this example, the control plane VCN 2916, or Deployment 28 in Region 1, may not be communicatively coupled to, or otherwise in communication with, Deployment 28 in Region 2.

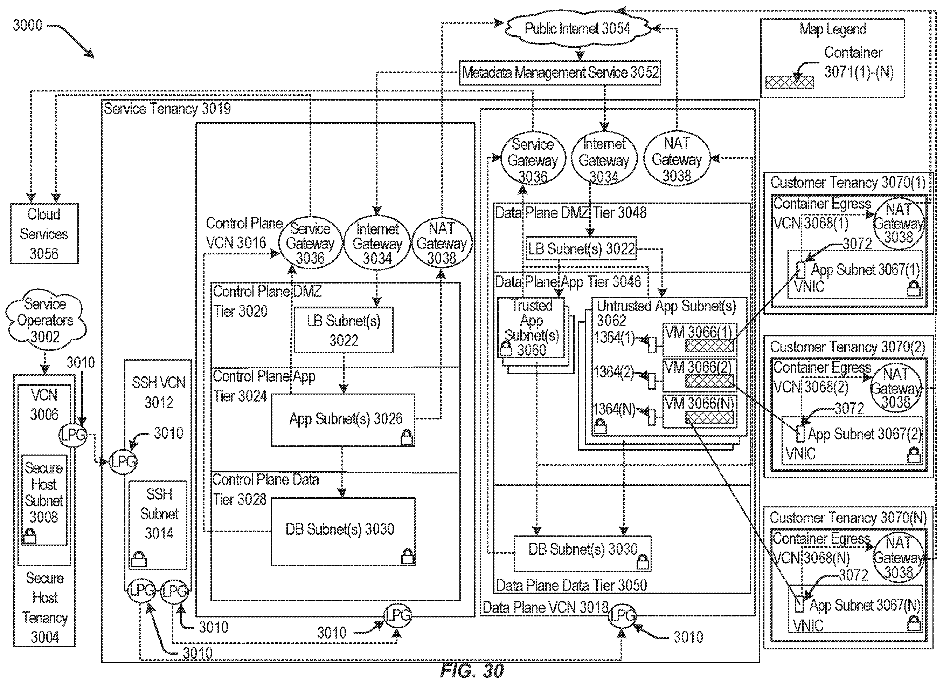

FIG. 30 is a block diagram 3000 illustrating another example pattern of an IaaS architecture, according to at least one embodiment. Service operators 3002 (e.g. service operators 2802 of FIG. 28) can be communicatively coupled to a secure host tenancy 3004 (e.g. the secure host tenancy 2804 of FIG. 28) that can include a virtual cloud network (VCN) 3006 (e.g. the VCN 2806 of FIG. 28) and a secure host subnet 3008 (e.g. the secure host subnet 2808 of FIG. 28). The VCN 3006 can include an LPG 3010 (e.g. the LPG 2810 of FIG. 28) that can be communicatively coupled to an SSH VCN 3012 (e.g. the SSH VCN 2812 of FIG. 28) via an LPG 3010 contained in the SSH VCN 3012. The SSH VCN 3012 can include an SSH subnet 3014 (e.g. the SSH subnet 2814 of FIG. 28), and the SSH VCN 3012 can be communicatively coupled to a control plane VCN 3016 (e.g. the control plane VCN 2816 of FIG. 28) via an LPG 3010 contained in the control plane VCN 3016 and to a data plane VCN 3018 (e.g. the data plane 2818 of FIG. 28) via an LPG 3010 contained in the data plane VCN 3018. The control plane VCN 3016 and the data plane VCN 3018 can be contained in a service tenancy 3019 (e.g. the service tenancy 2819 of FIG. 28).

The control plane VCN 3016 can include a control plane DMZ tier 3020 (e.g. the control plane DMZ tier 2820 of FIG. 28) that can include load balancer (LB) subnet(s) 3022 (e.g. LB subnet(s) 2822 of FIG. 28), a control plane app tier 3024 (e.g. the control plane app tier 2824 of FIG. 28) that can include app subnet(s) 3026 (e.g. similar to app subnet(s) 2826 of FIG. 28), a control plane data tier 3028 (e.g. the control plane data tier 2828 of FIG. 28) that can include DB subnet(s) 3030. The LB subnet(s) 3022 contained in the control plane DMZ tier 3020 can be communicatively coupled to the app subnet(s) 3026 contained in the control plane app tier 3024 and to an Internet gateway 3034 (e.g. the Internet gateway 2834 of FIG. 28) that can be contained in the control plane VCN 3016, and the app subnet(s) 3026 can be communicatively coupled to the DB subnet(s) 3030 contained in the control plane data tier 3028 and to a service gateway 3036 (e.g. the service gateway of FIG. 28) and a network address translation (NAT) gateway 3038 (e.g. the NAT gateway 2838 of FIG. 28). The control plane VCN 3016 can include the service gateway 3036 and the NAT gateway 3038.

The data plane VCN 3018 can include a data plane app tier 3046 (e.g. the data plane app tier 2846 of FIG. 28), a data plane DMZ tier 3048 (e.g. the data plane DMZ tier 2848 of FIG. 28), and a data plane data tier 3050 (e.g. the data plane data tier 2850 of FIG. 28). The data plane DMZ tier 3048 can include LB subnet(s) 3022 that can be communicatively coupled to trusted app subnet(s) 3060 and untrusted app subnet(s) 3062 of the data plane app tier 3046 and the Internet gateway 3034 contained in the data plane VCN 3018. The trusted app subnet(s) 3060 can be communicatively coupled to the service gateway 3036 contained in the data plane VCN 3018, the NAT gateway 3038 contained in the data plane VCN 3018, and DB subnet(s) 3030 contained in the data plane data tier 3050. The untrusted app subnet(s) 3062 can be communicatively coupled to the service gateway 3036 contained in the data plane VCN 3018 and DB subnet(s) 3030 contained in the data plane data tier 3050. The data plane data tier 3050 can include DB subnet(s) 3030 that can be communicatively coupled to the service gateway 3036 contained in the data plane VCN 3018.

The untrusted app subnet(s) 3062 can include one or more primary VNICs 3064(1)-(N) that can be communicatively coupled to tenant virtual machines (VMs) 3066(1)-(N). Each tenant VM 3066(1)-(N) can be communicatively coupled to a respective app subnet 3067(1)-(N) that can be contained in respective container egress VCNs 3068(1)-(N) that can be contained in respective customer tenancies 3070(1)-(N). Respective secondary VNICs 3072(1)-(N) can facilitate communication between the untrusted app subnet(s) 3062 contained in the data plane VCN 3018 and the app subnet contained in the container egress VCNs 3068(1)-(N). Each container egress VCNs 3068(1)-(N) can include a NAT gateway 3038 that can be communicatively coupled to public Internet 3054 (e.g. public Internet 2854 of FIG. 28).

The Internet gateway 3034 contained in the control plane VCN 3016 and contained in the data plane VCN 3018 can be communicatively coupled to a metadata management service 3052 (e.g. the metadata management system 2852 of FIG. 28) that can be communicatively coupled to public Internet 3054. Public Internet 3054 can be communicatively coupled to the NAT gateway 3038 contained in the control plane VCN 3016 and contained in the data plane VCN 3018. The service gateway 3036 contained in the control plane VCN 3016 and contained in the data plane VCN 3018 can be communicatively couple to cloud services 3056.

In some embodiments, the data plane VCN 3018 can be integrated with customer tenancies 3070. This integration can be useful or desirable for customers of the IaaS provider in some cases such as a case that may desire support when executing code. The customer may provide code to run that may be destructive, may communicate with other customer resources, or may otherwise cause undesirable effects. In response to this, the IaaS provider may determine whether to run code given to the IaaS provider by the customer.

In some examples, the customer of the IaaS provider may grant temporary network access to the IaaS provider and request a function to be attached to the data plane tier app 3046. Code to run the function may be executed in the VMs 3066(1)-(N), and the code may not be configured to run anywhere else on the data plane VCN 3018. Each VM 3066(1)-(N) may be connected to one customer tenancy 3070. Respective containers 3071(1)-(N) contained in the VMs 3066(1)-(N) may be configured to run the code. In this case, there can be a dual isolation (e.g., the containers 3071(1)-(N) running code, where the containers 3071(1)-(N) may be contained in at least the VM 3066(1)-(N) that are contained in the untrusted app subnet(s) 3062), which may help prevent incorrect or otherwise undesirable code from damaging the network of the IaaS provider or from damaging a network of a different customer. The containers 3071(1)-(N) may be communicatively coupled to the customer tenancy 3070 and may be configured to transmit or receive data from the customer tenancy 3070. The containers 3071(1)-(N) may not be configured to transmit or receive data from any other entity in the data plane VCN 3018. Upon completion of running the code, the IaaS provider may kill or otherwise dispose of the containers 3071(1)-(N).

In some embodiments, the trusted app subnet(s) 3060 may run code that may be owned or operated by the IaaS provider. In this embodiment, the trusted app subnet(s) 3060 may be communicatively coupled to the DB subnet(s) 3030 and be configured to execute CRUD operations in the DB subnet(s) 3030. The untrusted app subnet(s) 3062 may be communicatively coupled to the DB subnet(s) 3030, but in this embodiment, the untrusted app subnet(s) may be configured to execute read operations in the DB subnet(s) 3030. The containers 3071(1)-(N) that can be contained in the VM 3066(1)-(N) of each customer and that may run code from the customer may not be communicatively coupled with the DB subnet(s) 3030.

In other embodiments, the control plane VCN 3016 and the data plane VCN 3018 may not be directly communicatively coupled. In this embodiment, there may be no direct communication between the control plane VCN 3016 and the data plane VCN 3018. However, communication can occur indirectly through at least one method. An LPG 3010 may be established by the IaaS provider that can facilitate communication between the control plane VCN 3016 and the data plane VCN 3018. In another example, the control plane VCN 3016 or the data plane VCN 3018 can make a call to cloud services 3056 via the service gateway 3036. For example, a call to cloud services 3056 from the control plane VCN 3016 can include a request for a service that can communicate with the data plane VCN 3018.

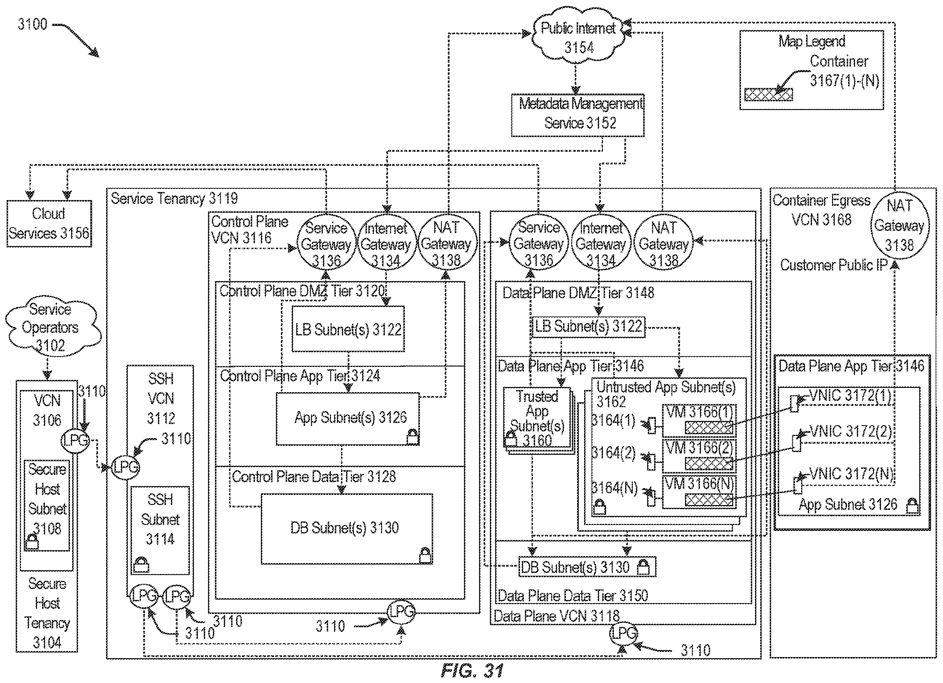

FIG. 31 is a block diagram 3100 illustrating another example pattern of an IaaS architecture, according to at least one embodiment. Service operators 3102 (e.g. service operators 2802 of FIG. 28) can be communicatively coupled to a secure host tenancy 3104 (e.g. the secure host tenancy 2804 of FIG. 28) that can include a virtual cloud network (VCN) 3106 (e.g. the VCN 2806 of FIG. 28) and a secure host subnet 3108 (e.g. the secure host subnet 2808 of FIG. 28). The VCN 3106 can include an LPG 3110 (e.g. the LPG 2810 of FIG. 28) that can be communicatively coupled to an SSH VCN 3112 (e.g. the SSH VCN 2812 of FIG. 28) via an LPG 3110 contained in the SSH VCN 3112. The SSH VCN 3112 can include an SSH subnet 3114 (e.g. the SSH subnet 2814 of FIG. 28), and the SSH VCN 3112 can be communicatively coupled to a control plane VCN 3116 (e.g. the control plane VCN 2816 of FIG. 28) via an LPG 3110 contained in the control plane VCN 3116 and to a data plane VCN 3118 (e.g. the data plane 2818 of FIG. 28) via an LPG 3110 contained in the data plane VCN 3118. The control plane VCN 3116 and the data plane VCN 3118 can be contained in a service tenancy 3119 (e.g. the service tenancy 2819 of FIG. 28).

The control plane VCN 3116 can include a control plane DMZ tier 3120 (e.g. the control plane DMZ tier 2820 of FIG. 28) that can include LB subnet(s) 3122 (e.g. LB subnet(s) 2822 of FIG. 28), a control plane app tier 3124 (e.g. the control plane app tier 2824 of FIG. 28) that can include app subnet(s) 3126 (e.g. app subnet(s) 2826 of FIG. 28), a control plane data tier 3128 (e.g. the control plane data tier 2828 of FIG. 28) that can include DB subnet(s) 3130 (e.g. DB subnet(s) 3030 of FIG. 30). The LB subnet(s) 3122 contained in the control plane DMZ tier 3120 can be communicatively coupled to the app subnet(s) 3126 contained in the control plane app tier 3124 and to an Internet gateway 3134 (e.g. the Internet gateway 2834 of FIG. 28) that can be contained in the control plane VCN 3116, and the app subnet(s) 3126 can be communicatively coupled to the DB subnet(s) 3130 contained in the control plane data tier 3128 and to a service gateway 3136 (e.g. the service gateway of FIG. 28) and a network address translation (NAT) gateway 3138 (e.g. the NAT gateway 2838 of FIG. 28). The control plane VCN 3116 can include the service gateway 3136 and the NAT gateway 3138.

The data plane VCN 3118 can include a data plane app tier 3146 (e.g. the data plane app tier 2846 of FIG. 28), a data plane DMZ tier 3148 (e.g. the data plane DMZ tier 2848 of FIG. 28), and a data plane data tier 3150 (e.g. the data plane data tier 2850 of FIG. 28). The data plane DMZ tier 3148 can include LB subnet(s) 3122 that can be communicatively coupled to trusted app subnet(s) 3160 (e.g. trusted app subnet(s) 3060 of FIG. 30) and untrusted app subnet(s) 3162 (e.g. untrusted app subnet(s) 3062 of FIG. 30) of the data plane app tier 3146 and the Internet gateway 3134 contained in the data plane VCN 3118. The trusted app subnet(s) 3160 can be communicatively coupled to the service gateway 3136 contained in the data plane VCN 3118, the NAT gateway 3138 contained in the data plane VCN 3118, and DB subnet(s) 3130 contained in the data plane data tier 3150. The untrusted app subnet(s) 3162 can be communicatively coupled to the service gateway 3136 contained in the data plane VCN 3118 and DB subnet(s) 3130 contained in the data plane data tier 3150. The data plane data tier 3150 can include DB subnet(s) 3130 that can be communicatively coupled to the service gateway 3136 contained in the data plane VCN 3118.

The untrusted app subnet(s) 3162 can include primary VNICs 3164(1)-(N) that can be communicatively coupled to tenant virtual machines (VMs) 3166(1)-(N) residing within the untrusted app subnet(s) 3162. Each tenant VM 3166(1)-(N) can run code in a respective container 3167(1)-(N), and be communicatively coupled to an app subnet 3126 that can be contained in a data plane app tier 3146 that can be contained in a container egress VCN 3168. Respective secondary VNICs 3172(1)-(N) can facilitate communication between the untrusted app subnet(s) 3162 contained in the data plane VCN 3118 and the app subnet contained in the container egress VCN 3168. The container egress VCN can include a NAT gateway 3138 that can be communicatively coupled to public Internet 3154 (e.g. public Internet 2854 of FIG. 28).

The Internet gateway 3134 contained in the control plane VCN 3116 and contained in the data plane VCN 3118 can be communicatively coupled to a metadata management service 3152 (e.g. the metadata management system 2852 of FIG. 28) that can be communicatively coupled to public Internet 3154. Public Internet 3154 can be communicatively coupled to the NAT gateway 3138 contained in the control plane VCN 3116 and contained in the data plane VCN 3118. The service gateway 3136 contained in the control plane VCN 3116 and contained in the data plane VCN 3118 can be communicatively couple to cloud services 3156.

In some examples, the pattern illustrated by the architecture of block diagram 3100 of FIG. 31 may be considered an exception to the pattern illustrated by the architecture of block diagram 3000 of FIG. 30 and may be desirable for a customer of the IaaS provider if the IaaS provider cannot directly communicate with the customer (e.g., a disconnected region). The respective containers 3167(1)-(N) that are contained in the VMs 3166(1)-(N) for each customer can be accessed in real-time by the customer. The containers 3167(1)-(N) may be configured to make calls to respective secondary VNICs 3172(1)-(N) contained in app subnet(s) 3126 of the data plane app tier 3146 that can be contained in the container egress VCN 3168. The secondary VNICs 3172(1)-(N) can transmit the calls to the NAT gateway 3138 that may transmit the calls to public Internet 3154. In this example, the containers 3167(1)-(N) that can be accessed in real-time by the customer can be isolated from the control plane VCN 3116 and can be isolated from other entities contained in the data plane VCN 3118. The containers 3167(1)-(N) may also be isolated from resources from other customers.

In other examples, the customer can use the containers 3167(1)-(N) to call cloud services 3156. In this example, the customer may run code in the containers 3167(1)-(N) that requests a service from cloud services 3156. The containers 3167(1)-(N) can transmit this request to the secondary VNICs 3172(1)-(N) that can transmit the request to the NAT gateway that can transmit the request to public Internet 3154. Public Internet 3154 can transmit the request to LB subnet(s) 3122 contained in the control plane VCN 3116 via the Internet gateway 3134. In response to determining the request is valid, the LB subnet(s) can transmit the request to app subnet(s) 3126 that can transmit the request to cloud services 3156 via the service gateway 3136.

It should be appreciated that IaaS architectures 2800, 2900, 3000, 3100 depicted in the figures may have other components than those depicted. Further, the embodiments shown in the figures are only some examples of a cloud infrastructure system that may incorporate an embodiment of the disclosure. In some other embodiments, the IaaS systems may have more or fewer components than shown in the figures, may combine two or more components, or may have a different configuration or arrangement of components.

In certain embodiments, the IaaS systems described herein may include a suite of applications, middleware, and database service offerings that are delivered to a customer in a self-service, subscription-based, elastically scalable, reliable, highly available, and secure manner. An example of such an IaaS system is the Oracle Cloud Infrastructure (OCI) provided by the present assignee.

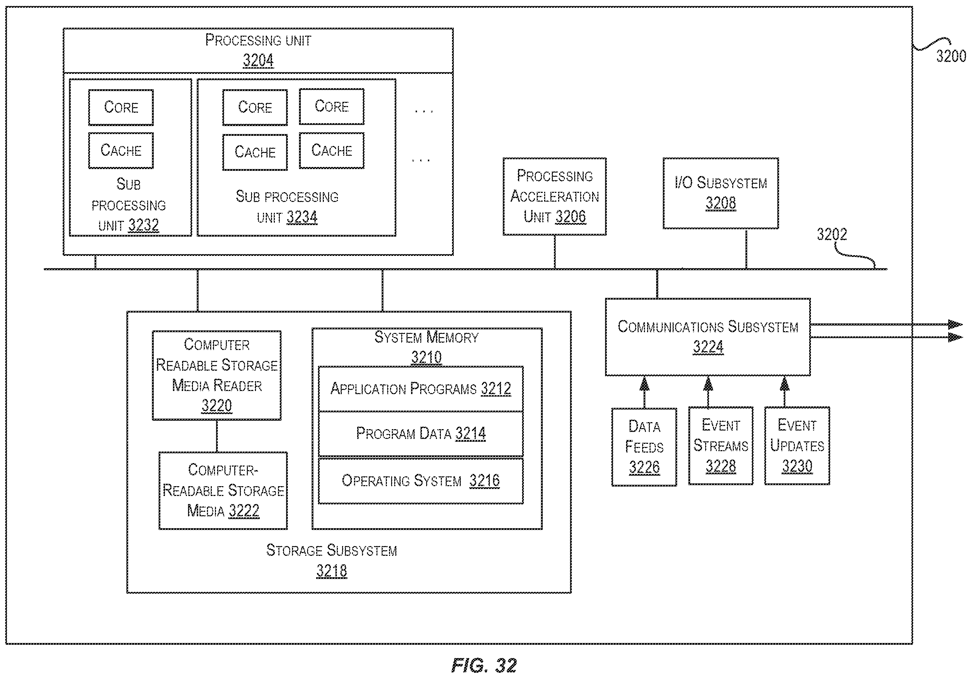

FIG. 32 illustrates an example computer system 3200, in which various embodiments of the present disclosure may be implemented. The system 3200 may be used to implement any of the computer systems described above. As shown in the figure, computer system 3200 includes a processing unit 3204 that communicates with a number of peripheral subsystems via a bus subsystem 3202. These peripheral subsystems may include a processing acceleration unit 3206, an I/O subsystem 3208, a storage subsystem 3218 and a communications subsystem 3224. Storage subsystem 3218 includes tangible computer-readable storage media 3222 and a system memory 3210.

Bus subsystem 3202 provides a mechanism for letting the various components and subsystems of computer system 3200 communicate with each other as intended. Although bus subsystem 3202 is shown schematically as a single bus, alternative embodiments of the bus subsystem may utilize multiple buses. Bus subsystem 3202 may be any of several types of bus structures including a memory bus or memory controller, a peripheral bus, and a local bus using any of a variety of bus architectures. For example, such architectures may include an Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus, which can be implemented as a Mezzanine bus manufactured to the IEEE P1386.1 standard.

Processing unit 3204, which can be implemented as one or more integrated circuits (e.g., a conventional microprocessor or microcontroller), controls the operation of computer system 3200. One or more processors may be included in processing unit 3204. These processors may include single core or multicore processors. In certain embodiments, processing unit 3204 may be implemented as one or more independent processing units 3232 and/or 3234 with single or multicore processors included in each processing unit. In other embodiments, processing unit 3204 may also be implemented as a quad-core processing unit formed by integrating two dual-core processors into a single chip.

In various embodiments, processing unit 3204 can execute a variety of programs in response to program code and can maintain multiple concurrently executing programs or processes. At any given time, some or all of the program code to be executed can be resident in processor(s) 3204 and/or in storage subsystem 3218. Through suitable programming, processor(s) 3204 can provide various functionalities described above. Computer system 3200 may additionally include a processing acceleration unit 3206, which can include a digital signal processor (DSP), a special-purpose processor, and/or the like.

I/O subsystem 3208 may include user interface input devices and user interface output devices. User interface input devices may include a keyboard, pointing devices such as a mouse or trackball, a touchpad or touch screen incorporated into a display, a scroll wheel, a click wheel, a dial, a button, a switch, a keypad, audio input devices with voice command recognition systems, microphones, and other types of input devices. User interface input devices may include, for example, motion sensing and/or gesture recognition devices such as the Microsoft Kinect^{®} motion sensor that enables users to control and interact with an input device, such as the Microsoft Xbox^{®} 360 game controller, through a natural user interface using gestures and spoken commands. User interface input devices may also include eye gesture recognition devices such as the Google Glass^{®} blink detector that detects eye activity (e.g., 'blinking' while taking pictures and/or making a menu selection) from users and transforms the eye gestures as input into an input device (e.g., Google Glass^{®}). Additionally, user interface input devices may include voice recognition sensing devices that enable users to interact with voice recognition systems (e.g., Siri^{®} navigator), through voice commands.

User interface input devices may also include, without limitation, three dimensional (3D) mice, joysticks or pointing sticks, gamepads and graphic tablets, and audio/visual devices such as speakers, digital cameras, digital camcorders, portable media players, webcams, image scanners, fingerprint scanners, barcode reader 3D scanners, 3D printers, laser rangefinders, and eye gaze tracking devices. Additionally, user interface input devices may include, for example, medical imaging input devices such as computed tomography, magnetic resonance imaging, position emission tomography, medical ultrasonography devices. User interface input devices may also include, for example, audio input devices such as MIDI keyboards, digital musical instruments and the like.

User interface output devices may include a display subsystem, indicator lights, or non-visual displays such as audio output devices, etc. The display subsystem may be a cathode ray tube (CRT), a flat-panel device, such as that using a liquid crystal display (LCD) or plasma display, a projection device, a touch screen, and the like. In general, use of the term "output device" is intended to include all possible types of devices and mechanisms for outputting information from computer system 3200 to a user or other computer. For example, user interface output devices may include, without limitation, a variety of display devices that visually convey text, graphics and audio/video information such as monitors, printers, speakers, headphones, automotive navigation systems, plotters, voice output devices, and modems.

Computer system 3200 may comprise a storage subsystem 3218 that comprises software elements, shown as being currently located within a system memory 3210. System memory 3210 may store program instructions that are loadable and executable on processing unit 3204, as well as data generated during the execution of these programs.

Depending on the configuration and type of computer system 3200, system memory 3210 may be volatile (such as random access memory (RAM)) and/or non-volatile (such as read-only memory (ROM), flash memory, etc.) The RAM typically contains data and/or program modules that are immediately accessible to and/or presently being operated and executed by processing unit 3204. In some implementations, system memory 3210 may include multiple different types of memory, such as static random access memory (SRAM) or dynamic random access memory (DRAM). In some implementations, a basic input/output system (BIOS), containing the basic routines that help to transfer information between elements within computer system 3200, such as during start-up, may typically be stored in the ROM. By way of example, and not limitation, system memory 3210 also illustrates application programs 3212, which may include client applications, Web browsers, mid-tier applications, relational database management systems (RDBMS), etc., program data 3214, and an operating system 3216. By way of example, operating system 3216 may include various versions of Microsoft Windows^{®}, Apple Macintosh^{®}, and/or Linux operating systems, a variety of commercially-available UNIX^{®} or UNIX-like operating systems (including without limitation the variety of GNU/Linux operating systems, the Google Chrome^{®} OS, and the like) and/or mobile operating systems such as iOS, Windows^{®} Phone, Android^{®} OS, BlackBerry^{®} 32 OS, and Palm^{®} OS operating systems.

Storage subsystem 3218 may also provide a tangible computer-readable storage medium for storing the basic programming and data constructs that provide the functionality of some embodiments. Software (programs, code modules, instructions) that when executed by a processor provide the functionality described above may be stored in storage subsystem 3218. These software modules or instructions may be executed by processing unit 3204. Storage subsystem 3218 may also provide a repository for storing data used in accordance with the present disclosure.

Storage subsystem 3200 may also include a computer-readable storage media reader 3220 that can further be connected to computer-readable storage media 3222. Together and, optionally, in combination with system memory 3210, computer-readable storage media 3222 may comprehensively represent remote, local, fixed, and/or removable storage devices plus storage media for temporarily and/or more permanently containing, storing, transmitting, and retrieving computer-readable information.

Computer-readable storage media 3222 containing code, or portions of code, can also include any appropriate media known or used in the art, including storage media and communication media, such as but not limited to, volatile and non-volatile, removable and non-removable media implemented in any method or technology for storage and/or transmission of information. This can include tangible computer-readable storage media such as RAM, ROM, electronically erasable programmable ROM (EEPROM), flash memory or other memory technology, CD-ROM, digital versatile disk (DVD), or other optical storage, magnetic cassettes, magnetic tape, magnetic disk storage or other magnetic storage devices, or other tangible computer readable media. This can also include nontangible computer-readable media, such as data signals, data transmissions, or any other medium which can be used to transmit the desired information and which can be accessed by computing system 3200.

By way of example, computer-readable storage media 3222 may include a hard disk drive that reads from or writes to non-removable, nonvolatile magnetic media, a magnetic disk drive that reads from or writes to a removable, nonvolatile magnetic disk, and an optical disk drive that reads from or writes to a removable, nonvolatile optical disk such as a CD ROM, DVD, and Blu-Ray^{®} disk, or other optical media. Computer-readable storage media 3222 may include, but is not limited to, Zip^{®} drives, flash memory cards, universal serial bus (USB) flash drives, secure digital (SD) cards, DVD disks, digital video tape, and the like. Computer-readable storage media 3222 may also include, solid-state drives (SSD) based on non-volatile memory such as flash-memory based SSDs, enterprise flash drives, solid state ROM, and the like, SSDs based on volatile memory such as solid state RAM, dynamic RAM, static RAM, DRAM-based SSDs, magnetoresistive RAM (MRAM) SSDs, and hybrid SSDs that use a combination of DRAM and flash memory based SSDs. The disk drives and their associated computer-readable media may provide non-volatile storage of computer-readable instructions, data structures, program modules, and other data for computer system 3200.

Communications subsystem 3224 provides an interface to other computer systems and networks. Communications subsystem 3224 serves as an interface for receiving data from and transmitting data to other systems from computer system 3200. For example, communications subsystem 3224 may enable computer system 3200 to connect to one or more devices via the Internet. In some embodiments communications subsystem 3224 can include radio frequency (RF) transceiver components for accessing wireless voice and/or data networks (e.g., using cellular telephone technology, advanced data network technology, such as 3G, 4G or EDGE (enhanced data rates for global evolution), WiFi (IEEE 802.11 family standards, or other mobile communication technologies, or any combination thereof), global positioning system (GPS) receiver components, and/or other components. In some embodiments communications subsystem 3224 can provide wired network connectivity (e.g., Ethernet) in addition to or instead of a wireless interface.

In some embodiments, communications subsystem 3224 may also receive input communication in the form of structured and/or unstructured data feeds 3226, event streams 3228, event updates 3230, and the like on behalf of one or more users who may use computer system 3200.

By way of example, communications subsystem 3224 may be configured to receive data feeds 3226 in real-time from users of social networks and/or other communication services such as Twitter^{®} feeds, Facebook^{®} updates, web feeds such as Rich Site Summary (RSS) feeds, and/or real-time updates from one or more third party information sources.

Additionally, communications subsystem 3224 may also be configured to receive data in the form of continuous data streams, which may include event streams 3228 of real-time events and/or event updates 3230, that may be continuous or unbounded in nature with no explicit end. Examples of applications that generate continuous data may include, for example, sensor data applications, financial tickers, network performance measuring tools (e.g. network monitoring and traffic management applications), clickstream analysis tools, automobile traffic monitoring, and the like.

Communications subsystem 3224 may also be configured to output the structured and/or unstructured data feeds 3226, event streams 3228, event updates 3230, and the like to one or more databases that may be in communication with one or more streaming data source computers coupled to computer system 3200.

Computer system 3200 can be one of various types, including a handheld portable device (e.g., an iPhone^{®} cellular phone, an iPad^{®} computing tablet, a PDA), a wearable device (e.g., a Google Glass^{®} head mounted display), a PC, a workstation, a mainframe, a kiosk, a server rack, or any other data processing system.

Due to the ever-changing nature of computers and networks, the description of computer system 3200 depicted in the figure is intended only as a specific example. Many other configurations having more or fewer components than the system depicted in the figure are possible. For example, customized hardware might also be used and/or particular elements might be implemented in hardware, firmware, software (including applets), or a combination. Further, connection to other computing devices, such as network input/output devices, may be employed. Based on the disclosure and teachings provided herein, a person of ordinary skill in the art will appreciate other ways and/or methods to implement the various embodiments.

Although specific embodiments of the disclosure have been described, various modifications, alterations, alternative constructions, and equivalents are also encompassed within the scope of the disclosure. Embodiments of the present disclosure are not restricted to operation within certain specific data processing environments, but are free to operate within a plurality of data processing environments. Additionally, although embodiments of the present disclosure have been described using a particular series of transactions and steps, it should be apparent to those skilled in the art that the scope of the present disclosure is not limited to the described series of transactions and steps. Various features and aspects of the above-described embodiments may be used individually or jointly.

Further, while embodiments of the present disclosure have been described using a particular combination of hardware and software, it should be recognized that other combinations of hardware and software are also within the scope of the present disclosure. Embodiments of the present disclosure may be implemented only in hardware, or only in software, or using combinations thereof. The various processes described herein can be implemented on the same processor or different processors in any combination. Accordingly, where components or modules are described as being configured to perform certain operations, such configuration can be accomplished, e.g., by designing electronic circuits to perform the operation, by programming programmable electronic circuits (such as microprocessors) to perform the operation, or any combination thereof. Processes can communicate using a variety of techniques including but not limited to conventional techniques for inter process communication, and different pairs of processes may use different techniques, or the same pair of processes may use different techniques at different times.

The specification and drawings are, accordingly, to be regarded in an illustrative rather than a restrictive sense. It will, however, be evident that additions, subtractions, deletions, and other modifications and changes may be made thereunto without departing from the broader spirit and scope as set forth in the claims. Thus, although specific disclosure embodiments have been described, these are not intended to be limiting. Various modifications and equivalents are within the scope of the following claims.

The use of the terms "a" and "an" and "the" and similar referents in the context of describing the disclosed embodiments (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. The term "connected" is to be construed as partly or wholly contained within, attached to, or joined together, even if there is something intervening. Recitation of ranges of values herein are merely intended to serve as a shorthand method of referring individually to each separate value falling within the range, unless otherwise indicated herein and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate embodiments of the disclosure and does not pose a limitation on the scope of the disclosure unless otherwise claimed. No language in the specification should be construed as indicating any non-claimed element as essential to the practice of the disclosure.

Disjunctive language such as the phrase "at least one of X, Y, or Z," unless specifically stated otherwise, is intended to be understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

Preferred embodiments of this disclosure are described herein, including the best mode known for carrying out the disclosure. Variations of those preferred embodiments may become apparent to those of ordinary skill in the art upon reading the foregoing description. Those of ordinary skill should be able to employ such variations as appropriate and the disclosure may be practiced otherwise than as specifically described herein. Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

All references, including publications, patent applications, and patents, cited herein are hereby incorporated by reference to the same extent as if each reference were individually and specifically indicated to be incorporated by reference and were set forth in its entirety herein.

In the foregoing specification, aspects of the disclosure are described with reference to specific embodiments thereof, but those skilled in the art will recognize that the disclosure is not limited thereto. Various features and aspects of the above-described disclosure may be used individually or jointly. Further, embodiments can be utilized in any number of environments and applications beyond those described herein without departing from the broader scope of the specification. The specification and drawings are, accordingly, to be regarded as illustrative rather than restrictive.

## Claims

1. A method, comprising:
receiving (702), by a computer system (3200), a request to reserve a block volume, the request being received from a session manager service (120), wherein the request comprises a user identifier;
reserving (704), by the computer system (3200), the block volume;
identifying (706), by the computer system (3200), a data center identifier of the block volume;
returning (708), by the computer system (3200), the data center identifier of the block volume to the session manager service (120);
attaching (710), by the computer system (3200), the block volume;
receiving (712), by the computer system (3200), an instruction from the session manager service (120) to release the block volume;
creating (714), by the computer system (3200), a backup of the block volume comprising the data stored in the block volume; and
releasing (716), by the computer system (3200), the block volume,
wherein reserving (704) the block volume comprises:
determining (804) whether a registered block volume is allocated to a user corresponding to the user identifier; and
in accordance with a registered block volume being allocated to the user, reserving (806) the registered block volume;
in accordance with a registered block volume not being allocated to a user corresponding to the user identifier, reserving (808) an empty volume from a pool of empty volumes, the empty volume being preformatted to dock with a secure cloud shell.

2. The method of claim 1, further comprising:
receiving (902) a request to restore the block volume, the request received from the session manager service (120);
creating a restore volume using the backup of the block volume, the restore volume comprising the data stored in the block volume; and
returning a data center identifier of the restore volume to the session manager service (120).

3. The method of claim 2, wherein the backup of the block volume further comprises an identifier of the backup, and wherein creating the restore volume comprises:
reserving (904) an empty block volume from a pool of empty volumes, the empty block volume being preformatted to dock with a secure cloud shell;
retrieving (906) the backup of the block volume using the identifier of the backup;
provisioning (908) the empty block volume at least in part by loading the backup of the block volume onto the empty block volume; and
identifying (910) the data center identifier of the empty block volume as the data center identifier of the restore volume.

4. The method of claim 1, further comprising retaining the block volume during a retention period.

5. The method of claim 1, wherein creating the backup of the block volume comprises creating a disk image of the block volume.

6. The method of claim 1, wherein creating the backup of the block volume comprises:
converting data of the block volume to object data; and
storing the object data in an object storage system.

7. A computer system (3200), comprising:
one or more processors (3204);
a memory (3210) in communication with the one or more processors (3204), the memory (3210) configured to store computer-executable instructions, wherein executing the computer-executable instructions causes the one or more processors (3204) to perform steps comprising:
receiving (702), by a computer system (3200), a request to reserve a block volume, the request being received from a session manager service (120), wherein the request comprises a user identifier;
reserving (704), by the computer system (3200), the block volume;
identifying (706), by the computer system (3200), a data center identifier of the block volume;
returning (708), by the computer system (3200), the data center identifier of the block volume to the session manager service (120);
attaching (710), by the computer system (3200), the block volume;
receiving (712), by the computer system (3200), an instruction from the session manager service (120) to release the block volume;
creating (714), by the computer system (3200), a backup of the block volume comprising the data stored in the block volume; and
releasing (716), by the computer system (3200), the block volume,
wherein reserving the block volume comprises:
determining (804) whether a registered block volume is allocated to a user corresponding to the user identifier; and
in accordance with a registered block volume being allocated to the user, reserving (806) the registered block volume;
in accordance with a registered block volume not being allocated to a user corresponding to the user identifier, reserving (808) an empty volume from a pool of empty volumes, the empty volume being preformatted to dock with a secure cloud shell.

8. The computer system (3200) of claim 7, wherein executing the computer-executable instructions further causes the one or more processors (3204) to perform steps comprising:
receiving a request to restore the block volume, the request received from the session manager service (120);
creating a restore volume using the backup of the block volume, the restore volume comprising the data stored in the block volume; and
returning a data center identifier of the restore volume to the session manager service (120).

9. The computer system (3200) of claim 8, wherein the backup of the block volume further comprises an identifier of the backup, and wherein creating the restore volume comprises:
reserving an empty block volume from a pool of empty volumes, the empty block volume being preformatted to dock with a secure cloud shell;
retrieving the backup of the block volume using the identifier of the backup;
provisioning the empty block volume at least in part by loading the backup of the block volume onto the empty block volume; and
identifying the data center identifier of the empty block volume as the data center identifier of the restore volume.

10. The computer system (3200) of claim 7, wherein executing the computer-executable instructions further causes the one or more processors (3204) to perform steps comprising retaining the block volume during a retention period.

11. The computer system (3200) of claim 7, wherein creating the backup of the block volume comprises creating a disk image of the block volume.

12. The computer system (3200) of claim 7, wherein creating the backup of the block volume comprises:
converting data of the block volume to object data; and
storing the object data in an object storage system.

13. A computer-readable storage medium (3222), storing computer-executable instructions that, when executed, cause one or more processors (3204) of a computer system (3200) to perform steps comprising:
receiving (702), by a computer system (3200), a request to reserve a block volume, the request being received from a session manager service, wherein the request comprises a user identifier;
reserving (704), by the computer system (3200), the block volume;
identifying (706), by the computer system (3200), a data center identifier of the block volume;
returning (708), by the computer system (3200), the data center identifier of the block volume to the session manager service;
attaching (710), by the computer system (3200), the block volume;
receiving (712), by the computer system (3200), an instruction from the session manager service to release the block volume;
creating (714), by the computer system (3200), a backup of the block volume comprising the data stored in the block volume; and
releasing (716), by the computer system (3200), the block volume,
wherein reserving the block volume comprises:
determining (804) whether a registered block volume is allocated to a user corresponding to the user identifier; and
in accordance with a registered block volume being allocated to the user, reserving (806) the registered block volume;
in accordance with a registered block volume not being allocated to a user corresponding to the user identifier, reserving (808) an empty volume from a pool of empty volumes, the empty volume being preformatted to dock with a secure cloud shell.

14. The computer-readable storage medium of claim 13, wherein executing the computer-executable instructions further causes the one or more processors to perform steps comprising:
receiving a request to restore the block volume, the request received from the session manager service;
creating a restore volume using the backup of the block volume, the restore volume comprising the data stored in the block volume; and
returning a data center identifier of the restore volume to the session manager service.

15. The computer-readable storage medium of claim 14, wherein the backup of the block volume further comprises an identifier of the backup, and wherein creating the restore volume comprises:
reserving an empty block volume from a pool of empty volumes, the empty block volume being preformatted to dock with a secure cloud shell;
retrieving the backup of the block volume using the identifier of the backup;
provisioning the empty block volume at least in part by loading the backup of the block volume onto the empty block volume; and
identifying the data center identifier of the empty block volume as the data center identifier of the restore volume.

## Patentansprüche

1. Verfahren, das umfasst:
Empfangen (702) einer Anforderung zur Reservierung eines Blockvolumens durch ein Computersystem (3200), wobei die Anforderung von einem Sitzungsmanager-Dienst (120) empfangen wird, wobei die Anforderung eine Benutzerkennung umfasst;
Reservieren (704), durch das Computersystem (3200), des Blockvolumens;
Identifizieren (706), durch das Computersystem (3200), einer Rechenzentrumskennung des Blockvolumens;
Zurücksenden (708), durch das Computersystem (3200), der Rechenzentrumskennung des Blockvolumens an den Sitzungsmanager-Dienst (120);
Anbinden (710), durch das Computersystem (3200), des Blockvolumens;
Empfangen (712), durch das Computersystem (3200), einer Anweisung vom Sitzungsmanager-Dienst (120) zum Freigeben des Blockvolumens;
Erstellen (714), durch das Computersystem (3200), einer Sicherungskopie des Blockvolumens, die die im Blockvolumen gespeicherten Daten umfasst; und
Freigeben (716), durch das Computersystem (3200), des Blockvolumens,
wobei das Reservieren (704) des Blockvolumens umfasst:
Bestimmen (804), ob ein registriertes Blockvolumen einem Benutzer zugewiesen ist, der der Benutzerkennung entspricht; und
sofern dem Benutzer ein registriertes Blockvolumen zugewiesen ist, Reservieren (806) des registrierten Blockvolumens;
sofern ein registriertes Blockvolumen keinem Benutzer zugewiesen ist, der der Benutzerkennung entspricht, Reservieren (808) eines leeren Volumens aus einem Pool leerer Volumina, wobei das leere Volumen so vorformatiert ist, dass es mit einer sicheren Cloud-Shell gekoppelt werden kann.

2. Verfahren nach Anspruch 1, das ferner umfasst:
Empfangen (902) einer Anforderung zur Wiederherstellung des Blockvolumens, wobei die Anforderung vom Sitzungsmanager-Dienst (120) empfangen wird;
Erstellen eines Wiederherstellungsvolumens unter Verwendung der Sicherungskopie des Blockvolumens, wobei das Wiederherstellungsvolumen die im Blockvolumen gespeicherten Daten umfasst; und
Zurücksenden einer Rechenzentrumskennung des Wiederherstellungsvolumens an den Sitzungsmanager-Dienst (120).

3. Verfahren nach Anspruch 2, wobei die Sicherungskopie des Blockvolumens ferner eine Kennung der Sicherungskopie umfasst, und wobei das Erstellen des Wiederherstellungsvolumens umfasst:
Reservieren (904) eines leeren Blockvolumens aus einem Pool leerer Volumina, wobei das leere Blockvolumen so vorformatiert ist, dass es mit einer sicheren Cloud-Shell verbunden werden kann;
Abrufen (906) der Sicherungskopie des Blockvolumens unter Verwendung der Kennung der Sicherungskopie;
Bereitstellen (908) des leeren Blockvolumens mindestens teilweise durch Laden der Sicherungskopie des Blockvolumens auf das leere Blockvolumen; und
Identifizieren (910) der Rechenzentrumskennung des leeren Blockvolumens als die Rechenzentrumskennung des Wiederherstellungsvolumens.

4. Verfahren nach Anspruch 1, das ferner das Aufbewahren des Blockvolumens während einer Aufbewahrungsfrist umfasst.

5. Verfahren nach Anspruch 1, wobei das Erstellen der Sicherungskopie des Blockvolumens das Erstellen eines Festplattenabbilds des Blockvolumens umfasst.

6. Verfahren nach Anspruch 1, wobei das Erstellen der Sicherungskopie des Blockvolumens umfasst:
Konvertieren von Daten des Blockvolumens in Objektdaten; und
Speichern der Objektdaten in einem Objektspeichersystem.

7. Computersystem (3200), das umfasst:
einen oder mehrere Prozessoren (3204);
einen Speicher (3210), der mit dem einen oder den mehreren Prozessoren (3204) in Kommunikation steht, wobei der Speicher (3210) so konfiguriert ist, dass er computerausführbare Befehle speichert, wobei das Ausführen der computerausführbaren Befehle bewirkt, dass der eine oder die mehreren Prozessoren (3204) Schritte durchführen, die umfassen:
Empfangen (702) einer Anforderung zur Reservierung eines Blockvolumens durch ein Computersystem (3200), wobei die Anforderung von einem Sitzungsmanager-Dienst (120) empfangen wird, wobei die Anforderung eine Benutzerkennung umfasst;
Reservieren (704), durch das Computersystem (3200), des Blockvolumens;
Identifizieren (706), durch das Computersystem (3200), einer Rechenzentrumskennung des Blockvolumens;
Zurücksenden (708), durch das Computersystem (3200), der Rechenzentrumskennung des Blockvolumens an den Sitzungsmanager-Dienst (120);
Anbinden (710), durch das Computersystem (3200), des Blockvolumens;
Empfangen (712), durch das Computersystem (3200), einer Anweisung vom Sitzungsmanager-Dienst (120) zum Freigeben des Blockvolumens;
Erstellen (714), durch das Computersystem (3200), einer Sicherungskopie des Blockvolumens, die die im Blockvolumen gespeicherten Daten umfasst; und
Freigeben (716), durch das Computersystem (3200), des Blockvolumens,
wobei das Reservieren des Blockvolumens umfasst:
Bestimmen (804), ob ein registriertes Blockvolumen einem Benutzer zugewiesen ist, der der Benutzerkennung entspricht; und
sofern dem Benutzer ein registriertes Blockvolumen zugewiesen ist, Reservieren (806) des registrierten Blockvolumens;
sofern ein registriertes Blockvolumen keinem Benutzer zugewiesen ist, der der Benutzerkennung entspricht, Reservieren (808) eines leeren Volumens aus einem Pool leerer Volumina, wobei das leere Volumen so vorformatiert ist, dass es mit einer sicheren Cloud-Shell gekoppelt werden kann.

8. Computersystem (3200) nach Anspruch 7, wobei das Ausführen der computerausführbaren Befehle bewirkt, dass der eine oder die mehreren Prozessoren (3204) Schritte durchführen, die umfassen:
Empfangen einer Anforderung zur Wiederherstellung des Blockvolumens, wobei die Anforderung vom Sitzungsmanager-Dienst (120) empfangen wird;
Erstellen eines Wiederherstellungsvolumens unter Verwendung der Sicherungskopie des Blockvolumens, wobei das Wiederherstellungsvolumen die im Blockvolumen gespeicherten Daten umfasst; und
Zurücksenden einer Rechenzentrumskennung des Wiederherstellungsvolumens an den Sitzungsmanager-Dienst (120).

9. Computersystem (3200) nach Anspruch 8, wobei die Sicherungskopie des Blockvolumens ferner eine Kennung der Sicherungskopie umfasst, und wobei das Erstellen des Wiederherstellungsvolumens umfasst:
Reservieren eines leeren Blockvolumens aus einem Pool leerer Volumina, wobei das leere Blockvolumen so vorformatiert ist, dass es mit einer sicheren Cloud-Shell verbunden werden kann;
Abrufen der Sicherungskopie des Blockvolumens unter Verwendung der Kennung der Sicherungskopie;
Bereitstellen des leeren Blockvolumens mindestens teilweise durch Laden der Sicherungskopie des Blockvolumens auf das leere Blockvolumen; und
Identifizieren der Rechenzentrumskennung des leeren Blockvolumens als die Rechenzentrumskennung des Wiederherstellungsvolumens.

10. Computersystem (3200) nach Anspruch 7, wobei das Ausführen der computerausführbaren Befehle ferner bewirkt, dass der eine oder die mehreren Prozessoren (3204) Schritte durchführen, die das Aufbewahren des Blockvolumens während einer Aufbewahrungsfrist umfassen.

11. Computersystem (3200) nach Anspruch 7, wobei das Erstellen der Sicherungskopie des Blockvolumens das Erstellen eines Festplattenabbilds des Blockvolumens umfasst.

12. Computersystem (3200) nach Anspruch 7, wobei das Erstellen der Sicherungskopie des Blockvolumens umfasst:
Konvertieren von Daten des Blockvolumens in Objektdaten; und
Speichern der Objektdaten in einem Objektspeichersystem.

13. Computerlesbares Speichermedium (3222), auf dem computerausführbare Befehle gespeichert sind, die bei ihrer Ausführung bewirken, dass ein oder mehrere Prozessoren (3204) eines Computersystems (3200) Schritte durchführen, die umfassen:
Empfangen (702) einer Anforderung zur Reservierung eines Blockvolumens durch ein Computersystem (3200), wobei die Anforderung von einem Sitzungsmanager-Dienst empfangen wird, wobei die Anforderung eine Benutzerkennung umfasst;
Reservieren (704), durch das Computersystem (3200), des Blockvolumens;
Identifizieren (706), durch das Computersystem (3200), einer Rechenzentrumskennung des Blockvolumens;
Zurücksenden (708), durch das Computersystem (3200), der Rechenzentrumskennung des Blockvolumens an den Sitzungsmanager-Dienst;
Anbinden (710), durch das Computersystem (3200), des Blockvolumens;
Empfangen (712), durch das Computersystem (3200), einer Anweisung vom Sitzungsmanager-Dienst zum Freigeben des Blockvolumens;
Erstellen (714), durch das Computersystem (3200), einer Sicherungskopie des Blockvolumens, die die im Blockvolumen gespeicherten Daten umfasst; und
Freigeben (716), durch das Computersystem (3200), des Blockvolumens,
wobei das Reservieren des Blockvolumens umfasst:
Bestimmen (804), ob ein registriertes Blockvolumen einem Benutzer zugewiesen ist, der der Benutzerkennung entspricht; und
sofern dem Benutzer ein registriertes Blockvolumen zugewiesen ist, Reservieren (806) des registrierten Blockvolumens;
sofern ein registriertes Blockvolumen keinem Benutzer zugewiesen ist, der der Benutzerkennung entspricht, Reservieren (808) eines leeren Volumens aus einem Pool leerer Volumina, wobei das leere Volumen so vorformatiert ist, dass es mit einer sicheren Cloud-Shell gekoppelt werden kann.

14. Computerlesbares Speichermedium nach Anspruch 13, wobei das Ausführen der computerausführbaren Befehle bewirkt, dass der eine oder die mehreren Prozessoren Schritte durchführen, die umfassen:
Empfangen einer Anforderung zur Wiederherstellung des Blockvolumens, wobei die Anforderung vom Sitzungsmanager-Dienst empfangen wird;
Erstellen eines Wiederherstellungsvolumens unter Verwendung der Sicherungskopie des Blockvolumens, wobei das Wiederherstellungsvolumen die im Blockvolumen gespeicherten Daten umfasst; und
Zurücksenden einer Rechenzentrumskennung des Wiederherstellungsvolumens an den Sitzungsmanager-Dienst.

15. Computerlesbares Speichermedium nach Anspruch 14, wobei die Sicherungskopie des Blockvolumens ferner eine Kennung der Sicherungskopie umfasst, und wobei das Erstellen des Wiederherstellungsvolumens umfasst:
Reservieren eines leeren Blockvolumens aus einem Pool leerer Volumina, wobei das leere Blockvolumen so vorformatiert ist, dass es mit einer sicheren Cloud-Shell verbunden werden kann;
Abrufen der Sicherungskopie des Blockvolumens unter Verwendung der Kennung der Sicherungskopie;
Bereitstellen des leeren Blockvolumens mindestens teilweise durch Laden der Sicherungskopie des Blockvolumens auf das leere Blockvolumen; und
Identifizieren der Rechenzentrumskennung des leeren Blockvolumens als die Rechenzentrumskennung des Wiederherstellungsvolumens.

## Revendications

1. Procédé, comportant les étapes consistant à :
recevoir (702), par un système informatique (3200), une demande de réservation d'un volume de bloc, la demande étant reçue en provenance d'un service de gestion de sessions (120), dans lequel la demande comporte un identificateur d'utilisateur ;
réserver (704), par le système informatique (3200), le volume de bloc ;
identifier (706), par le système informatique (3200), un identificateur de centre de données du volume de bloc ;
renvoyer (708), par le système informatique (3200), l'identificateur de centre de données du volume de bloc au service de gestion de sessions (120) ;
attacher (710), par le système informatique (3200), le volume de bloc ;
recevoir (712), par le système informatique (3200), une instruction en provenance du service de gestion de sessions (120) pour libérer le volume de bloc ;
créer (714), par le système informatique (3200), une sauvegarde du volume de bloc comportant les données stockées dans le volume de bloc ; et
libérer (716), par le système informatique (3200), le volume de bloc,
dans lequel l'étape consistant à réserver (704) le volume de bloc comporte les étapes consistant à :
déterminer (804) si un volume de bloc enregistré est attribué à un utilisateur correspondant à l'identificateur d'utilisateur ; et
en fonction d'un cas de figure dans lequel le volume de bloc enregistré est attribué à l'utilisateur, réserver (806) le volume de bloc enregistré ;
en fonction d'un cas de figure dans lequel le volume de bloc enregistré n'est pas attribué à un utilisateur correspondant à l'identificateur d'utilisateur, réserver (808) un volume vide parmi un groupe de volumes vides, le volume vide étant préformaté pour venir s'ancrer avec un interpréteur infonuagique de commandes sécurisé.

2. Procédé selon la revendication 1, comportant par ailleurs les étapes consistant à :
recevoir (902) une demande de restauration du volume de bloc, la demande étant reçue en provenance du service de gestion de sessions (120) ;
créer un volume de restauration à l'aide de la sauvegarde du volume de bloc, le volume de restauration comportant les données stockées dans le volume de bloc ; et
renvoyer un identificateur de centre de données du volume de restauration au service de gestion de sessions (120).

3. Procédé selon la revendication 2, dans lequel la sauvegarde du volume de bloc comporte par ailleurs un identificateur de la sauvegarde, et dans lequel l'étape consistant à créer le volume de restauration comporte les étapes consistant à :
réserver (904) un volume de bloc vide parmi un groupe de volumes vides, le volume de bloc vide étant préformaté pour venir s'ancrer avec un interpréteur infonuagique de commandes sécurisé ;
récupérer (906) la sauvegarde du volume de bloc à l'aide de l'identificateur de la sauvegarde ;
provisionner (908) le volume de bloc vide au moins en partie en chargeant la sauvegarde du volume de bloc sur le volume de bloc vide ; et
identifier (910) l'identificateur de centre de données du volume de bloc vide en tant qu'identificateur de centre de données du volume de restauration.

4. Procédé selon la revendication 1, comportant par ailleurs l'étape consistant à retenir le volume de bloc au cours d'une période de rétention.

5. Procédé selon la revendication 1, dans lequel l'étape consistant à créer la sauvegarde du volume de bloc comporte l'étape consistant à créer une image disque du volume de bloc.

6. Procédé selon la revendication 1, dans lequel l'étape consistant à créer la sauvegarde du volume de bloc comporte les étapes consistant à :
convertir les données du volume de bloc en données d'objet ; et
stocker les données d'objet dans un système de stockage d'objet.

7. Système informatique (3200) comportant :
un ou plusieurs processeurs (3204) ;
une mémoire (3210) en communication avec lesdits un ou plusieurs processeurs (3204), la mémoire (3210) étant configurée pour stocker des instructions en mesure d'être exécutées par ordinateur, dans lequel l'exécution des instructions en mesure d'être exécutées par ordinateur amène lesdits un ou plusieurs processeurs (3204) à effectuer les étapes consistant à :
recevoir (702), par un système informatique (3200), une demande de réservation d'un volume de bloc, la demande étant reçue en provenance d'un service de gestion de sessions (120), dans lequel la demande comporte un identificateur d'utilisateur ;
réserver (704), par le système informatique (3200), le volume de bloc ;
identifier (706), par le système informatique (3200), un identificateur de centre de données du volume de bloc ;
renvoyer (708), par le système informatique (3200), l'identificateur de centre de données du volume de bloc au service de gestion de sessions (120) ;
attacher (710), par le système informatique (3200), le volume de bloc ;
recevoir (712), par le système informatique (3200), une instruction en provenance du service de gestion de sessions (120) pour libérer le volume de bloc ;
créer (714), par le système informatique (3200), une sauvegarde du volume de bloc comportant les données stockées dans le volume de bloc ; et
libérer (716), par le système informatique (3200), le volume de bloc,
dans lequel l'étape consistant à réserver le volume de bloc comporte les étapes consistant à :
déterminer (804) si un volume de bloc enregistré est attribué à un utilisateur correspondant à l'identificateur d'utilisateur ; et
en fonction d'un cas de figure dans lequel le volume de bloc enregistré est attribué à l'utilisateur, réserver (806) le volume de bloc enregistré ;
en fonction d'un cas de figure dans lequel le volume de bloc enregistré n'est pas attribué à un utilisateur correspondant à l'identificateur d'utilisateur, réserver (808) un volume vide parmi un groupe de volumes vides, le volume vide étant préformaté pour venir s'ancrer avec un interpréteur infonuagique de commandes sécurisé.

8. Système informatique (3200) selon la revendication 7, dans lequel l'exécution des instructions en mesure d'être exécutées par ordinateur amène par ailleurs lesdits un ou plusieurs processeurs (3204) à effectuer les étapes consistant à :
recevoir une demande de restauration du volume de bloc, la demande étant reçue en provenance du service de gestion de sessions (120) ;
créer un volume de restauration à l'aide de la sauvegarde du volume de bloc, le volume de restauration comportant les données stockées dans le volume de bloc ; et
renvoyer un identificateur de centre de données du volume de restauration au service de gestion de sessions (120).

9. Système informatique (3200) selon la revendication 8, dans lequel la sauvegarde du volume de bloc comporte par ailleurs un identificateur de la sauvegarde, et dans lequel l'étape consistant à créer le volume de restauration comporte les étapes consistant à :
réserver un volume de bloc vide parmi un groupe de volumes vides, le volume de bloc vide étant préformaté pour venir s'ancrer avec un interpréteur infonuagique de commandes sécurisé ;
récupérer la sauvegarde du volume de bloc à l'aide de l'identificateur de la sauvegarde ;
provisionner le volume de bloc vide au moins en partie en chargeant la sauvegarde du volume de bloc sur le volume de bloc vide ; et
identifier l'identificateur de centre de données du volume de bloc vide en tant qu'identificateur de centre de données du volume de restauration.

10. Système informatique (3200) selon la revendication 7, dans lequel l'exécution des instructions en mesure d'être exécutées par ordinateur amène par ailleurs lesdits un ou plusieurs processeurs (3204) à effectuer les étapes comportant l'étape consistant à retenir le volume de bloc au cours d'une période de rétention.

11. Système informatique (3200) selon la revendication 7, dans lequel l'étape consistant à créer la sauvegarde du volume de bloc comporte l'étape consistant à créer une image disque du volume de bloc.

12. Système informatique (3200) selon la revendication 7, dans lequel l'étape consistant à créer la sauvegarde du volume de bloc comporte les étapes consistant à :
convertir les données du volume de bloc en données d'objet ; et
stocker les données d'objet dans un système de stockage d'objet.

13. Support de stockage lisible par ordinateur (3222), stockant des instructions en mesure d'être exécutées par ordinateur qui, quand elles sont exécutées, amènent un ou plusieurs processeurs (3204) d'un système informatique (3200) à effectuer les étapes consistant à :
recevoir (702), par un système informatique (3200), une demande de réservation d'un volume de bloc, la demande étant reçue en provenance d'un service de gestion de sessions, dans lequel la demande comporte un identificateur d'utilisateur ;
réserver (704), par le système informatique (3200), le volume de bloc ;
identifier (706), par le système informatique (3200), un identificateur de centre de données du volume de bloc ;
renvoyer (708), par le système informatique (3200), l'identificateur de centre de données du volume de bloc au service de gestion de sessions ;
attacher (710), par le système informatique (3200), le volume de bloc ;
recevoir (712), par le système informatique (3200), une instruction en provenance du service de gestion de sessions pour libérer le volume de bloc ;
créer (714), par le système informatique (3200), une sauvegarde du volume de bloc comportant les données stockées dans le volume de bloc ; et
libérer (716), par le système informatique (3200), le volume de bloc,
dans lequel l'étape consistant à réserver le volume de bloc comporte les étapes consistant à :
déterminer (804) si un volume de bloc enregistré est attribué à un utilisateur correspondant à l'identificateur d'utilisateur ; et
en fonction d'un cas de figure dans lequel le volume de bloc enregistré est attribué à l'utilisateur, réserver (806) le volume de bloc enregistré ;
en fonction d'un cas de figure dans lequel le volume de bloc enregistré n'est pas attribué à un utilisateur correspondant à l'identificateur d'utilisateur, réserver (808) un volume vide parmi un groupe de volumes vides, le volume vide étant préformaté pour venir s'ancrer avec un interpréteur infonuagique de commandes sécurisé.

14. Support de stockage lisible par ordinateur selon la revendication 13, dans lequel l'exécution des instructions en mesure d'être exécutées par ordinateur amène par ailleurs lesdits un ou plusieurs processeurs à effectuer les étapes consistant à :
recevoir une demande de restauration du volume de bloc, la demande étant reçue en provenance du service de gestionnaire de session ;
créer un volume de restauration à l'aide de la sauvegarde du volume de bloc, le volume de restauration comportant les données stockées dans le volume de bloc ; et
renvoyer un identificateur de centre de données du volume de restauration au service du gestionnaire de sessions.

15. Support de stockage lisible par ordinateur selon la revendication 14, dans lequel la sauvegarde du volume de bloc comporte par ailleurs un identificateur de la sauvegarde, et dans lequel l'étape consistant à créer le volume de restauration comporte les étapes consistant à :
réserver un volume de bloc vide parmi un groupe de volumes vides, le volume de bloc vide étant préformaté pour venir s'ancrer avec un interpréteur infonuagique de commandes sécurisé ;
récupérer la sauvegarde du volume de bloc à l'aide de l'identificateur de la sauvegarde ;
provisionner le volume de bloc vide au moins en partie en chargeant la sauvegarde du volume de bloc sur le volume de bloc vide ; et
identifier l'identificateur de centre de données du volume de bloc vide en tant qu'identificateur de centre de données du volume de restauration.
